(19) Europäisches Patentamt
European Patent Office
Office européen des brevets

(11) **EP 4 787 845 A1**

(12) **EUROPEAN PATENT APPLICATION**
published in accordance with Art. 153(4) EPC

(43) Date of publication:
**05.08.2026 Bulletin 2026/32**

(21) Application number: **24881763.7**

(22) Date of filing: **25.10.2024**

(51) International Patent Classification (IPC):
**H04N 19/176** (2014.01)

(52) Cooperative Patent Classification (CPC):
**G06N 3/0464; H04N 19/176; H04N 19/44;
H04N 19/91**

(86) International application number:
**PCT/CN2024/127467**

(87) International publication number:
**WO 2025/087404 (01.05.2025 Gazette 2025/18)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **25.10.2023 CN 202311396693**

(71) Applicant: **Hangzhou Hikvision Digital
Technology Co., Ltd.
Hangzhou, Zhejiang 310051 (CN)**

(72) Inventors:
• **LIU, Yunzhuo
Hangzhou, Zhejiang 310051 (CN)**
• **CHEN, Fangdong
Hangzhou, Zhejiang 310051 (CN)**
• **WU, Xiaoyang
Hangzhou, Zhejiang 310051 (CN)**

(74) Representative: **Goddar, Heinz J.
Boehmert & Boehmert
Anwaltspartnerschaft mbB
Pettenkoferstrasse 22
80336 München (DE)**

(54) **DECODING METHOD AND APPARATUS, ENCODING METHOD AND APPARATUS, AND DEVICES THEREFOR**

(57) The present disclosure provides a decoding method and apparatus, an encoding method and apparatus, and devices therefor. The decoding method comprises: decoding a bitstream corresponding to a current image block to obtain a coefficient hyperparameter feature; on the basis of the coefficient hyperparameter feature, determining a probability distribution parameter, and on the basis of the probability distribution parameter, decoding a bitstream corresponding to the current image block to obtain an initial reconstruction feature; on the basis of the initial reconstruction feature, determining an initial reconstructed image block corresponding to the current image block, wherein the initial reconstructed image block comprises an initial luminance reconstructed image block and an initial chrominance reconstructed image block; and performing luminance edge enhancement on the initial luminance reconstructed image block. The technical solution of the present application can improve encoding performance and decoding performance.

Decode a bitstream corresponding to a current image block to obtain a coefficient hyperparameter feature corresponding to the current image block — 201

Determine a probability-distribution parameter based on the coefficient hyperparameter feature, and decode a bitstream corresponding to the current image block based on the probability-distribution parameter, to obtain an initial reconstruction feature corresponding to the current image block — 202

Determine an initial reconstructed image block corresponding to the current image block based on the initial reconstruction feature, where the initial reconstructed image block may include an initial reconstructed luma block and an initial reconstructed chroma block — 203

Perform luma edge enhancement on the initial reconstructed luma block to obtain a target reconstructed luma block — 204

**FIG. 2**

**Description**

**TECHNICAL FIELD**

The present disclosure relates to the technical field of encoding and decoding, and in particular, to a decoding method and apparatus, an encoding method and apparatus, and a device thereof.

**BACKGROUND**

In order to achieve the purpose of saving space, video images are transmitted after being encoded, and complete video encoding may include processes such as prediction, transform, quantization, entropy encoding, and filtering. Regarding prediction, the prediction process may include intra prediction and inter prediction. The inter prediction refers to predicting the current pixel by using pixels from neighboring encoded images based on the temporal correlation of the video, so as to effectively reduce temporal redundancy in the video. Intra prediction refers to predicting the current pixel by using pixels from the encoded blocks of the current frame image based on the spatial correlation within the video, so as to effectively reduce spatial redundancy in the video.

With the rapid development of deep learning, deep learning is successful in many high-level computer vision problems, such as image classification and object detection, and deep learning is gradually applied in the field of encoding and decoding, i.e., neural networks can be used to encode and decode images. Although the neural network-based encoding and decoding methods demonstrate great performance potential, these methods still suffer from issues such as poor encoding performance, poor decoding performance, and high complexity.

**SUMMARY**

In view of this, the present disclosure provides a decoding method and apparatus, an encoding method and apparatus, and device thereof, to improve encoding performance and decoding performance.

According to a first aspect, the present disclosure provides an image decoding method, including: decoding a bitstream corresponding to a current image block, to obtain a coefficient hyperparameter feature corresponding to the current image block; determining a probability-distribution parameter based on the coefficient hyperparameter feature, and decoding a bitstream corresponding to the current image block based on the probability-distribution parameter, to obtain an initial reconstruction feature corresponding to the current image block; determining an initial reconstructed image block corresponding to the current image block based on the initial reconstruction feature, where the initial reconstructed image block includes an initial reconstructed luma block and an initial reconstructed chroma block; and performing luma edge enhancement on the initial reconstructed luma block to obtain a target reconstructed luma block.

In a possible implementation, after determining the initial reconstructed image block corresponding to the current image block based on the initial reconstruction feature, the method further includes: performing chroma filtering enhancement on the initial reconstructed chroma block to obtain a target reconstructed chroma block; and generating a target reconstructed image block based on the target reconstructed luma block and the target reconstructed chroma block.

In a possible implementation, performing luma edge enhancement on the initial reconstructed luma block to obtain the target reconstructed luma block includes: decoding a bitstream corresponding to the current image block to obtain an image-domain enhancement parameter corresponding to the current image block; and performing luma edge enhancement on the initial reconstructed luma block based on the image-domain enhancement parameter and the probability-distribution parameter, to obtain the target reconstructed luma block corresponding to the current image block.

In a possible implementation, the image-domain enhancement parameter includes a plurality of image-enhancement segment intensity values and a plurality of image-enhancement segment thresholds, the plurality of image-enhancement segment thresholds form a plurality of image-enhancement threshold intervals, and the plurality of image-enhancement threshold intervals are in a one-to-one correspondence with the plurality of image-enhancement segment intensity values; and performing luma edge enhancement on the initial reconstructed luma block based on the image-domain enhancement parameter and the probability-distribution parameter, to obtain the target reconstructed luma block corresponding to the current image block includes: acquiring a target probability-distribution channel map based on the probability-distribution parameter; upon determining that the target probability-distribution channel map includes a plurality of probability distribution values, for each probability distribution value of the plurality of probability distribution values, determining an image-enhancement segment intensity value corresponding to the probability distribution value based on the image-enhancement threshold interval corresponding to the probability distribution value; and performing luma edge enhancement on the initial reconstructed luma block based on the image-enhancement segment intensity values corresponding to each of the plurality of the probability distribution values, to obtain the target reconstructed luma block corresponding to the current image block.

In a possible implementation, acquiring the target probability-distribution channel map based on the probability-distribution parameter includes: decoding the bitstream corresponding to the current image block to obtain an important channel identifier corresponding to the current image block; and upon determining that the probability-distribution parameter includes a plurality of probability-distribution channel maps, selecting a probability-distribution channel map corresponding to the important channel identifier from the plurality of probability-distribution channel maps included in the probability-distribution parameter as an important probability-distribution channel map; and upsampling the important probability-distribution channel map to obtain the target probability-distribution channel map.

In a possible implementation, performing luma edge enhancement on the initial reconstructed luma block based on the image-enhancement segment intensity values corresponding to each of the plurality of the probability-distribution values, to obtain the target reconstructed luma block corresponding to the current image block includes: generating a high-frequency detail image based on the initial reconstructed luma block; for each feature value in the high-frequency detail image, performing luma edge enhancement on the feature value based on the image-enhancement segment intensity value corresponding to the probability-distribution value of the feature value, to obtain an enhanced image feature value; and determining the target reconstructed luma block based on the respective enhanced image feature values of each of the feature values.

In a possible implementation, generating the high-frequency detail image based on the initial reconstructed luma block includes: performing a convolution operation on the initial reconstructed luma block with a Gaussian blur convolution kernel to obtain a Gaussian blur image; and subtracting the Gaussian blur image from the initial reconstructed luma block to obtain the high-frequency detail image; where for each value in the Gaussian blur convolution kernel, a denominator of the value is a power of 2.

In a possible implementation, the Gaussian blur convolution kernel is an N*N convolution kernel, N is a positive integer, and upon determining that the Gaussian blur convolution kernel is a 3*3 convolution kernel, the Gaussian blur convolution kernel includes:

$$\begin{bmatrix} \frac{A}{M} & \frac{A}{M} & \frac{A}{M} \\ \frac{A}{M} & \frac{B}{M} & \frac{A}{M} \\ \frac{A}{M} & \frac{A}{M} & \frac{A}{M} \end{bmatrix};$$

where A is a positive integer, B is a positive integer, and M is a power of 2.

In a possible implementation, the Gaussian blur convolution kernel is:

$$kernel = \begin{bmatrix} \frac{5}{64} & \frac{5}{64} & \frac{5}{64} \\ \frac{5}{64} & \frac{24}{64} & \frac{5}{64} \\ \frac{5}{64} & \frac{5}{64} & \frac{5}{64} \end{bmatrix}.$$

In a possible implementation, performing chroma filtering enhancement on the initial reconstructed chroma block to obtain the target reconstructed chroma block includes: performing adaptive upsampling based on the initial reconstructed chroma block and the initial reconstructed luma block to obtain an upsampled reconstructed chroma block, where resolution of the upsampled reconstructed chroma block is the same as resolution of the initial reconstructed luma block; and performing a filtering operation on the upsampled reconstructed chroma block to obtain the target reconstructed chroma block, where the filtering operation includes cross-channel filtering and/or nonlinear chroma filtering.

In a possible implementation, performing a filtering operation on the upsampled reconstructed chroma block to obtain the target reconstructed chroma block includes: performing cross-channel filtering on the upsampled reconstructed chroma block based on the initial reconstructed luma block, to obtain the target reconstructed chroma block; or performing nonlinear chroma filtering on the upsampled reconstructed chroma block based on the initial reconstructed luma block, to obtain the target reconstructed chroma block; or performing cross-channel filtering on the upsampled reconstructed chroma block based on the initial reconstructed luma block to obtain a cross-channel filtered reconstructed chroma block, and performing nonlinear chroma filtering on the cross-channel filtered reconstructed chroma block based on the initial reconstructed luma block, to obtain the target reconstructed chroma block; or performing nonlinear chroma filtering on the upsampled reconstructed chroma block based on the initial reconstructed luma block to obtain a nonlinear chroma-filtered reconstructed chroma block, and performing cross-channel filtering on the nonlinear chroma-filtered reconstructed chroma block based on the initial reconstructed luma block, to obtain the target reconstructed chroma block.

In a possible implementation, performing chroma filtering enhancement on the initial reconstructed chroma block to obtain the target reconstructed chroma block includes: performing adaptive upsampling based on the initial reconstructed chroma block and the target reconstructed luma block to obtain an upsampled reconstructed chroma block, where resolution of the upsampled reconstructed chroma block is the same as resolution of the target reconstructed luma block; and performing a filtering operation on the upsampled reconstructed chroma block to obtain the target reconstructed chroma block, where the filtering operation includes cross-channel filtering and/or nonlinear chroma filtering.

In a possible implementation, performing a filtering operation on the upsampled reconstructed chroma block to obtain the target reconstructed chroma block includes: performing cross-channel filtering on the upsampled reconstructed chroma block based on the target reconstructed luma block, to obtain the target reconstructed chroma block; or performing nonlinear chroma filtering on the upsampled reconstructed chroma block based on the target reconstructed luma block, to obtain the target reconstructed chroma block; or performing cross-channel filtering on the upsampled reconstructed chroma block based on the target reconstructed luma block to obtain a cross-channel filtered reconstructed chroma block, and performing nonlinear chroma filtering on the cross-channel filtered reconstructed chroma block based on the target reconstructed luma block, to obtain the target reconstructed chroma block; or performing nonlinear chroma filtering on the upsampled reconstructed chroma block based on the target reconstructed luma block to obtain a nonlinear chroma-filtered reconstructed chroma block, and performing cross-channel filtering on the nonlinear chroma-filtered reconstructed chroma block based on the target reconstructed luma block, to obtain the target reconstructed chroma block.

In a possible implementation, performing cross-channel filtering on the upsampled reconstructed chroma block based on the initial reconstructed luma block to obtain the cross-channel filtered reconstructed chroma block includes: performing a wavelet transform on the upsampled reconstructed chroma block, and performing a wavelet transform on the initial reconstructed luma block; concatenating the wavelet-transformed upsampled reconstructed chroma block and the wavelet-transformed initial reconstructed luma block along a channel dimension; and inputting a concatenated feature to a residual block network; and performing an inverse wavelet transform on a feature output by the residual block network, to obtain the cross-channel filtered reconstructed chroma block; and performing cross-channel filtering on the upsampled reconstructed chroma block based on the target reconstructed luma block to obtain the cross-channel filtered reconstructed chroma block includes: performing a wavelet transform on the upsampled reconstructed chroma block, and performing a wavelet transform on the target reconstructed luma block; concatenating the wavelet-transformed upsampled reconstructed chroma block and the wavelet-transformed target reconstructed luma block along a channel dimension; inputting a concatenated feature to a residual block network; and performing an inverse wavelet transform on a feature output by the residual block network, to obtain the cross-channel filtered reconstructed chroma block.

In a possible implementation, determining the initial reconstructed image block corresponding to the current image block based on the initial reconstruction feature includes: inputting the initial reconstruction feature to a synthesis transform net to obtain the initial reconstructed image block; or decoding the bitstream corresponding to the current image block to obtain a feature-domain enhancement parameter corresponding to the current image block; performing feature-domain enhancement on the initial reconstruction feature based on the feature-domain enhancement parameter and the probability-distribution parameter to obtain an enhanced reconstruction feature; and inputting the enhanced reconstruction feature to a synthesis transform net to obtain the initial reconstructed image block.

In a possible implementation, the method further includes: decoding the bitstream corresponding to the current image block to obtain an important channel identifier corresponding to the current image block, where the initial reconstruction feature includes C feature channel maps, the probability-distribution parameter includes C probability-distribution channel maps, the C probability-distribution channel maps are in a one-to-one correspondence with the C feature channel maps, C is a positive integer, a feature channel map corresponding to the important channel identifier is used as an important feature channel map, remaining feature channel maps in the C feature channel maps are used as non-important feature channel maps, a probability-distribution channel map corresponding to the important feature channel map is used as an important probability-distribution channel map, and remaining probability-distribution channel maps in the C probability-distribution channel maps are used as non-important probability-distribution channel maps; and performing feature-domain enhancement on the initial reconstruction feature based on the feature-domain enhancement parameter and the probability-distribution parameter to obtain the enhanced reconstruction feature includes: performing feature-adaptive edge enhancement on the important feature channel map based on the feature-domain enhancement parameter and the important probability-distribution channel map to obtain a first reconstruction feature after the feature-adaptive edge enhancement; performing feature-adaptive stretching on the non-important feature channel map based on the feature-domain enhancement parameter and the non-important probability-distribution channel map to obtain a second reconstruction feature after the feature-adaptive stretching; and generating the enhanced reconstruction feature based on the first reconstruction feature and the second reconstruction feature.

According to a second aspect, the present disclosure provides an image encoding method, including: encoding a coefficient hyperparameter feature corresponding to a current image block; determining a probability-distribution parameter based on the coefficient hyperparameter feature, and encoding an initial image feature corresponding to the current image block based on the probability-distribution parameter; determining an initial reconstructed image block corresponding to the current image block based on the initial reconstruction feature corresponding to the initial image feature, where the initial reconstructed image block includes an initial reconstructed luma block and an initial reconstructed chroma block; for each candidate image-domain enhancement parameter, performing luma edge enhancement on the initial reconstructed luma block based on the candidate image-domain enhancement parameter and the probability-distribution parameter, to obtain a target reconstructed luma block; and determining a cost value corresponding to the candidate image-domain enhancement parameter based on the target reconstructed luma block; and selecting an image-domain enhancement parameter corresponding to the current image block from all the candidate image-domain enhancement parameters based on the cost value corresponding to each of the candidate image-domain enhancement parameters, and encoding the image-domain enhancement parameter.

According to a third aspect, the present disclosure provides an image decoding apparatus, including: a decoding module, configured to: decode a bitstream corresponding to a current image block, to obtain a coefficient hyperparameter feature corresponding to the current image block; and determine a probability-distribution parameter based on the coefficient hyperparameter feature, and decode a bitstream corresponding to the current image block based on the probability-distribution parameter, to obtain an initial reconstruction feature corresponding to the current image block; a determination module, configured to: determine an initial reconstructed image block corresponding to the current image block based on the initial reconstruction feature, where the initial reconstructed image block includes an initial reconstructed luma block and an initial reconstructed chroma block; and an enhancement module, configured to: perform luma edge enhancement on the initial reconstructed luma block to obtain a target reconstructed luma block.

According to a fourth aspect, the present disclosure provides an image encoding apparatus, including: an encoding module, configured to: encode a coefficient hyperparameter feature corresponding to a current image block; determine a probability-distribution parameter based on the coefficient hyperparameter feature; and encode an initial image feature corresponding to the current image block based on the probability-distribution parameter; a determination module, configured to: determine an initial reconstructed image block corresponding to the current image block based on the initial reconstruction feature corresponding to the initial image feature, where the initial reconstructed image block includes an initial reconstructed luma block and an initial reconstructed chroma block; an enhancement module, configured to: for each candidate image-domain enhancement parameter, perform luma edge enhancement on the initial reconstructed luma block based on the candidate image-domain enhancement parameter and the probability-distribution parameter, to obtain a target reconstructed luma block; where the determination module is further configured to: determine a cost value corresponding to the candidate image-domain enhancement parameter based on the target reconstructed luma block; and select an image-domain enhancement parameter corresponding to the current image block from all the candidate image-domain enhancement parameters based on the cost value corresponding to each of the candidate image-domain enhancement parameters; and the encoding module is further configured to encode the image-domain enhancement parameter.

According to a fifth aspect, the present disclosure provides an image decoding method, including: decoding a bitstream corresponding to a current image block, to obtain a coefficient hyperparameter feature corresponding to the current image block; determining a probability-distribution parameter based on the coefficient hyperparameter feature, and decoding a bitstream corresponding to the current image block based on the probability-distribution parameter, to obtain an initial reconstruction feature corresponding to the current image block; and determining an initial reconstructed image block corresponding to the current image block based on the initial reconstruction feature; where the initial reconstructed image block includes an initial reconstructed luma block; acquiring an image-domain enhancement parameter corresponding to the current image block; performing luma edge enhancement on the initial reconstructed luma block based on the image-domain enhancement parameter and the probability-distribution parameter, to obtain the target reconstructed luma block corresponding to the current image block; and generating a target reconstructed image block corresponding to the current image block based on the target reconstructed luma block.

In a possible implementation, the image-domain enhancement parameter includes a plurality of image-enhancement segment intensity values and a plurality of image-enhancement segment thresholds, the plurality of image-enhancement segment thresholds form a plurality of image-enhancement threshold intervals, and the plurality of image-enhancement threshold intervals are in a one-to-one correspondence with the plurality of image-enhancement segment intensity values; and performing luma edge enhancement on the initial reconstructed luma block based on the image-domain enhancement parameter and the probability-distribution parameter, to obtain the target reconstructed luma block corresponding to the current image block includes: acquiring a target probability-distribution channel map based on the probability-distribution parameter; upon determining that the target probability-distribution channel map includes a plurality of probability distribution values, for each probability distribution value of the plurality of probability distribution values, determining an image-enhancement segment intensity value corresponding to the probability distribution value based on the image-enhancement threshold interval corresponding to the probability distribution value; and performing luma edge enhancement on the initial reconstructed luma block based on the image-enhancement segment intensity values corresponding to each of plurality of the probability distribution values, to obtain the target reconstructed luma block corresponding to the current image block.

In a possible implementation, acquiring a target probability-distribution channel map based on the probability-distribution parameter includes: decoding a bitstream corresponding to the current image block to obtain an important channel identifier corresponding to the current image block; and upon determining that the probability-distribution parameter includes a plurality of probability-distribution channel maps, selecting a probability-distribution channel map corresponding to the important channel identifier from the plurality of probability-distribution channel maps included in the probability-distribution parameter as an important probability-distribution channel map; and upsampling the important probability-distribution channel map to obtain the target probability-distribution channel map.

In a possible implementation, performing luma edge enhancement on the initial reconstructed luma block based on the image-enhancement segment intensity values corresponding to each of plurality of the probability distribution values, to obtain the target reconstructed luma block corresponding to the current image block includes: generating a high-frequency detail image based on the initial reconstructed luma block; for each feature value in the high-frequency detail image, performing luma edge enhancement on the feature value based on the image-enhancement segment intensity value corresponding to the probability distribution value corresponding to the feature value, to obtain an enhanced image feature value; and determining the target reconstructed luma block based on the respective enhanced image feature values of each of the feature values.

In a possible implementation, generating a high-frequency detail image based on the initial reconstructed luma block includes: performing a convolution operation on the initial reconstructed luma block with a Gaussian blur convolution kernel to obtain a Gaussian blur image; and subtracting the Gaussian blur image from the initial reconstructed luma block to obtain the high-frequency detail image; where for each value in the Gaussian blur convolution kernel, a denominator of the value is a power of 2.

According to a sixth aspect, the present disclosure provides an image encoding method, including: encoding a coefficient hyperparameter feature corresponding to a current image block; determining a probability-distribution parameter based on the coefficient hyperparameter feature, and encoding an initial image feature corresponding to the current image block based on the probability-distribution parameter; determining an initial reconstructed image block corresponding to the current image block based on the initial reconstruction feature corresponding to the initial image feature; where the initial reconstructed image block includes an initial reconstructed luma block; acquiring an image-domain enhancement parameter corresponding to the current image block; performing luma edge enhancement on the initial reconstructed luma block based on the image-domain enhancement parameter and the probability-distribution parameter, to obtain the target reconstructed luma block corresponding to the current image block; and generating a target reconstructed image block corresponding to the current image block based on the target reconstructed luma block.

According to a seventh aspect, the present disclosure provides an image decoding apparatus, including: a decoding module, configured to: decode a bitstream corresponding to a current image block, to obtain a coefficient hyperparameter feature corresponding to the current image block; and determine a probability-distribution parameter based on the coefficient hyperparameter feature, and decode a bitstream corresponding to the current image block based on the probability-distribution parameter, to obtain an initial reconstruction feature corresponding to the current image block; a determination module, configured to: determine an initial reconstructed image block corresponding to the current image block based on the initial reconstruction feature, where the initial reconstructed image block includes an initial reconstructed luma block; an enhancement module, configured to: acquire an image-domain enhancement parameter corresponding to the current image block; and perform luma edge enhancement on the initial reconstructed luma block to obtain a target reconstructed luma block corresponding to the current image block; and a generation module, configured to: generate a target reconstructed image block corresponding to the current image block based on the target reconstructed luma block.

According to an eighth aspect, the present disclosure provides an image encoding apparatus, including: an encoding module, configured to: encode a coefficient hyperparameter feature corresponding to a current image block; determine a probability-distribution parameter based on the coefficient hyperparameter feature; and encode an initial image feature corresponding to the current image block based on the probability-distribution parameter; a determination module, configured to: determine an initial reconstructed image block corresponding to the current image block based on the initial reconstruction feature corresponding to the initial image feature, where the initial reconstructed image block includes an initial reconstructed luma block; an enhancement module, configured to: acquire an image-domain enhancement parameter corresponding to the current image block; and perform luma edge enhancement on the initial reconstructed luma block to obtain a target reconstructed luma block corresponding to the current image block; and a generation module, configured to: generate a target reconstructed image block corresponding to the current image block based on the target reconstructed luma block.

According to a ninth aspect, the present disclosure provides an image decoding method, including: decoding a bitstream corresponding to a current image block, to obtain a coefficient hyperparameter feature corresponding to the current image block; determining a probability-distribution parameter based on the coefficient hyperparameter feature, and decoding a bitstream corresponding to the current image block based on the probability-distribution parameter, to obtain an initial reconstruction feature corresponding to the current image block; and determining an initial reconstructed image block corresponding to the current image block based on the initial reconstruction feature, where the initial reconstructed image block includes an initial reconstructed luma block and an initial reconstructed chroma block; performing luma edge enhancement on the initial reconstructed luma block to obtain a target reconstructed luma block; performing chroma filtering enhancement on the initial reconstructed chroma block to obtain a target reconstructed chroma block; and generating a target reconstructed image block based on the target reconstructed luma block and the target reconstructed chroma block.

In a possible implementation, performing chroma filtering enhancement on the initial reconstructed chroma block to obtain a target reconstructed chroma block includes: performing adaptive upsampling based on the initial reconstructed chroma block and the target reconstructed luma block to obtain an upsampled reconstructed chroma block, where resolution of the upsampled reconstructed chroma block is the same as resolution of the target reconstructed luma block; and performing a filtering operation on the upsampled reconstructed chroma block to obtain the target reconstructed chroma block, where the filtering operation includes cross-channel filtering and/or nonlinear chroma filtering.

In a possible implementation, performing a filtering operation on the upsampled reconstructed chroma block to obtain the target reconstructed chroma block includes: performing cross-channel filtering on the upsampled reconstructed chroma block based on the target reconstructed luma block, to obtain the target reconstructed chroma block; or performing nonlinear chroma filtering on the upsampled reconstructed chroma block based on the target reconstructed luma block, to obtain the target reconstructed chroma block; or performing cross-channel filtering on the upsampled reconstructed chroma block based on the target reconstructed luma block to obtain a cross-channel filtered reconstructed chroma block, and performing nonlinear chroma filtering on the cross-channel filtered reconstructed chroma block based on the target reconstructed luma block, to obtain the target reconstructed chroma block; or performing nonlinear chroma filtering on the upsampled reconstructed chroma block based on the target reconstructed luma block to obtain a nonlinear chroma-filtered reconstructed chroma block, and performing cross-channel filtering on the nonlinear chroma-filtered reconstructed chroma block based on the target reconstructed luma block, to obtain the target reconstructed chroma block.

In a possible implementation, performing chroma filtering enhancement on the initial reconstructed chroma block to obtain a target reconstructed chroma block includes: performing adaptive upsampling based on the initial reconstructed chroma block and the target reconstructed luma block to obtain an upsampled reconstructed chroma block, where resolution of the upsampled reconstructed chroma block is the same as resolution of the target reconstructed luma block; and performing a filtering operation on the upsampled reconstructed chroma block to obtain the target reconstructed chroma block, where the filtering operation includes cross-channel filtering and/or nonlinear chroma filtering.

In a possible implementation, performing a filtering operation on the upsampled reconstructed chroma block to obtain the target reconstructed chroma block includes: performing cross-channel filtering on the upsampled reconstructed chroma block based on the target reconstructed luma block, to obtain the target reconstructed chroma block; or performing nonlinear chroma filtering on the upsampled reconstructed chroma block based on the target reconstructed luma block, to obtain the target reconstructed chroma block; or performing cross-channel filtering on the upsampled reconstructed chroma block based on the target reconstructed luma block to obtain a cross-channel filtered reconstructed chroma block, and performing nonlinear chroma filtering on the cross-channel filtered reconstructed chroma block based on the target reconstructed luma block, to obtain the target reconstructed chroma block; or performing nonlinear chroma filtering on the upsampled reconstructed chroma block based on the target reconstructed luma block to obtain a nonlinear chroma-filtered reconstructed chroma block, and performing cross-channel filtering on the nonlinear chroma-filtered reconstructed chroma block based on the target reconstructed luma block, to obtain the target reconstructed chroma block.

In a possible implementation, performing cross-channel filtering on the upsampled reconstructed chroma block based on the initial reconstructed luma block to obtain a cross-channel filtered reconstructed chroma block includes: performing a wavelet transform on the upsampled reconstructed chroma block, and performing a wavelet transform on the initial reconstructed luma block; concatenating the wavelet-transformed upsampled reconstructed chroma block and the wavelet-transformed initial reconstructed luma block along a channel dimension; inputting a concatenated feature to a residual block network; and performing an inverse wavelet transform on a feature output by the residual block network, to obtain the cross-channel filtered reconstructed chroma block; and performing cross-channel filtering on the upsampled reconstructed chroma block based on the target reconstructed luma block to obtain a cross-channel filtered reconstructed chroma block includes: performing a wavelet transform on the upsampled reconstructed chroma block, and performing a wavelet transform on the target reconstructed luma block; concatenating the wavelet-transformed upsampled reconstructed chroma block and the wavelet-transformed target reconstructed luma block along a channel dimension; inputting a concatenated feature to a residual block network; and performing an inverse wavelet transform on a feature output by the residual block network, to obtain the cross-channel filtered reconstructed chroma block.

According to a tenth aspect, the present disclosure provides an image encoding method, including: encoding a coefficient hyperparameter feature corresponding to a current image block; determining a probability-distribution parameter based on the coefficient hyperparameter feature, and encoding an initial image feature corresponding to the current image block based on the probability-distribution parameter; determining an initial reconstructed image block corresponding to the current image block based on the initial reconstruction feature corresponding to the initial image feature; where the initial reconstructed image block includes an initial reconstructed luma block and an initial reconstructed chroma block; performing luma edge enhancement on the initial reconstructed luma block to obtain a target reconstructed luma block; performing chroma filtering enhancement on the initial reconstructed chroma block to obtain a target reconstructed chroma block; and generating a target reconstructed image block based on the target reconstructed luma block and the target reconstructed chroma block.

According to an eleventh aspect, the present disclosure provides an image decoding apparatus, including: a decoding module, configured to: decode a bitstream corresponding to a current image block, to obtain a coefficient hyperparameter feature corresponding to the current image block; and determine a probability-distribution parameter based on the coefficient hyperparameter feature, and decode a bitstream corresponding to the current image block based on the probability-distribution parameter, to obtain an initial reconstruction feature corresponding to the current image block; a determination module, configured to: determine an initial reconstructed image block corresponding to the current image block based on the initial reconstruction feature, where the initial reconstructed image block includes an initial reconstructed luma block and an initial reconstructed chroma block; an enhancement module, configured to: perform luma edge enhancement on the initial reconstructed luma block to obtain a target reconstructed luma block, and performing chroma filtering enhancement on the initial reconstructed chroma block to obtain a target reconstructed chroma block; and a generation module, configured to: generate a target reconstructed image block based on the target reconstructed luma block and the target reconstructed chroma block.

According to a twelfth aspect, the present disclosure provides an image encoding apparatus, including: an encoding module, configured to: encode a coefficient hyperparameter feature corresponding to a current image block; determine a probability-distribution parameter based on the coefficient hyperparameter feature; and encode an initial image feature corresponding to the current image block based on the probability-distribution parameter; a determination module, configured to: determine an initial reconstructed image block corresponding to the current image block based on the initial reconstruction feature corresponding to the initial image feature, where the initial reconstructed image block includes an initial reconstructed luma block and an initial reconstructed chroma block; an enhancement module, configured to: perform luma edge enhancement on the initial reconstructed luma block to obtain a target reconstructed luma block, and performing chroma filtering enhancement on the initial reconstructed chroma block to obtain a target reconstructed chroma block; and a generation module, configured to: generate a target reconstructed image block based on the target reconstructed luma block and the target reconstructed chroma block.

According to a thirteenth aspect, the present disclosure provides an image decoding method, including: determining an initial reconstructed image block corresponding to a current image block, where the initial reconstructed image block includes an initial reconstructed luma block; performing a convolution operation on the initial reconstructed luma block with a Gaussian blur convolution kernel to obtain a Gaussian blur image; where the Gaussian blur convolution kernel is an N*N convolution kernel, and upon determining that the Gaussian blur convolution kernel is a 3*3 convolution kernel, the Gaussian blur convolution kernel includes: $\begin{bmatrix} \frac{A}{M} & \frac{A}{M} & \frac{A}{M} \\ \frac{A}{M} & \frac{B}{M} & \frac{A}{M} \\ \frac{A}{M} & \frac{A}{M} & \frac{A}{M} \end{bmatrix}$, where A is a positive integer, B is a positive integer, and M is a power of 2; subtracting the Gaussian blur image from the initial reconstructed luma block to obtain the high-frequency detail image; determining a target reconstructed luma block corresponding to the current image block based on the high-frequency detail image; and generating a target reconstructed image block corresponding to the current image block based on the target reconstructed luma block.

In a possible implementation, the Gaussian blur convolution kernel is:

$$kernel = \begin{bmatrix} \frac{5}{64} & \frac{5}{64} & \frac{5}{64} \\ \frac{5}{64} & \frac{24}{64} & \frac{5}{64} \\ \frac{5}{64} & \frac{5}{64} & \frac{5}{64} \end{bmatrix}.$$

In a possible implementation, the determining, based on the high-frequency detail image, a target reconstructed luma block corresponding to the current image block includes: acquiring an image-domain enhancement parameter corresponding to the current image block; and performing luma edge enhancement on the high-frequency detail image based on the image-domain enhancement parameter and a probability-distribution parameter corresponding to the current image block, to obtain the target reconstructed luma block corresponding to the current image block.

In a possible implementation, the image-domain enhancement parameter includes a plurality of image-enhancement segment intensity values and a plurality of image-enhancement segment thresholds, the plurality of image-enhancement segment thresholds form a plurality of image-enhancement threshold intervals, and the plurality of image-enhancement threshold intervals are in a one-to-one correspondence with the plurality of image-enhancement segment intensity values; and performing luma edge enhancement on the high-frequency detail image based on the image-domain enhancement parameter and a probability-distribution parameter corresponding to the current image block, to obtain the target reconstructed luma block corresponding to the current image block includes: acquiring a target probability-distribution channel map based on the probability-distribution parameter; upon determining that the target probability-distribution channel map includes a plurality of probability distribution values, for each probability distribution value of the plurality of probability distribution values, determining an image-enhancement segment intensity value corresponding to the probability distribution value based on the image-enhancement threshold interval corresponding to the probability distribution value; for each feature value in the high-frequency detail image, performing luma edge enhancement on the feature value based on the image-enhancement segment intensity value corresponding to the probability distribution value corresponding to the feature value, to obtain an enhanced image feature value; and determining the target reconstructed luma block based on the respective enhanced image feature values of each of the feature values.

In a possible implementation, acquiring a target probability-distribution channel map based on the probability-distribution parameter includes: decoding a bitstream corresponding to the current image block to obtain an important channel identifier corresponding to the current image block; and upon determining that the probability-distribution parameter includes a plurality of probability-distribution channel maps, selecting a probability-distribution channel map corresponding to the important channel identifier from the plurality of probability-distribution channel maps included in the probability-distribution parameter as an important probability-distribution channel map; and upsampling the important probability-distribution channel map to obtain the target probability-distribution channel map.

In a possible implementation, determining an initial reconstructed image block corresponding to a current image block includes: decoding a bitstream corresponding to the current image block, to obtain a coefficient hyperparameter feature corresponding to the current image block; determining a probability-distribution parameter based on the coefficient hyperparameter feature, and decoding a bitstream corresponding to the current image block based on the probability-distribution parameter, to obtain an initial reconstruction feature corresponding to the current image block; and determining the initial reconstructed image block corresponding to the current image block based on the initial reconstruction feature.

According to a fourteenth aspect, the present disclosure provides an image encoding method, including: determining an initial reconstructed image block corresponding to a current image block, where the initial reconstructed image block includes an initial reconstructed luma block; performing a convolution operation on the initial reconstructed luma block and a Gaussian blur convolution kernel, to obtain a Gaussian blur image, where the Gaussian blur convolution kernel is an N*N convolution kernel, and upon determining that the Gaussian blur convolution kernel is a 3*3 convolution kernel, the Gaussian blur convolution kernel includes: $\begin{bmatrix} \frac{A}{M} & \frac{A}{M} & \frac{A}{M} \\ \frac{A}{M} & \frac{B}{M} & \frac{A}{M} \\ \frac{A}{M} & \frac{A}{M} & \frac{A}{M} \end{bmatrix}$, where A is a positive integer, B is a positive integer, and M is a power of 2; subtracting the Gaussian blur image from the initial reconstructed luma block to obtain the high-frequency detail image; determining a target reconstructed luma block corresponding to the current image block based on the high-frequency detail image; and generating a target reconstructed image block corresponding to the current image block based on the target reconstructed luma block.

According to a fifteenth aspect, the present disclosure provides an image decoding apparatus, including: a determination module, configured to: determine an initial reconstructed image block corresponding to a current image block, where the initial reconstructed image block includes an initial reconstructed luma block; perform a convolution operation on the initial reconstructed luma block and a Gaussian blur convolution kernel, to obtain a Gaussian blur image, where the Gaussian blur convolution kernel is an N*N convolution kernel, and upon determining that the Gaussian blur convolution kernel is a 3*3 convolution kernel, the Gaussian blur convolution kernel includes: $\begin{bmatrix} \frac{A}{M} & \frac{A}{M} & \frac{A}{M} \\ \frac{A}{M} & \frac{B}{M} & \frac{A}{M} \\ \frac{A}{M} & \frac{A}{M} & \frac{A}{M} \end{bmatrix}$, where A is a positive integer, B is a positive integer, and M is a power of 2; subtract the Gaussian blur image from the initial reconstructed luma block to obtain the high-frequency detail image; and determine a target reconstructed luma block corresponding to the current image block based on the high-frequency detail image; and a generation module, configured to: generate a target reconstructed image block corresponding to the current image block based on the target reconstructed luma block.

According to a sixteenth aspect, the present disclosure provides an image encoding apparatus, including: a determination module, configured to: determine an initial reconstructed image block corresponding to a current image block, where the initial reconstructed image block includes an initial reconstructed luma block; perform a convolution operation on the initial reconstructed luma block and a Gaussian blur convolution kernel, to obtain a Gaussian blur image, where the Gaussian blur convolution kernel is an N*N convolution kernel, and upon determining that the Gaussian blur convolution kernel is a 3*3 convolution kernel, the Gaussian blur convolution kernel includes: $\begin{bmatrix} \frac{A}{M} & \frac{A}{M} & \frac{A}{M} \\ \frac{A}{M} & \frac{B}{M} & \frac{A}{M} \\ \frac{A}{M} & \frac{A}{M} & \frac{A}{M} \end{bmatrix}$, where A is a positive integer, B is a positive integer, and M is a power of 2; subtract the Gaussian blur image from the initial reconstructed luma block to obtain the high-frequency detail image; and determine a target reconstructed luma block corresponding to the current image block based on the high-frequency detail image; and a generation module, configured to: generate a target reconstructed image block corresponding to the current image block based on the target reconstructed luma block.

According to a seventeenth aspect, the present disclosure provides an image decoding device, including: one or more processors and one or more machine-readable storage medium, where the one or more machine-readable storage medium store machine-executable instructions that can be executed by the one or more processors; and the one or more processors are configured to execute the machine-executable instructions to implement the image decoding method according to any one of the foregoing aspects.

According to an eighteenth aspect, the present disclosure provides an image encoding device, including: one or more processors and one or more machine-readable storage medium, where the one or more machine-readable storage medium store machine-executable instructions that can be executed by the one or more processors; and the one or more processors are configured to execute the machine-executable instructions to implement the image encoding method according to any one of the foregoing aspects.

According to a nineteenth aspect, the present disclosure provides an electronic device, including: one or more processors and one or more machine-readable storage medium, where the one or more machine-readable storage medium store machine-executable instructions that can be executed by the one or more processors; and the one or more processors are configured to: execute the machine-executable instructions to implement the image decoding method according to any one of the foregoing aspects or the image encoding method according to any one of the foregoing aspects.

According to a twentieth aspect, the present disclosure provides a machine-readable storage medium, where the machine-readable storage medium stores a plurality of computer instructions, and when the computer instructions are executed by one or more processors, the image decoding method according to any one of the foregoing aspects is implemented, or the image encoding method according to any one of the foregoing aspects is implemented.

According to a twenty-first aspect, the present disclosure provides a computer program, configured to: when executed by one or more processors having one or more memories, implement the image decoding method any one of the foregoing aspects, or implement image encoding method according to any one of the foregoing aspects.

According to a twenty-second aspect, the present disclosure provides a computer program product, including one or more computer program instructions configured to: when executed by one or more processors having one or more memories, implement the image decoding method according to any one of the foregoing aspects; or implement the image encoding method according to any one of the foregoing aspects.

As can be seen from the above technical solutions, embodiments of the present application provide an end-to-end video image compression method, which is capable of implementing encoding and decoding of video images based on neural networks and achieves the purpose of improving encoding efficiency and decoding efficiency by combining image-domain enhancement parameters and probability distribution parameters. With reference to a network structure design and a header information bitstream (e.g., the third bitstream), the neural network effectively ensures quality of a reconstructed image block while maintaining low complexity, improves encoding performance and decoding performance, and reduces complexity. Image quality enhancement is performed on features utilizing image-domain enhancement parameters and probability distribution parameters. At an encoder, rather than directly modifying feature information, the image-domain enhancement parameters are encoded into header information of a bitstream; at a decoder, the reconstructed image blocks are enhanced by using the image-domain enhancement parameters, so as to improve encoding and decoding performance and reconstructed image quality.

**BRIEF DESCRIPTION OF DRAWINGS**

FIG. 1 is a schematic diagram of a three-dimensional feature matrix according to an implementation of the present disclosure.

FIG. 2 is a schematic flowchart of a decoding method according to an implementation of the present disclosure.

FIG. 3 is a schematic flowchart of an encoding method according to an implementation of the present disclosure.

FIG. 4 is a schematic diagram of a processing process of an encoder according to an implementation of the present disclosure.

FIG. 5 is a schematic diagram of a processing process of a decoder according to an implementation of the present disclosure.

FIG. 6A is a schematic diagram of a position of a feature-domain enhancement module according to an implementation of the present disclosure.

FIG. 6B is a schematic diagram of positions of a feature-domain enhancement module and an image-domain enhancement module according to an implementation of the present disclosure.

FIG. 6C is a schematic diagram of a position of an image-domain enhancement module according to an implementation of the present disclosure.

FIG. 6D is a schematic diagram of cross-channel filtering according to an implementation of the present disclosure.

FIG. 6E is a schematic diagram of nonlinear chroma filtering according to an implementation of the present disclosure.

FIG. 7A is a hardware structure diagram of a decoder device according to an implementation of the present disclosure.

FIG. 7B is a hardware structure diagram of an encoder device according to an implementation of the present disclosure.

## DETAILED DESCRIPTION

Terms used in embodiments of the present disclosure are merely intended to describe specific embodiments, but are not intended to limit the present disclosure. The singular forms "a", "said", and "the" used in the embodiments and claims of the present disclosure are also intended to include plural forms, unless the context clearly indicates other meanings. It should also be understood that the term "and/or" used herein refers to any or all possible combinations including one or more associated listed items. It should be understood that, although the terms first, second, third, etc. may be used in the embodiments of the present disclosure to describe various information, the information should not be limited to these terms. These terms are only used to distinguish the same type of information from each other. For example, without departing from the scope of the embodiments of the present disclosure, first information may also be referred to as second information, and similarly, second information may also be referred to as first information, depending on the context. In addition, the word "if" used may be interpreted as "when ... ...", or "when ... ...", or "in response to determining".

Embodiments of the present disclosure provide a decoding method and an encoding method, which may involve the following concepts.

Entropy encoding: Entropy encoding is encoding in which no information is lost according to the entropy principle in an encoding process, and information entropy is an average amount of information (a measure of uncertainty) of a source. The entropy encoding methods may include but are not limited to Shannon coding, Huffman coding, and arithmetic coding.

Neural network (NN): A neural network is an artificial neural network, and the neural network is an computational model and includes a large number of nodes (or referred to as neurons) interconnected with each other. In a neural network, neuron processing units may represent different objects, such as features, letters, concepts, or some meaningful abstract patterns. Types of processing units in a neural network may be classified into three types: an input unit, an output unit, and a hidden unit. The input unit receives signals and data of the external world; the output unit outputs a processing result; and the hidden unit is a unit that is located between the input unit and the output unit and cannot be observed outside the system. The connection weight between neurons reflects the connection strength between units, and the representation and processing of information are embodied in the connection relationship of processing units. A neural network is a non-programmed and brain-like information processing method, and the essence of the neural network is to achieve a parallel distributed information processing function through the transformation and dynamic behavior of the neural network, and to mimic the information processing function of the human brain's nervous system to different degrees and layers. In the field of video processing, commonly used neural networks may include but are not limited to a convolutional neural network (CNN), a recurrent neural network (RNN), a fully-connected neural network (FCNN), etc.

Convolutional neural network (CNN): Convolutional neural network is a feedforward neural network, which is one of the extremely representative network structures in the deep learning technology, and the artificial neurons of the convolutional neural network can respond to surrounding units within a part of the coverage range, exhibiting excellent performance in large-scale image processing. A basic structure of the convolutional neural network includes two layers: a feature extraction layer (also referred to as a convolutional layer), where an input of each neuron is connected to a local receptive field of a previous layer, and a local feature is extracted. Once the local feature is extracted, the positional relationship between the local feature and other features is also determined. The second layer is a feature mapping layer (also referred to as an activation layer), where each computation layer of the neural network is composed of a plurality of feature maps, each feature map is a plane, and weights of all neurons on the plane are equal. The feature map structure may use a Sigmoid function, a ReLU function, a Leaky-ReLU function, a PReLU function, a GDN function, etc. as an activation function of the convolutional network. In addition, since neurons on one map plane share weights, the number of network free parameters is reduced.

For example, one of the advantages of the convolutional neural network compared with the image processing algorithms is that the complex early preprocessing process (extracting artificial features, etc.) of the image is avoided, and the original image can be directly input for end-to-end learning. One of the advantages of the convolutional neural network over the common neural network is that the common neural network is fully connected, i.e., the neurons from the input layer to the hidden layer are all connected, which will lead to a huge number of parameters, making the network training time-consuming and the network even difficult to train, while the convolutional neural network avoids this difficulty through local connection, weight sharing and other methods.

Deconvolution layer: The deconvolution layer is also referred to as a transposed convolution layer. Working processes of the deconvolution layer and the convolution layer are similar, and the main difference is that deconvolution layers use padding to produce an output larger than the input (though it can also remain the same size). If stride is 1, it indicates that the output size is equal to the input size; if stride is N, it indicates that the width of the output feature is N times the width of the input feature, and the height of the output feature is N times the height of the input feature.

Generalization ability: The generalization ability may refer to the adaptability of the machine learning algorithm to fresh samples, and the purpose of learning is to learn the law behind the data pairs. For data outside the learning set with the same law, the trained network can also give an appropriate output, and this ability may be called generalization ability.

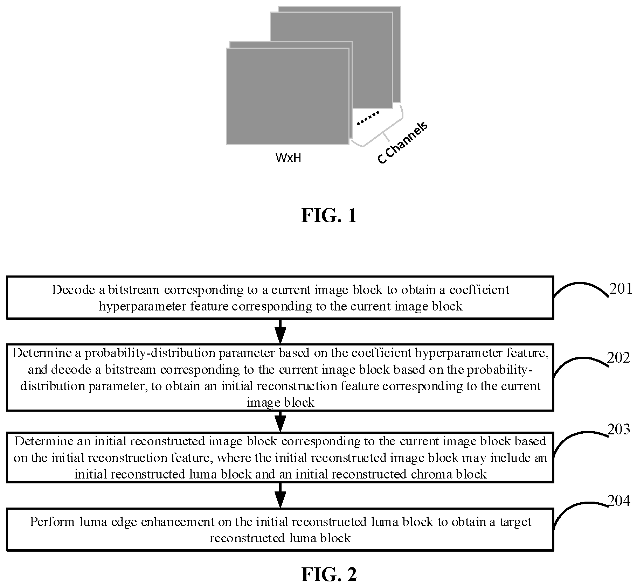

Feature: A feature involved in the present disclosure is a C*W*H three-dimensional feature matrix or tensor. As shown in FIG. 1, which is a schematic diagram of a three-dimensional feature matrix, in the three-dimensional feature matrix, C represents the number of channels, H represents a feature height, and W represents a feature width. The three-dimensional feature matrix may be an input of the neural network or an output of the neural network.

Rate-Distortion optimization (RDO) principle: Two major metrics for evaluating encoding efficiency are bitrate and peak signal-to-noise ratio (PSNR). The lower the bitrate, the higher the compression ratio; the higher the PSNR, the better the reconstructed image quality. During mode selection, the decision formula essentially serves as a comprehensive evaluation of the two. For example, a cost corresponding to a mode: $J(mode)=D+\lambda*R$, where D represents distortion, and may usually be measured by using a sum of the squared errors (SSE) metric, where SSE is a mean sum of squared differences between reconstructed image blocks and the source image. To take cost into consideration, a sum of absolute differences (SAD) metric may also be used, where SAD is a sum of absolute values of differences between the reconstructed image blocks and the source image. $\lambda$ represents a Lagrange multiplier. R represents an actual number of bits required for image block encoding in this mode, including a sum of bits required for encoding mode information, motion information, residuals, etc. During mode selection, if a rate-distortion optimization principle is used to compare and decide on coding modes, optimal encoding performance can usually be ensured.

A plurality of encoding tools are provided for various modules at an encoder, where each tool has multiple modes. For different video sequences, encoding tools that can achieve optimal encoding performance are often different. Therefore, in the encoding process, RDO is usually used to compare the encoding performance of different tools or modes to select the best mode. After the optimal tool or mode is determined, the decision information of the tool or mode is transmitted by encoding the flag information in the bitstream. Although this method brings high encoding complexity, an optimal mode combination may be adaptively selected for different content, to obtain optimal encoding performance. The decoder may obtain the related mode information by directly parsing the flag information, which has little impact on complexity.

A general end-to-end image encoding framework mainly includes a main feature information part and a hyperprior side information part. The main feature information part includes an analysis network, quantization, normal distribution-based entropy encoding, normal distribution-based entropy decoding, and a synthesis network. The hyperprior side information part includes a hyperprior analysis network, quantization, factorized entropy encoding, factorized entropy decoding, and a hyperprior synthesis network. Image component x is compressed and encoded by the analysis network of the feature main information part, and reconstructed and restored by the synthesis network of the feature main information part. The hyperprior side information part is mainly used to model the probability of the feature main information and guide the entropy encoding and decoding of the feature main information. In a general end-to-end image encoding framework, there is a problem that the hyperprior side information is not fully utilized, and the image reconstruction quality is not fully improved.

In view of the above findings, in this embodiment, by utilizing the characteristics of the end-to-end image encoding framework, the decoder uses the probability-distribution parameter to enhance the quality of the reconstructed image, thereby improving the quality of the reconstructed image. The encoder does not directly change the main information, but encodes the image-domain enhancement parameter into the header information bitstream (the third bitstream), and the decoder enhances the reconstructed image by using the image-domain enhancement parameter.

The decoding method and the encoding method in the embodiments of the present disclosure are described in detail below with reference to several specific embodiments.

Embodiment 1: An embodiment of the present disclosure proposes a decoding method, as shown in FIG.2, which is a schematic flowchart of the decoding method. The method may be applied to a decoder (also referred to as a video decoder), and may include the steps 201-204 described below.

Step 201: A bitstream corresponding to a current image block is decoded to obtain a coefficient hyperparameter feature corresponding to the current image block.

Step 202: A probability-distribution parameter is determined based on the coefficient hyperparameter feature, and a bitstream corresponding to the current image block is decoded based on the probability-distribution parameter, to obtain an initial reconstruction feature corresponding to the current image block.

Step 203: An initial reconstructed image block corresponding to the current image block is determined based on the initial reconstruction feature, where the initial reconstructed image block includes an initial reconstructed luma block and an initial reconstructed chroma block.

Step 204: Luma edge enhancement is performed on the initial reconstructed luma block to obtain a target reconstructed luma block.

For example, the coefficient hyperparameter feature may be a feature obtained by inputting the image feature into a hyperparameter encoding network (i.e., a neural network) and performing coefficient hyperparameter feature transformation on the image feature by the hyperparameter encoding network.

For example, after the initial reconstructed image block corresponding to the current image block is determined based on the initial reconstruction feature, chroma filtering enhancement may be further performed on the initial reconstructed chroma block to obtain the target reconstructed chroma block. For example, the chroma filtering enhancement and luma edge enhancement are synchronized and parallelizable, which can be performed simultaneously, or luma edge enhancement can be performed followed by chroma filtering enhancement, or chroma filtering enhancement followed by luma edge enhancement. No specific limitation is imposed on the processing order of luma and chroma enhancements.

For example, after the target reconstructed luma block and the target reconstructed chroma block are obtained, the target reconstructed image block may be further generated based on the target reconstructed luma block and the target reconstructed chroma block.

For example, in order to obtain the target reconstructed chroma block, chroma filtering enhancement may be performed based on the initial reconstructed luma block and the initial reconstructed chroma block to obtain the target reconstructed chroma block, or chroma filtering enhancement may be performed based on the target reconstructed luma block and the initial reconstructed chroma block to obtain the target reconstructed chroma block.

For example, performing luma edge enhancement on the initial reconstructed luma block to obtain a target reconstructed luma block may include but is not limited to: decoding a bitstream corresponding to the current image block to obtain an image-domain enhancement parameter corresponding to the current image block; and performing luma edge enhancement on the initial reconstructed luma block based on the image-domain enhancement parameter and the probability-distribution parameter, to obtain the target reconstructed luma block corresponding to the current image block.

For example, the image-domain enhancement parameter may include a plurality of image-enhancement segment intensity values and a plurality of image-enhancement segment thresholds. The plurality of image-enhancement segment thresholds form a plurality of image-enhancement threshold intervals, and the plurality of image-enhancement threshold intervals are in a one-to-one correspondence with the plurality of image-enhancement segment intensity values. Based on this, performing luma edge enhancement on the initial reconstructed luma image block based on the image-domain enhancement parameter and the probability-distribution parameter, to obtain a target reconstructed luma image block corresponding to the current image block may include but is not limited to: acquiring a target probability-distribution channel map based on the probability-distribution parameter; if the target probability-distribution channel map includes a plurality of probability distribution values, for each of the probability distribution values, determining an image-enhancement segment intensity value corresponding to the probability distribution value based on an image-enhancement threshold interval corresponding to the probability distribution value; and performing luma edge enhancement on the initial reconstructed luma image block based on the respective image-enhancement segment intensity values of each of the probability distribution values, to obtain the target reconstructed luma image block corresponding to the current image block.

For example, acquiring a target probability-distribution channel map based on the probability-distribution parameter may include but is not limited to: decoding the bitstream corresponding to the current image block, to obtain an important channel identifier corresponding to the current image block; if the probability-distribution parameter includes a plurality of probability-distribution channel maps, selecting a probability-distribution channel map corresponding to the important channel identifier from the plurality of probability-distribution channel maps as an important probability-distribution channel map; and upsampling the important probability-distribution channel map, to obtain the target probability-distribution channel map.

For example, the performing luma edge enhancement on the initial reconstructed luma block to obtain a target reconstructed luma block may include but is not limited to: decoding the bitstream corresponding to the current image block to obtain an important channel identifier corresponding to the current image block; if the probability-distribution parameter includes a plurality of probability-distribution channel maps, selecting a probability-distribution channel map corresponding to the important channel identifier from the plurality of probability-distribution channel maps included in the probability-distribution parameter as an important probability-distribution channel map; upsampling the important probability-distribution channel map to obtain a target probability-distribution channel map; and performing luma edge enhancement on the initial reconstructed luma block based on the target probability-distribution channel map to obtain the target reconstructed luma block corresponding to the current image block.

For example, the performing luma edge enhancement on the initial reconstructed luma block based on the respective image-enhancement segment intensity values of each of the probability distribution values, to obtain a target reconstructed luma block corresponding to the current image block may include but is not limited to: generating a high-frequency detail image based on the initial reconstructed luma block; for each feature value in the high-frequency detail image, performing luma edge enhancement on the feature value based on the image-enhancement segment intensity value corresponding to the probability distribution value corresponding to the feature value, to obtain an enhanced image feature value; and determining the target reconstructed luma block based on the respective enhanced image feature values of each feature value.

For example, generating the high-frequency detail image based on the initial reconstructed luma block may include, but is not limited to: performing a convolution operation on the initial reconstructed luma block and a Gaussian blur convolution kernel to obtain a Gaussian blur image; and subtracting the Gaussian blur image from the initial reconstructed luma block to obtain the high-frequency detail image. For each value in the Gaussian blur convolution kernel, a denominator of the value may be a power of 2, e.g., 2, 4, 8, 16, 32, 64 or 128.

For example, the Gaussian blur convolution kernel may be a convolution kernel of N*N. N may be a positive integer, and if the value of N is 3, i.e., the Gaussian blur convolution kernel is a convolution kernel of 3*3, the Gaussian blur convolution kernel may include but is not limited to:

$$\begin{bmatrix} \dfrac{A}{M} & \dfrac{A}{M} & \dfrac{A}{M} \\ \dfrac{A}{M} & \dfrac{B}{M} & \dfrac{A}{M} \\ \dfrac{A}{M} & \dfrac{A}{M} & \dfrac{A}{M} \end{bmatrix}.$$

A may be a positive integer, B may be a positive integer, and M may be a power of 2, e.g., M may be 2, 4, 8, 16, 32, 64 or 128. For example, A may be 5, B may be 24, and M may be 64.

For example, for step 204, performing chroma filtering enhancement on the initial reconstructed chroma block to obtain a target reconstructed chroma block may include but is not limited to: performing chroma filtering enhancement on the initial reconstructed chroma block based on the target reconstructed luma block or the initial reconstructed luma block to obtain the target reconstructed chroma block.

For example, adaptive upsampling may be performed based on the initial reconstructed chroma block and the initial reconstructed luma block, to obtain an upsampled reconstructed chroma block, and the resolutions of the upsampled reconstructed chroma block and the initial reconstructed luma block may be the same. A filtering operation is performed on the upsampled reconstructed chroma block to obtain the target reconstructed chroma block, where the filtering operation may include but is not limited to cross-channel filtering and/or nonlinear chroma filtering. For example, cross-channel filtering may be performed on the upsampled reconstructed chroma block based on the initial reconstructed luma block, to obtain the target reconstructed chroma block; or nonlinear chroma filtering may be performed on the upsampled reconstructed chroma block based on the initial reconstructed luma block, to obtain the target reconstructed chroma block; or cross-channel filtering may be performed on the upsampled reconstructed chroma block based on the initial reconstructed luma block, to obtain a cross-channel filtered reconstructed chroma block, and nonlinear chroma filtering may be performed on the cross-channel filtered reconstructed chroma block based on the initial reconstructed luma block, to obtain the target reconstructed chroma block; or nonlinear chroma filtering may be performed on the upsampled reconstructed chroma block based on the initial reconstructed luma block, to obtain a nonlinear chroma-filtered reconstructed chroma block, and cross-channel filtering may be performed on the nonlinear chroma-filtered reconstructed chroma block based on the initial reconstructed luma block, to obtain the target reconstructed chroma block.

For example, adaptive upsampling may be performed based on the initial reconstructed chroma block and the target reconstructed luma block, to obtain an upsampled reconstructed chroma block, and the resolutions of the upsampled reconstructed chroma block and the target reconstructed luma block may be the same. A filtering operation is performed on the upsampled reconstructed chroma block to obtain the target reconstructed chroma block, where the filtering operation may include but is not limited to cross-channel filtering and/or nonlinear chroma filtering. For example, cross-channel filtering may be performed on the upsampled reconstructed chroma block based on the target reconstructed luma block, to obtain the target reconstructed chroma block; or nonlinear chroma filtering may be performed on the upsampled reconstructed chroma block based on the target reconstructed luma block, to obtain the target reconstructed chroma block; or cross-channel filtering may be performed on the upsampled reconstructed chroma block based on the target reconstructed luma block, to obtain a cross-channel filtered reconstructed chroma block, and nonlinear chroma filtering may be performed on the cross-channel filtered reconstructed chroma block based on the target reconstructed luma block, to obtain the target reconstructed chroma block; or nonlinear chroma filtering may be performed on the upsampled reconstructed chroma block based on the target reconstructed luma block, to obtain a nonlinear chroma-filtered reconstructed chroma block, and cross-channel filtering may be performed on the nonlinear chroma-filtered reconstructed chroma block based on the target reconstructed luma block, to obtain the target reconstructed chroma block.

For example, determining an initial reconstructed image block corresponding to the current image block based on the initial reconstruction feature may include but is not limited to: inputting the initial reconstruction feature into a synthesis transform net, to obtain the initial reconstructed image block corresponding to the current image block. Alternatively, the bitstream corresponding to the current image block is decoded, to obtain a feature-domain enhancement parameter corresponding to the current image block; feature-domain enhancement is performed on the initial reconstruction feature based on the feature-domain enhancement parameter and the probability-distribution parameter, to obtain an enhanced reconstruction feature; and the enhanced reconstruction feature is input into the synthesis transform net, to obtain the initial reconstructed image block corresponding to the current image block.

For example, the bitstream corresponding to the current image block may be further decoded to obtain the important channel identifier corresponding to the current image block, where the initial reconstruction feature includes C feature channel maps, the probability-distribution parameter includes C probability-distribution channel maps, the C probability-distribution channel maps are in a one-to-one correspondence with the C feature channel maps, C is a positive integer, a feature channel map corresponding to the important channel identifier is used as an important feature channel map, remaining feature channel maps in the C feature channel maps are used as non-important feature channel maps, a probability-distribution channel map corresponding to the important feature channel map is used as an important probability-distribution channel map, and the remaining probability-distribution channel maps in the C probability-distribution channel maps are used as non-important probability-distribution channel maps.

Performing feature-domain enhancement on the initial reconstruction feature based on the feature-domain enhancement parameter and the probability-distribution parameter to obtain an enhanced reconstruction feature may include, but is not limited to: performing feature-adaptive edge enhancement on the important feature channel map based on the feature-domain enhancement parameter and the important probability-distribution Schannel map to obtain a first reconstruction feature after the feature-adaptive edge enhancement; performing feature-adaptive stretching on the non-important feature channel map based on the feature-domain enhancement parameter and the non-important probability-distribution channel map to obtain a second reconstruction feature after the feature-adaptive stretching; and generating the enhanced reconstruction feature based on the first reconstruction feature and the second reconstruction feature.

For example, the feature-domain enhancement parameter may include a plurality of edge enhancement segment intensity values and a plurality of edge enhancement segment thresholds. The plurality of edge enhancement segment thresholds may form a plurality of edge enhancement threshold intervals, and the plurality of edge enhancement threshold intervals are in a one-to-one correspondence with the plurality of edge enhancement segment intensity values. On this basis, performing feature-adaptive edge enhancement on the important feature channel map based on the feature-domain enhancement parameter and the important probability-distribution channel map to obtain the first reconstruction feature after feature-adaptive edge enhancement may include, but is not limited to: if the important probability-distribution channel map includes a plurality of probability distribution values, for each of the probability distribution values, an edge enhancement segment intensity value corresponding to the probability distribution value may be determined based on an edge enhancement threshold interval corresponding to the probability distribution value; and then, feature-adaptive edge enhancement is performed on the important feature channel map based on the respective edge enhancement segment intensity values of each of the probability distribution values to obtain the first reconstruction feature after feature-adaptive edge enhancement.

For example, performing feature-adaptive edge enhancement on the important feature channel map based on the respective edge enhancement segment intensity values of each of the probability distribution values to obtain the first reconstruction feature after the feature-adaptive edge enhancement may include, but is not limited to: normalizing the important feature channel map to obtain a normalized feature map; generating a high-frequency detail image based on the important feature channel map and the normalized feature map; for each feature value in the high-frequency detail image, performing edge enhancement on the feature value based on the edge enhancement segment intensity value corresponding to the probability distribution value corresponding to the feature value to obtain an edge-enhanced feature value; determining an edge-enhanced feature map based on the respective edge-enhanced feature values of each feature value; and performing inverse normalization on the edge-enhanced feature map to obtain the first reconstruction feature.

For example, the feature-domain enhancement parameter may include a stretching parameter value, and performing feature-adaptive stretching on the non-important feature channel map based on the feature-domain enhancement parameter and the non-important probability-distribution channel map to obtain the second reconstruction feature after the feature-adaptive stretching may include but is not limited to: if the non-important feature channel map may include a plurality of feature values, and the non-important probability-distribution channel map may include a plurality of probability distribution values, for each feature value in the non-important feature channel map, a stretched feature value corresponding to the feature value may be determined based on the feature value, the stretching parameter value, and the probability distribution value corresponding to the feature value; and then the second reconstruction feature is determined based on the stretched feature value corresponding to each feature value in the non-important feature channel map.

For example, a bitstream that can be decoded to obtain the coefficient hyperparameter feature corresponding to the current image block may be referred to as the first bitstream corresponding to the current block; a bitstream that can be decoded to obtain the initial reconstruction feature corresponding to the current image block may be referred to as the second bitstream corresponding to the current block; and a bitstream that can be decoded to obtain the image-domain enhancement parameter and/or the feature-domain enhancement function and/or the important channel identifier corresponding to the current image block may be referred to as the third bitstream corresponding to the current block, and the third bitstream corresponding to the current block may also be referred to as the header information bitstream corresponding to the current block.

For example, the foregoing execution sequence is merely an example provided for ease of description, and in actual application, an execution sequence between steps may be changed, and the execution sequence is not limited. Moreover, in other embodiments, the steps of the corresponding method are not necessarily performed in the order shown and described in the present disclosure, and the method may include more or fewer steps than those described in the present disclosure. In addition, a single step described in this specification may be decomposed into a plurality of steps for description in other embodiments; the plurality of steps described in this specification may also be combined into a single step for description in other embodiments.

It can be learned from the foregoing technical solutions that, in this embodiment of the present disclosure, after the initial reconstructed luma block and the initial reconstructed chroma block that correspond to the current image block are obtained, luma edge enhancement may be performed on the initial reconstructed luma block to obtain the target reconstructed luma block, chroma filtering enhancement may be performed on the initial reconstructed chroma block to obtain the target reconstructed chroma block, and the target reconstructed image block is generated based on the target reconstructed luma block and the target reconstructed chroma block. Thus, an end-to-end video image compression method is proposed, which is capable of implementing encoding and decoding of video images based on neural networks, and achieves the purpose of improving encoding efficiency and decoding efficiency by combining image-domain enhancement parameters and probability distribution parameters. With reference to a network structure design and a header information bitstream (e.g., the third bitstream), the neural network effectively ensures quality of a reconstructed image block while maintaining low complexity, improves encoding performance and decoding performance, and reduces complexity. By using the image-domain enhancement parameter and the probability-distribution parameter to perform image quality enhancement on the feature, the encoder does not directly change the feature information, but encodes the image-domain enhancement parameter into the header information bitstream, and the decoder enhances the reconstructed image block by using the image-domain enhancement parameter, thereby improving the encoding and decoding performance and improving the quality of the reconstructed image.

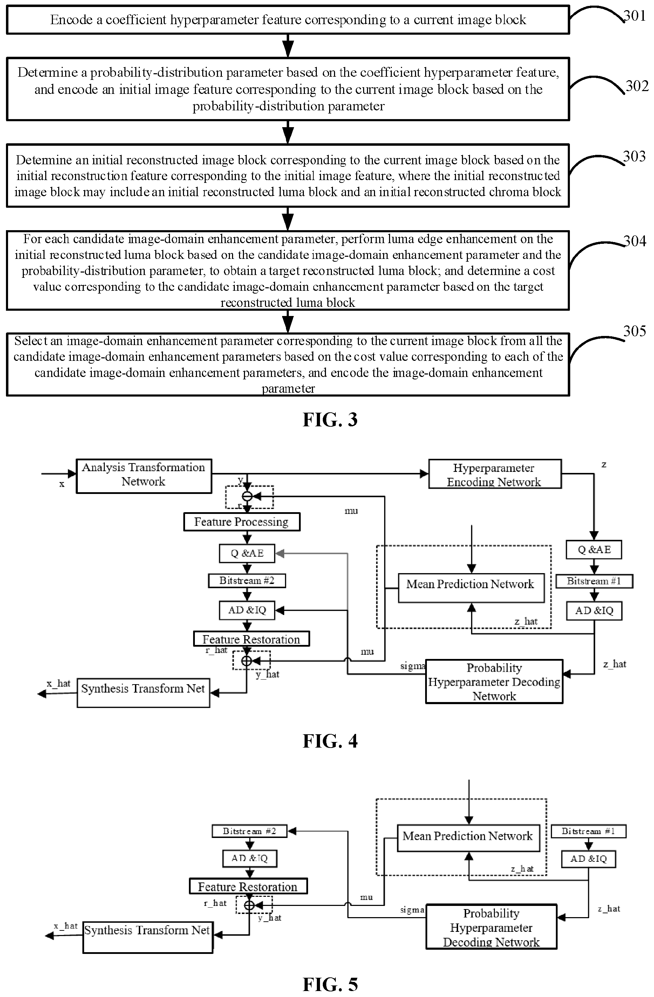

Embodiment 2: An embodiment of the present disclosure proposes an encoding method, as shown in FIG.3, which is a schematic flowchart of the encoding method. The method may be applied to an encoder (also referred to as a video encoder), and may include the steps described below.

Step 301: A coefficient hyperparameter feature corresponding to a current image block is encoded.

Step 302: A probability-distribution parameter is determined based on the coefficient hyperparameter feature, and an initial image feature corresponding to the current image block is encoded based on the probability-distribution parameter.

Step 303: An initial reconstructed image block corresponding to the current image block is determined based on the initial reconstruction feature corresponding to the initial image feature, where the initial reconstructed image block may include an initial reconstructed luma block and an initial reconstructed chroma block.

Step 304: For each candidate image-domain enhancement parameter, luma edge enhancement is performed on the initial reconstructed luma block based on the candidate image-domain enhancement parameter and the probability-distribution parameter, to obtain a target reconstructed luma block; and a cost value corresponding to the candidate image-domain enhancement parameter is determined based on the target reconstructed luma block.

For example, chroma filtering enhancement may be performed on the initial reconstructed chroma block to obtain a target reconstructed chroma block, the target reconstructed image block is generated based on the target reconstructed luma block and the target reconstructed chroma block, and the cost value corresponding to the candidate image-domain enhancement parameter is determined based on the target reconstructed image block.

Step 305: An image-domain enhancement parameter corresponding to the current image block is selected from all the candidate image-domain enhancement parameters based on the cost value corresponding to each of the candidate image-domain enhancement parameters, and the image-domain enhancement parameter is encoded.

For example, a processing process at the encoder is similar to a processing process at the decoder, and similarities are not described again. The processing process at the decoder may be applied to the encoder, i.e., the encoder uses the same processing manner.

For example, a bitstream obtained by encoding the coefficient hyperparameter feature corresponding to the current image block may be referred to as the first bitstream corresponding to the current image block, a bitstream obtained by encoding the initial image feature corresponding to the current image block may be referred to as the second bitstream corresponding to the current image block, and a bitstream obtained by encoding the image-domain enhancement parameter and/or the feature-domain enhancement function and/or the important channel identifier corresponding to the current image block may be referred to as the third bitstream corresponding to the current image block. The third bitstream corresponding to the current block may also be referred to as the header information bitstream corresponding to the current block.

For example, the foregoing execution sequence is merely an example provided for ease of description, and in actual application, an execution sequence between steps may be changed, and the execution sequence is not limited. Moreover, in other embodiments, the steps of the corresponding method are not necessarily performed in the order shown and described in the present disclosure, and the method may include more or fewer steps than those described in the present disclosure. In addition, a single step described in this specification may be decomposed into a plurality of steps for description in other embodiments; the plurality of steps described in this specification may also be combined into a single step for description in other embodiments.

It can be learned from the foregoing technical solutions that, in this embodiment of the present disclosure, after the initial reconstructed luma block and the initial reconstructed chroma block that correspond to the current image block are obtained, luma edge enhancement may be performed on the initial reconstructed luma block to obtain the target reconstructed luma block, chroma filtering enhancement may be performed on the initial reconstructed chroma block to obtain the target reconstructed chroma block, and the target reconstructed image block is generated based on the target reconstructed luma block and the target reconstructed chroma block. Thus, an end-to-end video image compression method is proposed, which is capable of implementing encoding and decoding of video images based on neural networks, and achieves the purpose of improving encoding efficiency and decoding efficiency by combining image-domain enhancement parameters and probability distribution parameters. With reference to a network structure design and a header information bitstream (e.g., the third bitstream), the neural network effectively ensures quality of a reconstructed image block while maintaining low complexity, improves encoding performance and decoding performance, and reduces complexity. The image quality enhancement is performed on the feature by using the image-domain enhancement parameter and the probability-distribution parameter, the encoder does not directly change the feature information, but encodes the image-domain enhancement parameter into the header information bitstream, and the decoder enhances the reconstructed image block by using the image-domain enhancement parameter, thereby improving the encoding and decoding performance and improving the quality of the reconstructed image.

Embodiment 3: For Embodiments 1 and 2, the processing procedure at the encoder is illustrated in FIG. 4; it should be understood that FIG. 4 merely illustrates one embodiment of the processing procedure at the encoder, and the processing procedure at the encoder is not limited thereto.

After obtaining the current image block x (the current image block x may be an original image block x, i.e., an input image block), the encoder may perform analysis transformation on the current image block x by using an analysis transformation network (i.e., a neural network), to obtain the image feature y corresponding to the current image block x. Performing feature transformation on the current image block x by using the analysis transformation network means: transforming the current image block x to an image feature y in a latent domain, to facilitate all subsequent processes to operate in the latent domain.

An image may be divided into 1 image block or a plurality of image blocks. If the image is divided into one image block, the current image block x may also be an image, i.e., the encoding and decoding process of the image block may also be directly used for the image.

After obtaining the image feature y, the encoder performs coefficient hyperparameter feature transformation on the image feature y to obtain a coefficient hyperparameter feature z, e.g., may input the image feature y to a hyperparameter encoding network (i.e., a neural network), and the hyperparameter encoding network performs coefficient hyperparameter feature transformation on the image feature y to obtain the coefficient hyperparameter feature z. The hyperparameter encoding network may be a trained neural network, and a training process of the hyperparameter encoding network is not limited, provided that coefficient hyperparameter feature transformation can be performed on the image feature y. The image feature y in the latent domain passes through the hyperparameter encoding network to obtain hyperprior latent information z.

After obtaining the coefficient hyperparameter feature z, the encoder may quantize the coefficient hyperparameter feature z to obtain a quantized hyperparameter feature corresponding to the coefficient hyperparameter feature z, i.e., the Q operation in FIG. 4 is a quantization process. After the quantized hyperparameter feature corresponding to the coefficient hyperparameter feature z is obtained, the quantized hyperparameter feature is encoded to obtain the Bitstream#1(also referred to as the first bitstream) corresponding to the current image block, i.e., the AE operation in FIG. 4 represents an encoding process, e.g., an entropy encoding process. Alternatively, the encoder may directly encode the coefficient hyperparameter feature z to obtain the Bitstream#1 corresponding to the current image block. The quantized hyperparameter feature or the coefficient hyperparameter feature z carried in the Bitstream#1 is mainly used to acquire a mean value and a parameter of the probability distribution model.

After obtaining the Bitstream#1 corresponding to the current image block, the encoder may send the Bitstream#1 corresponding to the current image block to the decoder. For details on the decoder's processing of Bitstream#1 corresponding to the current image block, see the subsequent embodiments.

After obtaining the Bitstream#1 corresponding to the current image block, the encoder may further decode the Bitstream#1 to obtain a quantized hyperparameter feature, i.e., AD in FIG. 4 represents a decoding process, and then perform dequantization on the quantized hyperparameter feature to obtain a coefficient hyperparameter feature z_hat, where the coefficient hyperparameter feature z_hat may be the same as or different from the coefficient hyperparameter feature z, and an IQ operation in FIG. 4 is a dequantization process. Alternatively, after obtaining the Bitstream#1 corresponding to the current image block, the encoder may further decode the Bitstream#1 to obtain the coefficient hyperparameter feature z_hat, without involving a dequantization process of the coefficient hyperparameter feature z_hat.

For an encoding process of the Bitstream#1, an encoding method of a fixed probability density model may be used, and for a decoding process of the Bitstream#1, a decoding method of a fixed probability density model may be used, and there are no restrictions on this encoding and decoding process.

After obtaining the coefficient hyperparameter feature z_hat, the encoder may perform context-based prediction based on the coefficient hyperparameter feature z_hat of the current image block and the reconstruction feature y_hat of the previous image block (for details on the process of determining the reconstruction feature y_hat, see the subsequent embodiments), to obtain the predicted value mu (i.e., the mean value mu) corresponding to the current image block. For example, the coefficient hyperparameter feature z_hat and the reconstruction feature y_hat are input to the mean prediction network, and the mean prediction network determines the predicted value mu based on the coefficient hyperparameter feature z_hat and the reconstruction feature y_hat, and the prediction process is not limited herein. For the context-based prediction process, the input includes the coefficient hyperparameter feature z_hat and the decoded reconstruction feature y_hat, a more accurate predicted value mu is obtained by jointly inputting the coefficient hyperparameter feature z_hat and the decoded reconstruction feature y_hat, and the predicted value mu is used to calculate the difference with the original features to obtain the residual r_hat, and to add the decoded residual to obtain the reconstruction feature y_hat.

It should be noted that the mean prediction network is an optional neural network, i.e., there may be no mean prediction network, i.e., the predicted value mu does not need to be determined by the mean prediction network, and the dashed box in FIG. 4 indicates that the mean prediction network is optional.

After obtaining the image feature y, the encoder may determine the residual feature r based on the image feature y and the predicted value mu, e.g., using a difference between the image feature y and the predicted value mu as the residual feature r. Then, feature processing is performed on the residual feature r to obtain the image feature s, which is not limited and may be any feature processing method. In this case, a mean prediction network needs to be deployed, and the mean prediction network provides a predicted value mu. Alternatively, after obtaining the image feature y, the encoder may perform feature processing on the image feature y to obtain the image feature s, which is not limited and may be any feature processing method. In this case, the mean prediction network does not need to be deployed, and a residual process represented by a dashed box is an optional process.

After obtaining the image feature s, the encoder may quantize the image feature s to obtain a quantized image feature corresponding to the image feature s, i.e., the Q operation in FIG. 4 is a quantization process. After obtaining the quantized image feature corresponding to the image feature s, the encoder may encode the quantized image feature to obtain a Bitstream#2(also referred to as the second bitstream) corresponding to the current image block, i.e., the AE operation in FIG. 4 represents an encoding process, e.g., an entropy encoding process. Alternatively, the encoder may directly encode the image feature s to obtain the Bitstream#2 corresponding to the current image block without involving a quantization process of the image feature s.

After obtaining the Bitstream#2 corresponding to the current image block, the encoder may send the Bitstream#2 corresponding to the current image block to the decoder. For details on the decoder's processing of Bitstream#2 corresponding to the current image block, see the subsequent embodiments.

After obtaining the Bitstream#2 corresponding to the current image block, the encoder may further decode the Bitstream#2 to obtain a quantized image feature, i.e., AD in FIG. 4 represents a decoding process, and then the encoder may perform dequantization on the quantized image feature to obtain an image feature s', where the image feature s' may be the same as or different from the image feature s, and an IQ operation in FIG. 4 is a dequantization process. Alternatively, after obtaining the Bitstream#2 corresponding to the current image block, the encoder may further decode the Bitstream#2 to obtain the image feature s' without involving an dequantization process of the quantized image feature.

After obtaining the image feature s', the encoder may perform feature restoration (i.e., an inverse process of feature processing) on the image feature s', where the feature restoration process is not limited, and may be any feature restoration manner, to obtain the residual feature r_hat, where the residual feature r_hat may be the same as or different from the residual feature r. After obtaining the residual feature r_hat, the encoder determines an image feature y_hat (i.e., a reconstruction feature) based on the residual feature r_hat and the predicted value mu, where the image feature y_hat is the same as or different from the image feature y, e.g., a sum of the residual feature r_hat and the predicted value mu is used as the image feature y_hat. In this case, a mean prediction network needs to be deployed, and the mean prediction network provides a predicted value mu. Alternatively, after obtaining the image feature s', the encoder performs feature restoration (i.e., an inverse process of feature processing) on the image feature s' to obtain the image feature y_hat, where the image feature y_hat may be the same as or different from the image feature y. In this case, a mean prediction network does not need to be deployed, and a dashed box indicates that a residual process is an optional process.

After obtaining the image feature y_hat, the encoder may perform synthesis transform on the image feature y_hat to obtain a reconstructed image block x_hat corresponding to the current image block x, e.g., input the image feature y_hat to a synthesis transform net, and the synthesis transform net performs synthesis transform on the image feature y_hat to obtain the reconstructed image block x_hat. At this point, the image reconstruction process is completed. For example, a synthesis transform net may be a network constructed based on deep learning or a neural network, and is configured to convert an image feature into an image.

In a possible implementation, when the encoder encodes the quantized image feature or the image feature s to obtain the Bitstream#2 corresponding to the current image block, the encoder needs to first determine a probability distribution model, and then encode the quantized image feature or the image feature s based on the probability distribution model. In addition, when decoding the Bitstream#2, the decoder also needs to first determine a probability distribution model, and then decode the Bitstream#2 based on the probability distribution model.

To obtain the probability distribution model, still referring to FIG. 4, after obtaining the coefficient hyperparameter feature z_hat, the encoder may perform coefficient hyperparameter feature inverse transformation on the coefficient hyperparameter feature z_hat to obtain the probability-distribution parameter. For example, the coefficient hyperparameter feature z_hat may be input into a probability hyperparameter decoding network, which executes the inverse transformation to yield the probability-distribution parameter sigma. Subsequently, a probability distribution model is generated based on these parameters. The probability hyperparameter decoding network may be a trained neural network, the training process of which is not restricted, provided that it is capable of performing the inverse transformation on the coefficient hyperparameter feature z_hat.

In a possible implementation, the foregoing processing process of the encoder may be performed by a deep learning model or a neural network model, to implement an end-to-end image compression and encoding process, and the encoding process is not limited.

Embodiment 4: For Embodiments 1 and 2, the processing procedure at the decoder is illustrated in FIG. 5; it should be understood that FIG. 5 merely illustrates one embodiment of the processing procedure at the decoder, and the processing procedure at the decoder is not limited thereto.

After obtaining the Bitstream#1 corresponding to the current image block, the decoder may further decode the Bitstream#1 to obtain a quantized hyperparameter feature, i.e., AD in FIG. 5 represents a decoding process, and then perform dequantization on the quantized hyperparameter feature to obtain a coefficient hyperparameter feature z_hat, where the coefficient hyperparameter feature z_hat may be the same as or different from the coefficient hyperparameter feature z, and an IQ operation in FIG. 5 is a dequantization process. Alternatively, after obtaining the Bitstream#1 corresponding to the current image block, the decoder may further decode the Bitstream#1 to obtain the coefficient hyperparameter feature z_hat, without involving a dequantization process of the coefficient hyperparameter feature z_hat.

For a decoding process of the Bitstream#1, a decoding method of a fixed probability density model may be used, which is not limited.

An image may be divided into one image block, or may be divided into a plurality of image blocks, and if the image is divided into one image block, the current image block x may also be an image, i.e., a decoding process of the image block may also be directly used for the image.

After obtaining the coefficient hyperparameter feature z_hat, the decoder may perform context-based prediction based on the coefficient hyperparameter feature z_hat of the current image block and the reconstruction feature y_hat of the previous image block (for a process of determining the reconstruction feature y_hat, see the subsequent embodiments), to obtain a predicted value mu (i.e., a mean value mu) corresponding to the current image block, e.g., input the coefficient hyperparameter feature z_hat and the reconstruction feature y_hat into a mean prediction network, and the mean prediction network determines the predicted value mu based on the coefficient hyperparameter feature z_hat and the reconstruction feature y_hat, and the prediction process is not limited herein. For the context-based prediction process, the input includes the coefficient hyperparameter feature z_hat and the decoded reconstruction feature y_hat, and the two are jointly input to obtain a more accurate predicted value mu.

It should be noted that the mean prediction network is an optional neural network, i.e., there may be no mean prediction network, i.e., the predicted value mu does not need to be determined by the mean prediction network, and the dashed box in FIG. 5 indicates that the mean prediction network is optional.

After obtaining the Bitstream#2 corresponding to the current image block, the decoder may further decode the Bitstream#2 to obtain a quantized image feature, i.e., AD in FIG. 5 represents a decoding process, and then the decoder may perform dequantization on the quantized image feature to obtain an image feature s', where the image feature s' may be the same as or different from the image feature s, and an IQ operation in FIG. 5 is a dequantization process. Alternatively, after obtaining the Bitstream#2 corresponding to the current image block, the decoder may further decode the Bitstream#2 to obtain the image feature s' without involving a dequantization process of the quantized image feature.

After obtaining the image feature s', the decoder may perform feature restoration (i.e., an inverse process of feature processing) on the image feature s' to obtain a residual feature r_hat, where the residual feature r_hat is the same as or different from the residual feature r. After obtaining the residual feature r_hat, the decoder determines an image feature y_hat (i.e., a reconstruction feature) based on the residual feature r_hat and the predicted value mu, where the image feature y_hat is the same as or different from the image feature y, e.g., a sum of the residual feature r_hat and the predicted value mu is used as the image feature y_hat. In this case, a mean prediction network needs to be deployed, and the mean prediction network provides a predicted value mu. Alternatively, after obtaining the image feature s', the decoder performs feature restoration on the image feature s' to obtain the image feature y_hat, where the image feature y_hat may be the same as or different from the image feature y. In this case, a mean prediction network does not need to be deployed, and a dashed box indicates that a residual process is an optional process.

After obtaining the image feature y_hat, the decoder may perform synthesis transform on the image feature y_hat to obtain the reconstructed image block x_hat corresponding to the current image block x, e.g., input the image feature y_hat to the synthesis transform net, and the synthesis transform net performs synthesis transform on the image feature y_hat to obtain the reconstructed image block x_hat. At this point, the image reconstruction process is completed. For example, a synthesis transform net may be a network constructed based on deep learning or a neural network, and is configured to convert an image feature into an image.

In a possible implementation, when decoding the Bitstream#2, the decoder needs to first determine a probability distribution model, and then decode the Bitstream#2 based on the probability distribution model. To obtain the probability distribution model, still referring to FIG. 5, after obtaining the coefficient hyperparameter feature z_hat, the decoder performs an inverse transformation on the coefficient hyperparameter feature z_hat to obtain the probability distribution parameters sigma. For example, the coefficient hyperparameter feature z_hat may be input to a probability hyperparameter decoding network, which executes the inverse transformation to yield the probability-distribution parameter sigma. Subsequently, a probability distribution model is generated based on these parameters. The probability hyperparameter decoding network may be a trained neural network, the training process of which is not restricted, provided that it is capable of performing the coefficient hyperparameter feature inverse transformation on the coefficient hyperparameter feature z_hat, to obtain the probability distribution parameter.

In a possible implementation, the foregoing processing process of the decoder may be performed by a deep learning model or a neural network model, to implement an end-to-end decoding process, which is not limited.

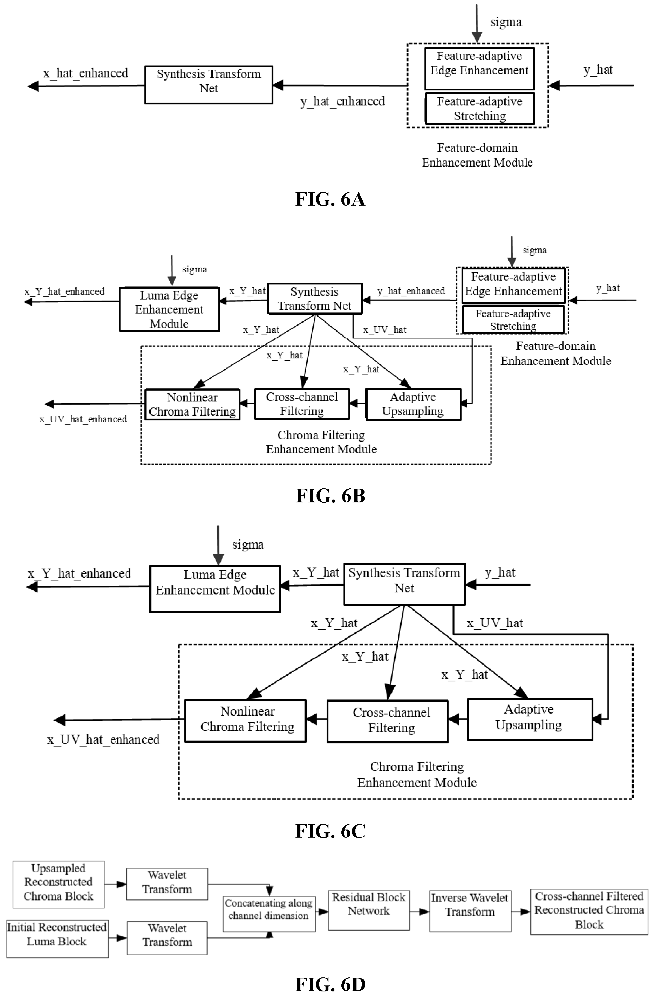

Embodiment 5: On the basis of Embodiment 3 and Embodiment 4, a feature-domain enhancement module may be added before the synthesis transform net. As shown in FIG. 6A, an input feature of the feature-domain enhancement module may be an image feature y_hat (denoted as an initial reconstruction feature y_hat subsequently), and an output feature of the feature-domain enhancement module may be an enhanced reconstruction feature y_hat_enhanced, where the enhanced reconstruction feature y_hat_enhanced is input to a synthesis transform net, and the synthesis transform net performs synthesis transform on the enhanced reconstruction feature y_hat_enhanced to obtain a target reconstructed image block x_hat_enhanced corresponding to the current image block x.

For the encoder, after the current image block x is obtained, analysis transformation is performed on the current image block x by using an analysis transformation network, to obtain the image feature y corresponding to the current image block x. Coefficient hyperparameter feature transformation is performed on the image feature y by using a hyperparameter encoding network, to obtain a coefficient hyperparameter feature z. A coefficient hyperparameter feature (which may be the coefficient hyperparameter feature z, or may be a quantized hyperparameter feature of the coefficient hyperparameter feature z) corresponding to the current image block is encoded to obtain a bitstream corresponding to the current image block.

The bitstream corresponding to the current image block is decoded to obtain the coefficient hyperparameter feature z_hat corresponding to the current image block (e.g., the coefficient hyperparameter feature z_hat itself is decoded from the bitstream, or a quantized hyperparameter feature is decoded from the bitstream, and the quantized hyperparameter feature is dequantized to obtain the coefficient hyperparameter feature z_hat). Then, inverse transform is performed on the coefficient hyperparameter feature z_hat by using the probability hyperparameter decoding network, to obtain the probability-distribution parameter sigma.

The initial image feature (the initial image feature may be the image feature y, or may be the residual feature r corresponding to the image feature y, or may be the image feature s obtained after feature processing is performed on the image feature y or the residual feature r, or may be the quantized image feature corresponding to the image feature y, or the residual feature r, or the image feature s, which is not limited) corresponding to the current image block is encoded based on the probability-distribution parameter sigma, to obtain the bitstream corresponding to the current image block.

The bitstream corresponding to the current image block is decoded based on the probability-distribution parameter sigma, to obtain the initial reconstruction feature y_hat corresponding to the current image block. For example, if the initial image feature is the image feature y, the initial reconstruction feature y_hat is decoded from the bitstream. If the initial image feature is the quantized image feature corresponding to the image feature y, the quantized image feature is decoded from the bitstream, and the quantized image feature is dequantized to obtain the initial reconstruction feature y_hat. For another example, if the initial image feature is the residual feature r corresponding to the image feature y, the residual feature r_hat is decoded from the bitstream, and the initial reconstruction feature y_hat is determined based on the residual feature r_hat and the predicted value mu. If the initial image feature is the quantized image feature corresponding to the residual feature r, the quantized image feature is decoded from the bitstream, the quantized image feature is dequantized to obtain the residual feature r_hat, and the initial reconstruction feature y_hat is determined based on the residual feature r_hat and the predicted value mu. If the initial image feature is the image feature s corresponding to the image feature y or the residual feature r, the image feature s' is decoded from the bitstream, and feature restoration is performed on the image feature s' to obtain the initial reconstruction feature y_hat or the residual feature r_hat. If the initial image feature is the quantized image feature corresponding to the image feature s, the quantized image feature is decoded from the bitstream, the quantized image feature is dequantized to obtain an image feature s', feature restoration is performed on the image feature s' to obtain an initial reconstruction feature y_hat or a residual feature r_hat, and if the residual feature r_hat is obtained, the initial reconstruction feature y_hat may be further determined based on the residual feature r_hat and the predicted value mu.

After the initial reconstruction feature y_hat is obtained, the initial reconstruction feature y_hat may be input to the feature-domain enhancement module, the feature-domain enhancement module performs feature-domain enhancement on the initial reconstruction feature y_hat to obtain an enhanced reconstruction feature y_hat_enhanced, the enhanced reconstruction feature y_hat_enhanced is input to the synthesis transform net, and the synthesis transform net performs synthesis transform on the enhanced reconstruction feature y_hat_enhanced to obtain a target reconstructed image block x_hat_enhanced corresponding to the current image block x.

For the decoder, the decoder decodes the bitstream corresponding to the current image block to obtain the coefficient hyperparameter feature z_hat corresponding to the current image block (e.g., decoding the coefficient hyperparameter feature z_hat from the bitstream, or decoding the quantized hyperparameter feature from the bitstream, and dequantizing the quantized hyperparameter feature to obtain the coefficient hyperparameter feature z_hat). Then, inverse transform is performed on the coefficient hyperparameter feature z_hat by using the probability hyperparameter decoding network, to obtain the probability-distribution parameter sigma.

The bitstream corresponding to the current image block is decoded based on the probability-distribution parameter sigma, to obtain the initial reconstruction feature y_hat corresponding to the current image block. For example, the initial reconstruction feature y_hat is decoded from the bitstream. Alternatively, a quantized image feature is decoded from the bitstream, and dequantization is performed on the quantized image feature to obtain the initial reconstruction feature y_hat. For another example, the residual feature r_hat is decoded from the bitstream, and the initial reconstruction feature y_hat is determined based on the residual feature r_hat and the predicted value mu. Alternatively, a quantized image feature is decoded from the bitstream, the quantized image feature is dequantized to obtain a residual feature r_hat, and the initial reconstruction feature y_hat is determined based on the residual feature r_hat and the predicted value mu. For another example, the image feature s' is decoded from the bitstream, feature restoration is performed on the image feature s' to obtain the initial reconstruction feature y_hat or the residual feature r_hat, and if the residual feature r_hat is obtained, the initial reconstruction feature y_hat may be further determined based on the residual feature r_hat and the predicted value mu. Alternatively, a quantized image feature is decoded from the bitstream, the quantized image feature is dequantized to obtain an image feature s', feature restoration is performed on the image feature s' to obtain an initial reconstruction feature y_hat or a residual feature r_hat, and if the residual feature r_hat is obtained, the initial reconstruction feature y_hat may be further determined based on the residual feature r_hat and the predicted value mu.

After the initial reconstruction feature y_hat is obtained, the initial reconstruction feature y_hat may be input to the feature-domain enhancement module, the feature-domain enhancement module performs feature-domain enhancement on the initial reconstruction feature y_hat to obtain an enhanced reconstruction feature y_hat_enhanced, the enhanced reconstruction feature y_hat_enhanced is input to the synthesis transform net, and the synthesis transform net performs synthesis transform on the enhanced reconstruction feature y_hat_enhanced to obtain a target reconstructed image block x_hat_enhanced corresponding to the current image block x.

Embodiment 6: On the basis of Embodiment 3 and Embodiment 4, a feature-domain enhancement module may be added before the synthesis transform net, a filtering enhancement module may be added after the synthesis transform net, and the filtering enhancement module may include a luma edge enhancement module and a chroma filtering enhancement module. As shown in FIG. 6B, the input feature of the feature-domain enhancement module may be an initial reconstruction feature y_hat, the output feature of the feature-domain enhancement module is an enhanced reconstruction feature y_hat_enhanced, the enhanced reconstruction feature y_hat_enhanced may be input to a synthesis transform net, and the synthesis transform net performs synthesis transform on the enhanced reconstruction feature y_hat_enhanced to obtain an initial reconstructed image block x_hat corresponding to the current image block x. An input feature of the filtering enhancement module may be the initial reconstructed image block x_hat, and an output feature of the filtering enhancement module may be the target reconstructed image block x_hat_enhanced. For example, the initial reconstructed image block x_hat includes an initial reconstructed luma block x_Y_hat and an initial reconstructed chroma block x_UV_hat. The luma edge enhancement module performs luma edge enhancement on the initial reconstructed luma block x_Y_hat to obtain a target reconstructed luma block x_Y_hat_enhanced. The chroma filtering enhancement module performs chroma filtering enhancement on the initial reconstructed chroma block x_UV_hat to obtain a target reconstructed chroma block x_UV_hat_enhanced. Then, the target reconstructed luma block x_Y_hat_enhanced and the target reconstructed chroma block x_UV_hat_enhanced are combined to obtain the target reconstructed image block x_hat_enhanced.

For the encoder, analysis transformation is performed on the current image block x by using an analysis transformation network, to obtain the image feature y corresponding to the current image block x. Coefficient hyperparameter feature transformation is performed on the image feature y by using a hyperparameter encoding network, to obtain a coefficient hyperparameter feature z. The coefficient hyperparameter feature corresponding to the current image block is encoded to obtain the bitstream corresponding to the current image block. The bitstream corresponding to the current image block is decoded to obtain the coefficient hyperparameter feature z_hat corresponding to the current image block, and inverse transformation is performed on the coefficient hyperparameter feature z_hat by using the probability hyperparameter decoding network, to obtain the probability-distribution parameter sigma. The initial image feature corresponding to the current image block is encoded based on the probability-distribution parameter sigma, to obtain a bitstream corresponding to the current image block. The bitstream corresponding to the current image block is decoded based on the probability-distribution parameter sigma, to obtain the initial reconstruction feature y_hat corresponding to the current image block. The above process may refer to Embodiment 5, which will not be repeated here.

After the initial reconstruction feature y_hat is obtained, the initial reconstruction feature y_hat may be input to the feature-domain enhancement module, the feature-domain enhancement module performs feature-domain enhancement on the initial reconstruction feature y_hat to obtain an enhanced reconstruction feature y_hat_enhanced, the enhanced reconstruction feature y_hat_enhanced is input to the synthesis transform net, and the synthesis transform net performs synthesis transform on the enhanced reconstruction feature y_hat_enhanced to obtain an initial reconstructed image block x_hat corresponding to the current image block x, where the initial reconstructed image block x_hat includes an initial reconstructed luma block x_Y_hat and an initial reconstructed chroma block x_UV_hat.

After obtaining the initial reconstructed luma image block x_Y_hat corresponding to the current image block x, the luma edge enhancement module performs luma edge enhancement on the initial reconstructed luma image block x_Y_hat to obtain the target reconstructed luma image block x_Y_hat_enhanced. After obtaining the initial reconstructed chroma block x_UV_hat corresponding to the current image block x, the chroma filtering enhancement module performs chroma filtering enhancement on the initial reconstructed chroma block x_UV_hat to obtain the target reconstructed chroma block x_UV_hat_enhanced. Then, the target reconstructed luma block x_Y_hat_enhanced and the target reconstructed chroma block x_UV_hat_enhanced are combined, to obtain the target reconstructed image block x_hat_enhanced corresponding to the current image block x.

For the decoder, the decoder decodes the bitstream corresponding to the current image block to obtain the coefficient hyperparameter feature z_hat corresponding to the current image block, and performs inverse transformation on the coefficient hyperparameter feature z_hat by using the probability hyperparameter decoding network, to obtain the probability-distribution parameter sigma. The bitstream corresponding to the current image block is decoded based on the probability-distribution parameter sigma, to obtain the initial reconstruction feature y_hat corresponding to the current image block. The above process may refer to Embodiment 5, which will not be repeated here.

After the initial reconstruction feature y_hat is obtained, the initial reconstruction feature y_hat may be input to the feature-domain enhancement module, the feature-domain enhancement module performs feature-domain enhancement on the initial reconstruction feature y_hat to obtain an enhanced reconstruction feature y_hat_enhanced, the enhanced reconstruction feature y_hat_enhanced is input to the synthesis transform net, and the synthesis transform net performs synthesis transform on the enhanced reconstruction feature y_hat_enhanced to obtain an initial reconstructed image block x_hat corresponding to the current image block x, where the initial reconstructed image block x_hat includes an initial reconstructed luma block x_Y_hat and an initial reconstructed chroma block x_UV_hat.

After obtaining the initial reconstructed luma image block x_Y_hat corresponding to the current image block x, the luma edge enhancement module performs luma edge enhancement on the initial reconstructed luma image block x_Y_hat to obtain the target reconstructed luma image block x_Y_hat_enhanced. After obtaining the initial reconstructed chroma block x_UV_hat corresponding to the current image block x, the chroma filtering enhancement module performs chroma filtering enhancement on the initial reconstructed chroma block x_UV_hat to obtain the target reconstructed chroma block x_UV_hat_enhanced. Then, the target reconstructed luma block x_Y_hat_enhanced and the target reconstructed chroma block x_UV_hat_enhanced are combined, to obtain the target reconstructed image block x_hat_enhanced corresponding to the current image block x.

Embodiment 7: On the basis of Embodiment 3 and Embodiment 4, a filtering enhancement module may be added after the synthesis transform net, and the filtering enhancement module may include a luma edge enhancement module and a chroma filtering enhancement module. As shown in FIG. 6C, an input feature of the filtering enhancement module may be the initial reconstructed image block x_hat, and an output feature of the filtering enhancement module may be the target reconstructed image block x_hat_enhanced. For example, the initial reconstructed image block x_hat may include an initial reconstructed luma block x_Y_hat and an initial reconstructed chroma block x_UV_hat. The luma edge enhancement module performs luma edge enhancement on the initial reconstructed luma block x_Y_hat to obtain a target reconstructed luma block x_Y_hat_enhanced. The chroma filtering enhancement module performs chroma filtering enhancement on the initial reconstructed chroma block x_UV_hat to obtain a target reconstructed chroma block x_UV_hat_enhanced. Then, the target reconstructed luma block x_Y_hat_enhanced and the target reconstructed chroma block x_UV_hat_enhanced may be combined, to obtain the target reconstructed image block x_hat_enhanced corresponding to the current image block x.

For the encoder, analysis transformation is performed on the current image block x by using an analysis transformation network, to obtain the image feature y corresponding to the current image block x. Coefficient hyperparameter feature transformation is performed on the image feature y by using a hyperparameter encoding network, to obtain a coefficient hyperparameter feature z. The coefficient hyperparameter feature corresponding to the current image block is encoded to obtain the bitstream corresponding to the current image block. The bitstream corresponding to the current image block is decoded to obtain the coefficient hyperparameter feature z_hat corresponding to the current image block, and inverse transformation is performed on the coefficient hyperparameter feature z_hat by using the probability hyperparameter decoding network, to obtain the probability-distribution parameter sigma. The initial image feature corresponding to the current image block is encoded based on the probability-distribution parameter sigma, to obtain a bitstream corresponding to the current image block. The bitstream corresponding to the current image block is decoded based on the probability-distribution parameter sigma, to obtain the initial reconstruction feature y_hat corresponding to the current image block. The above process may refer to Embodiment 5, which will not be repeated here.

After the initial reconstruction feature y_hat is obtained, the initial reconstruction feature y_hat is input to a synthesis transform net (different from Embodiment 5 or 6, the enhanced reconstruction feature y_hat_enhanced is not input to the synthesis transform net herein), and the synthesis transform net performs synthesis transform on the initial reconstruction feature y_hat to obtain an initial reconstructed image block x_hat corresponding to the current image block x, where the initial reconstructed image block x_hat includes an initial reconstructed luma block x_Y_hat and an initial reconstructed chroma block x_UV_hat.

After obtaining the initial reconstructed luma image block x_Y_hat corresponding to the current image block x, the luma edge enhancement module performs luma edge enhancement on the initial reconstructed luma image block x_Y_hat to obtain the target reconstructed luma image block x_Y_hat_enhanced. After obtaining the initial reconstructed chroma block x_UV_hat corresponding to the current image block x, the chroma filtering enhancement module performs chroma filtering enhancement on the initial reconstructed chroma block x_UV_hat to obtain the target reconstructed chroma block x_UV_hat_enhanced. Then, the target reconstructed luma block x_Y_hat_enhanced and the target reconstructed chroma block x_UV_hat_enhanced are combined, to obtain the target reconstructed image block x_hat_enhanced corresponding to the current image block x.

For the decoder, the decoder decodes the bitstream corresponding to the current image block to obtain the coefficient hyperparameter feature z_hat corresponding to the current image block, and performs inverse transformation on the coefficient hyperparameter feature z_hat by using the probability hyperparameter decoding network, to obtain the probability-distribution parameter sigma. The bitstream corresponding to the current image block is decoded based on the probability-distribution parameter sigma, to obtain the initial reconstruction feature y_hat corresponding to the current image block. The above process may refer to Embodiment 5, which will not be repeated here.

After the initial reconstruction feature y_hat is obtained, the initial reconstruction feature y_hat is input to the synthesis transform net, and the synthesis transform net performs synthesis transform on the initial reconstruction feature y_hat to obtain an initial reconstructed image block x_hat corresponding to the current image block x, where the initial reconstructed image block x_hat includes an initial reconstructed luma block x_Y_hat and an initial reconstructed chroma block x_UV_hat.

After obtaining the initial reconstructed luma image block x_Y_hat corresponding to the current image block x, the luma edge enhancement module performs luma edge enhancement on the initial reconstructed luma image block x_Y_hat to obtain the target reconstructed luma image block x_Y_hat_enhanced. After obtaining the initial reconstructed chroma block x_UV_hat corresponding to the current image block x, the chroma filtering enhancement module performs chroma filtering enhancement on the initial reconstructed chroma block x_UV_hat to obtain the target reconstructed chroma block x_UV_hat_enhanced. Then, the target reconstructed luma block x_Y_hat_enhanced and the target reconstructed chroma block x_UV_hat_enhanced are combined, to obtain the target reconstructed image block x_hat_enhanced corresponding to the current image block x.

Embodiment 8: In Embodiment 5 and Embodiment 6, an initial reconstruction feature y_hat is input to a feature-domain enhancement module, and the feature-domain enhancement module performs feature-domain enhancement on the initial reconstruction feature y_hat to obtain an enhanced reconstruction feature y_hat_enhanced, e.g., the feature-domain enhancement may be performed on the initial reconstruction feature y_hat based on a feature-domain enhancement parameter corresponding to a current image block and a probability-distribution parameter sigma to obtain an enhanced reconstruction feature y_hat_enhanced, where the feature-domain enhancement may include feature-adaptive edge enhancement and feature-adaptive stretching, and the probability-distribution parameter sigma is used for auxiliary calculation, to determine a channel that needs feature-adaptive edge enhancement and a channel that needs feature-adaptive stretching, and determine stretching intensity, and this process is described below.

The initial reconstruction feature y_hat may be a three-dimensional tensor with a size of $C_L \times H_L \times W_L$, where $C_L$ represents the number of channels of the initial reconstruction feature y_hat (i.e., the number of channels of the feature-domain and the number of channels of the Latent domain), $H_L$ represents the feature height of the initial reconstruction feature y_hat (i.e., the feature height of the feature-domain and the feature height of the Latent domain), and $W_L$ represents the feature width of the initial reconstruction feature y_hat (i.e., the feature width of the feature-domain and the feature width of the Latent domain). For each channel of the initial reconstruction feature y_hat, a channel ch is used as an example for description, where ch may be any value in [1,2, ..., $C_L$], and a shape corresponding to the channel ch may be a two-dimensional tensor y_hat_ch with a size of $H_L \times W_L$, which is referred to as a feature channel map. Thus, the initial reconstruction feature y_hat may include $C_L$ feature channel maps.

The probability-distribution parameter sigma may also be a three-dimensional tensor with a size of $C_L \times H_L \times W_L$, where $C_L$ represents the number of channels of the probability-distribution parameter sigma, $H_L$ represents the feature height of the probability-distribution parameter sigma, and $W_L$ represents the feature width of the probability-distribution parameter sigma. For each channel of the probability-distribution parameter sigma, a channel ch is used as an example for description, where ch may be any value in [1,2, ..., $C_L$], and a shape corresponding to the channel ch may be a two-dimensional tensor sigma_ch with a size of $H_L \times W_L$, which is referred to as a probability distribution channel map; therefore, the probability-distribution parameter sigma may include $C_L$ probability distribution channel maps, and $C_L$ probability distribution channel maps are in a one-to-one correspondence with $C_L$ feature channel maps, e.g., the first probability distribution channel map corresponds to the first feature channel map, the second probability distribution channel map corresponds to the second feature channel map, and similarly, and the $C_L$-th probability distribution channel map corresponds to the $C_L$-th feature channel map.

For the $C_L$ feature channel maps, the $C_L$ feature channel maps may be divided into important feature channel maps and non-important feature channel maps, there may be at least one important feature channel map, and there may be a plurality of non-important feature channel maps, e.g., at least one feature channel map may be selected from the $C_L$ feature channel maps as an important feature channel map, and the remaining feature channel maps are selected as non-important feature channel maps. Because the $C_L$ probability-distribution channel maps are in a one-to-one correspondence with the $C_L$ feature channel maps, probability-distribution channel maps corresponding to important feature channel maps may be selected as important probability-distribution channel maps, and probability-distribution channel maps corresponding to non-important feature channel maps may be selected as non-important probability-distribution channel maps. For example, if the first feature channel map is an important feature channel map, the first probability-distribution channel map corresponding to the first feature channel map is selected as the important probability-distribution channel map.

In summary, the initial reconstruction feature y_hat may include an important feature channel map and a non-important feature channel map, and the probability-distribution parameter sigma may include an important probability-distribution channel map corresponding to the important feature channel map and a non-important probability-distribution channel map corresponding to the non-important feature channel map. For the important feature channel map, feature-adaptive edge enhancement may be performed on the important feature channel map based on the feature-domain enhancement parameter and the important probability-distribution channel map to obtain the first reconstruction feature after the feature-adaptive edge enhancement. For the non-important feature channel map, feature-adaptive stretching may be performed on the non-important feature channel map based on the feature-domain enhancement parameter and the non-important probability-distribution channel map to obtain the second reconstruction feature after the feature-adaptive stretching. On this basis, the enhanced reconstruction feature y_hat_enhanced may be generated based on the first reconstruction feature and the second reconstruction feature.

For example, assuming that the feature channel map 1 is an important feature channel map, the feature channel map 2 to the feature channel map 4 are non-important feature channel maps, the probability-distribution channel map 1 is an important probability-distribution channel map, and the probability-distribution channel map 2 to the probability-distribution channel map 4 are non-important probability-distribution channel maps, feature-adaptive edge enhancement may be performed on the feature channel map 1 based on the feature-domain enhancement parameter and the probability-distribution channel map 1, to obtain the first reconstruction feature 1 (i.e., the reconstruction feature of the first channel) after the feature-adaptive edge enhancement. Feature-adaptive stretching may be performed on the feature channel map 2 based on the feature-domain enhancement parameter and the probability-distribution channel map 2, to obtain the second reconstruction feature 2 (i.e., the reconstruction feature of the second channel) after the feature-adaptive stretching. The feature-adaptive stretching may be performed on the feature channel map 3 based on the feature-domain enhancement parameter and the probability-distribution channel map 3 to obtain the second reconstruction feature 3 after the feature-adaptive stretching. Feature-adaptive stretching may be performed on the feature channel map 4 based on the feature-domain enhancement parameter and the probability-distribution channel map 4, to obtain the second reconstruction feature 4 after the feature-adaptive stretching. Then, the first reconstruction feature 1, the second reconstruction feature 2, the second reconstruction feature 3, and the second reconstruction feature 4 may be combined according to channels (e.g., by channel concatenation), i.e., the reconstruction features of the four channels are combined to obtain the enhanced reconstruction feature y_hat_enhanced.

Embodiment 9: In Embodiment 8, $C_L$ feature channel maps need to be divided into important feature channel maps and non-important feature channel maps, for example, $C_L$ feature channel maps are divided into important feature channel maps and non-important feature channel maps using the approach described below.

Approach 1: The encoder encodes the important channel identifier in the bitstream corresponding to the current image block, and the decoder decodes the important channel identifier in the bitstream corresponding to the current image block, so that the decoder may obtain the important channel identifier.

For example, the encoder divides the $C_L$ feature channel maps into an important feature channel map and a non-important feature channel map, which is not limited in the process, encodes an important channel identifier (also referred to as an important channel number, denoted as important_channel) in the bitstream corresponding to the current image block, and after receiving the bitstream, the decoder decodes the important channel identifier from the bitstream, selects a feature channel map corresponding to the important channel identifier from the $C_L$ feature channel maps as an important feature channel map, selects a remaining feature channel map as a non-important feature channel map, selects a probability-distribution channel map corresponding to the important feature channel map as an important probability-distribution channel map, and selects a probability-distribution channel map corresponding to the non-important feature channel map as a non-important probability-distribution channel map.

When dividing the $C_L$ feature channel maps into the important feature channel map and the non-important feature channel map, the encoder may select the important feature channel map from the $C_L$ feature channel maps based on the feature value in each feature channel map and the probability distribution value in each probability-distribution channel map, and select the remaining feature channel maps as non-important feature channel maps.

Approach 2: For both the encoder and the decoder, an important feature channel map is selected from the $C_L$ feature channel maps based on a feature value in each feature channel map and a probability distribution value in each probability-distribution channel map.

For example, for each feature channel map, the number of consumed bits corresponding to the feature channel map may be determined based on a feature value in the feature channel map and a probability distribution value in a probability-distribution channel map corresponding to the feature channel map. For example, the following expression may be used to determine the number of consumed bits corresponding to the feature channel map.

$$\text{bits\_per\_ch} = \sum_{1 \le j \le HL} \sum_{1 \le i \le WL} -log2(\Phi(\frac{\text{y\_hat\_ch}(i,j)+0.5}{\text{sigma\_ch}(i,j)}) - \Phi(\frac{\text{y\_hat\_ch}(i,j)-0.5}{\text{sigma\_ch}(i,j)}))$$

In the foregoing expression, bits_per_ch may be used to represent the number of consumed bits corresponding to a feature channel map ch, y_hat_ch(i,j) may be used to represent a feature value of a feature point (i, j) in a feature channel map ch, sigma_ch(i, j) may be used to represent a probability distribution value of a feature point (i, j) in a probability-distribution channel map ch, and $\Phi(.)$ may be a standard normal distribution cumulative function.

After the foregoing processing is performed on each feature channel map, the number of consumed bits corresponding to each feature channel map may be obtained, and an important feature channel map may be selected from the $C_L$ feature channel maps based on the number of consumed bits corresponding to each feature channel map, e.g., a feature channel map with the largest number of consumed bits is used as an important feature channel map, or K feature channel maps with a larger number of consumed bits are used as important feature channel maps, where K may be a positive integer greater than 1.

After the important feature channel maps are selected from the $C_L$ feature channel maps, the remaining feature channel maps may be selected as the non-important feature channel maps, the probability-distribution channel maps corresponding to the important feature channel maps are selected as the important probability-distribution channel maps, and the probability-distribution channel maps corresponding to the non-important feature channel maps are selected as the non-important probability-distribution channel maps.

Approach 3: For both the encoder and the decoder, an important feature channel map is selected from the $C_L$ feature channel maps based on the consumption bitrate corresponding to each feature channel map. For example, based on the consumed bitrate corresponding to each feature channel map, the $C_L$ feature channel maps may be sorted in descending order of consumed bitrates, and K feature channel maps ranked first are selected as important feature channel maps. Alternatively, based on the consumption bitrate corresponding to each feature channel map, the $C_L$ feature channel maps may be sorted in ascending order of the consumption bitrates, and K feature channel maps sorted later are selected as important feature channel maps.

After the important feature channel maps are selected from the $C_L$ feature channel maps, the remaining feature channel maps may be selected as the non-important feature channel maps, the probability-distribution channel maps corresponding to the important feature channel maps are selected as the important probability-distribution channel maps, and the probability-distribution channel maps corresponding to the non-important feature channel maps are selected as the non-important probability-distribution channel maps.

Approach 4: For both the encoder and the decoder, a default feature channel map (i.e., a fixed feature channel map) is used as the important feature channel map, e.g., the first feature channel map is pre-agreed as the important feature channel map, or a sixth feature channel map is pre-agreed as the important feature channel map, or a 10th feature channel map is pre-agreed as the important feature channel map, and so on. Of course, any feature channel map may be regarded as an important feature channel map, which is not limited.

Approach 5: The encoder encodes the important channel identifier in the bitstream corresponding to the current image block, and the decoder decodes the important channel identifier in the bitstream corresponding to the current image block, so that the decoder can obtain the important channel identifier.

For example, the encoder divides the $C_L$ feature channel maps into an important feature channel map and a non-important feature channel map, and encodes an important channel identifier in a bitstream corresponding to the current image block. After receiving the bitstream, the decoder decodes an important channel identifier from the bitstream, selects a feature channel map corresponding to the important channel identifier from the $C_L$ feature channel maps as an important feature channel map, selects a remaining feature channel map as a non-important feature channel map, selects a probability-distribution channel map corresponding to the important feature channel map as an important probability-distribution channel map, and selects a probability-distribution channel map corresponding to the non-important feature channel map as a non-important probability-distribution channel map. When dividing the $C_L$ feature channel maps into the important feature channel map and the non-important feature channel map, the encoder may determine the important feature channel map and the important channel identifier in the following manner based on the feature variance scale_hat.

LinearToLog is a mapping table, and the feature variance scale_hat may be mapped to the log-domain feature variance logithmic_scale, e.g., logarithmic _scale=LinearToLog(scale _hat).

The logarithmic domain feature variance logarithmic_scale_channel corresponding to a certain feature channel is obtained by slicing along the channel dimension.

A logarithmic variance sum corresponding to each feature channel sum_per_channel is calculated based on the logarithmic_scale_channel:

$$\text{sum\_per\_channel} = \sum_{1 \le j \le HL} \sum_{1 \le i \le WL} \text{logarithmic\_scale\_channe}[i, j]$$

The foregoing process is repeated a total of $C_L$ times, where $C_L$ is the number of channels of logarithmic_scale, so as to obtain a logarithmic variances sum sum_per_channel corresponding to each feature channel, and then, the channel sequence number corresponding to the maximum sum_per_channel is selected as the important channel identifier important_channel, and a feature channel corresponding to the important channel identifier important_channel is the important feature channel map

Embodiment 10: In Embodiment 8, feature-adaptive edge enhancement is performed on the important feature channel map based on the feature-domain enhancement parameter and the important probability-distribution channel map, to obtain the first reconstruction feature, and a feature-adaptive edge enhancement process is described below.

For example, the feature-domain enhancement parameter may include a plurality of edge enhancement segment intensity values and a plurality of edge enhancement segment thresholds. For example, the encoder encodes the plurality of edge enhancement segment intensity values and the plurality of edge enhancement segment thresholds in the bitstream corresponding to the current image block, and the decoder decodes the plurality of edge enhancement segment intensity values and the plurality of edge enhancement segment thresholds from the bitstream corresponding to the current image block, where the plurality of edge enhancement segment intensity values and the plurality of edge enhancement segment thresholds are used as the feature-domain enhancement parameters.

The number of edge enhancement segment intensity values may be the same as or different from the number of edge enhancement segment thresholds. The encoder may further encode the number of edge enhancement segment intensity values (or edge enhancement segment thresholds) in the bitstream corresponding to the current image block, and the decoder may further decode the number of edge enhancement segment intensity values from the bitstream corresponding to the current image block. For example, the number of edge enhancement segment intensity values is the same as the number of edge enhancement segment thresholds, and the number of edge enhancement segment intensity values is n, the n edge enhancement segment intensity values may be denoted as magl-1, magl-2, ..., and magl-n, and the n edge enhancement segment thresholds may be denoted as thrl-1, thrl-2, ..., and thrl-n.

For example, a plurality of edge enhancement segment thresholds may form a plurality of edge enhancement threshold intervals, and the plurality of edge enhancement threshold intervals are in a one-to-one correspondence with a plurality of edge enhancement segment intensity values.

Table 1

| Edge Enhancement Threshold Interval | Edge Enhancement Segment intensity value |
|---|---|
| less than thrl-1 | 1( i.e., no edge enhancement) |
| [thrl-1,thrl-2) | magl-1 |
| [thrl-2,thrl-3) | magl-2 |
| [thrl-3,thrl-4) | magl-3 |
| ... | ... |
| [thrl-(n-1),thrl-n) | magl-(n-1) |
| greater than or equal to thrl-n | magl-n |

For example, the important probability-distribution channel map may include a plurality of probability distribution values, and for each probability distribution value, the edge enhancement threshold interval corresponding to the probability distribution value is first determined, and then the edge enhancement segment intensity value corresponding to the probability distribution value is determined based on the edge enhancement threshold interval. For example, if the probability distribution value is within [thrl-2, thrl-3), the edge enhancement segment intensity value corresponding to the probability distribution value is magl-2; if the probability distribution value is within [thrl-3, thrl-4), the edge enhancement segment intensity value corresponding to the probability distribution value is magl-3; and so on. After the respective edge enhancement segment intensity values of each of the probability distribution values is obtained, feature-adaptive edge enhancement may be performed on the important feature channel map based on the respective edge enhancement segment intensity values of each of the probability distribution values, to obtain the first reconstruction feature after the feature-adaptive edge enhancement.

For example, the following step S11-S14 may be used to perform feature-adaptive edge enhancement on the important feature channel map.

Step S11, the important feature channel map is normalized to obtain a normalized feature map.

For example, normalization may be performed based on the important feature channel map, the mean feature corresponding to the important feature channel map, and the variance feature corresponding to the important feature channel map, to obtain the normalized feature map. For example, the mean feature may be subtracted from the important channel feature map, and then divided by the variance feature to obtain the normalized feature map. For another example, the mean feature may be subtracted from the important channel feature map, then divided by the variance feature to obtain an intermediate feature, and then the intermediate feature is converted to obtain the normalized feature map, e.g., the intermediate feature is multiplied by 0.1 and added to 0.5(0.1 and 0.5 are both examples), and then the feature value is limited to be between 0 and 1. Of course, the above are only several examples of normalizing the important feature channel map, and the normalization manner is not limited.

Step S12, a high-frequency detail image is generated based on the important feature channel map and the normalized feature map.

For example, a convolution operation (e.g., a two-dimensional convolution operation) may be performed on the normalized feature map and a Gaussian blur convolution kernel (which may be a convolution kernel of 3*3 or a convolution kernel of another size, and the convolution kernel is not limited thereto) to obtain a Gaussian blur image, and then the Gaussian blur image is subtracted from the important feature channel map to obtain the high-frequency detail image. Of course, the above is only an example of generating the high-frequency detail image, as long as the high-frequency detail of the important feature channel map can be obtained, which is not limited.

For example, for each value in the Gaussian blur convolution kernel, the denominator of the value may be a power of 2, e.g., 2, 4, 8, 16, 32, 64 or 128. The Gaussian blur convolution kernel may be a convolution kernel of N*N, N may be a positive integer, and if a value of N is 3, i.e., the Gaussian blur convolution kernel is a convolution kernel of 3*3, the Gaussian blur convolution kernel may include but is not limited to:

$$\begin{bmatrix} \dfrac{A}{M} & \dfrac{A}{M} & \dfrac{A}{M} \\ \dfrac{A}{M} & \dfrac{B}{M} & \dfrac{A}{M} \\ \dfrac{A}{M} & \dfrac{A}{M} & \dfrac{A}{M} \end{bmatrix};$$

A is a positive integer, B is a positive integer, and M is a power of 2, e.g., M may be 2, 4, 8, 16, 32, 64 or 128. For example, A may be 5, B may be 24, and M may be 64.

Step S13: For each feature value in the high-frequency detail image, edge enhancement is performed on the feature value based on the edge enhancement segment intensity value corresponding to the probability distribution value corresponding to the feature value, to obtain an edge-enhanced feature value.

For example, the important feature channel map includes a plurality of feature values, the important probability-distribution channel map includes a plurality of probability distribution values, the plurality of probability distribution values are in a one-to-one correspondence with the plurality of feature values, and because the high-frequency detail image includes a plurality of feature values (in a one-to-one correspondence with the plurality of feature values of the important feature channel map), the plurality of probability distribution values of the important probability-distribution channel map are in a one-to-one correspondence with the plurality of feature values of the high-frequency detail image. Based on this, for each feature value in the high-frequency detail image, the probability distribution value corresponding to the feature value can be determined from the important probability distribution channel map, and the edge enhancement threshold interval corresponding to the probability distribution value can be determined, based on which the edge enhancement segment intensity value corresponding to the probability distribution value is determined.

After the edge enhancement segment intensity value corresponding to the probability distribution value is obtained, edge enhancement may be performed on the feature value based on the edge enhancement segment intensity value to obtain the edge-enhanced feature value, e.g., the feature value is multiplied by the edge enhancement segment intensity value (such as magl-1 or magl-2) to obtain the edge-enhanced feature value. If the edge enhancement threshold interval is "less than thrl-1", the feature value is multiplied by 1, i.e., the feature value remains unchanged, and edge enhancement is not performed on the feature value. If the edge enhancement threshold interval is [thrl-1, thrl-2), the feature value is multiplied by magl-1, and magl-1 is a value greater than 1, so as to perform edge enhancement on the feature value.

For each feature value in the high-frequency detail image, the edge enhancement segment intensity value corresponding to the feature value may be obtained in the above manner, and then the edge-enhanced feature map is determined based on the edge-enhanced feature value corresponding to each feature value, e.g., the edge enhancement segment intensity values corresponding to all feature values may be combined to obtain the edge-enhanced feature map.

Step S14: Inverse normalization is performed on the edge-enhanced feature map to obtain the first reconstruction feature (i.e., the first reconstruction feature map), where the first reconstruction feature is a reconstruction feature map obtained after feature-adaptive edge enhancement is performed on the important feature channel map.

After the edge-enhanced feature map is obtained, the edge-enhanced feature map may be directly inverse normalized to obtain the first reconstruction feature. Alternatively, after the edge-enhanced feature map is obtained, the edge-enhanced feature map and the normalized feature map may be added to obtain a corrected edge-enhanced feature map, and the corrected edge-enhanced feature map is inverse normalized to obtain the first reconstruction feature.

For example, the normalized edge-enhanced feature map can be determined based on the edge-enhanced feature map, and the first reconstruction feature (also referred to as y_hat_sharp) can be determined based on the normalized edge-enhanced feature map, the corresponding mean feature, and the corresponding variance feature of the normalized edge-enhanced feature map.

For example, the edge-enhanced feature map may be converted to obtain the normalized edge-enhanced feature map, e.g., the feature value in the edge-enhanced feature map is first limited to be between 0 and 1, and then the feature value in the edge-enhanced feature map is subtracted by 0.5 and divided by 10 (both 0.5 and 10 are examples) to obtain the normalized edge-enhanced feature map.

The normalized edge-enhanced feature map is multiplied by the variance feature, and then the mean feature is added to obtain an edge-enhanced feature map corresponding to the important feature channel map, and the edge-enhanced feature map is recorded as the first reconstruction feature y_hat_sharp.

Certainly, the foregoing is merely an example of performing inverse normalization on the edge-enhanced feature map, and a manner of the inverse normalization is not limited.

In a possible implementation, the encoder needs to encode the plurality of edge enhancement segment intensity values and the plurality of edge enhancement segment thresholds in the bitstream corresponding to the current image block, and for this process, the encoder may use the following approach.

The encoder may configure a plurality of candidate feature-domain enhancement parameters, for each candidate feature-domain enhancement parameter, the candidate feature-domain enhancement parameter may include a plurality of edge enhancement segment intensity values and a plurality of edge enhancement segment thresholds, may determine a cost value corresponding to each candidate feature-domain enhancement parameter, may select, from all the candidate feature-domain enhancement parameters based on the cost value corresponding to each candidate feature-domain enhancement parameter, a feature-domain enhancement parameter corresponding to the current image block, i.e., a candidate feature-domain enhancement parameter with the smallest cost value, and the encoder may encode the feature-domain enhancement parameter to obtain a bitstream corresponding to the current image block.

For example, for each candidate feature-domain enhancement parameter, feature-domain enhancement may be performed on the initial reconstruction feature based on the candidate feature-domain enhancement parameter and the probability-distribution parameter to obtain an enhanced reconstruction feature, and the feature-domain enhancement process refers to the above embodiment, the target reconstructed image block x_hat_enhanced is determined based on the enhanced reconstruction feature, and the cost value corresponding to the candidate feature-domain enhancement parameter is determined based on the target reconstructed image block x_hat_enhanced, and the method for determining the cost value is not limited.

For example, for each candidate feature-domain enhancement parameter, the candidate feature-domain enhancement parameter includes magl-1, magl-2, ..., magl-n, thrl-1, thrl-2, ..., and thrl-n, an enhanced reconstruction feature may be obtained based on the candidate feature-domain enhancement parameter, and then a target reconstructed image block x_hat_enhanced is obtained, and a distortion metric value of the target reconstructed image block x_hat_enhanced and a distortion metric value of the current image block x are calculated by using the distortion metric. After the distortion metric value corresponding to each candidate feature-domain enhancement parameter is obtained, the candidate feature-domain enhancement parameter corresponding to the smallest distortion metric value may be selected as the feature-domain enhancement parameter corresponding to the current image block, i.e., the optimal feature-domain enhancement parameter, and the encoder encodes the feature-domain enhancement parameter in the bitstream.

Embodiment 11: In Embodiment 8, feature-adaptive stretching needs to be performed on the non-important feature channel map based on the feature-domain enhancement parameter and the non-important probability-distribution channel map (i.e., the non-important probability-distribution channel map corresponding to the non-important feature channel map), to obtain the second reconstruction feature after feature-adaptive stretching. The feature-adaptive stretching process will be described below.

For example, the feature-domain enhancement parameter may include a stretching parameter value, the encoder may encode the stretching parameter value in the bitstream corresponding to the current image block, the decoder may decode the stretching parameter value from the bitstream corresponding to the current image block, the stretching parameter value is used as the feature-domain enhancement parameter, and the stretching parameter value may be denoted as $\rho$.

For example, the non-important feature channel map may include a plurality of feature values, the non-important probability-distribution channel map corresponding to the non-important feature channel map may include a plurality of probability distribution values, and the plurality of probability distribution values are in a one-to-one correspondence with the plurality of feature values. Based on this, for each feature value in the non-important feature channel map, the corresponding stretched feature value can be determined based on the feature value, the stretching parameter value, and the probability distribution value corresponding to the feature value. For example, the stretched feature value corresponding to the feature value may be determined by using the following expression.

$$y\_hat\_scale = y\_hat + \rho * \text{clip3}(\text{sigma} * y\_hat, -0.5, 0.5)$$

In the above expression, y_hat_scale represents the stretched feature value, y_hat represents the feature value in the non-important feature channel map, $\rho$ represents the stretching parameter value, sigma represents the probability distribution value in the non-important probability-distribution channel map, and the probability distribution value corresponds to the feature value y_hat, clip3 is a limit operation for limiting sigma $*$ y_hat between -0.5 and 0.5, and -0.5 and 0.5 are configurable values, which are not limited, e.g., when sigma $*$ y_hat is less than -0.5, sigma $*$ y_hat is limited to -0.5, when sigma $*$ y_hat is greater than 0.5, sigma $*$ y_hat is limited to 0.5, and other values remain unchanged.

After the foregoing processing is performed on each feature value in the non-important feature channel map, a stretched feature value corresponding to each feature value may be obtained, and then the second reconstruction feature (i.e., the second reconstruction feature map) is determined based on the stretched feature value corresponding to each feature value, where the second reconstruction feature is a reconstruction feature map obtained after feature-adaptive stretching is performed on the non-important feature channel map, e.g., the second reconstruction feature (also referred to as y_hat_scale) is obtained by combining the respective stretched feature values of each feature value.

The second reconstruction feature y_hat_scale corresponds to the non-important feature channel map of the initial reconstruction feature y_hat, i.e., the non-important feature channel map is enhanced to obtain the second reconstruction feature y_hat_scale, the first reconstruction feature y_hat_sharp corresponds to the important feature channel map of the initial reconstruction feature y_hat, i.e., the important feature channel map is enhanced to obtain the first reconstruction feature y_hat_sharp, and the second reconstruction feature y_hat_scale and the first reconstruction feature y_hat_sharp are combined to obtain the enhanced reconstruction feature y_hat_enhanced.

In a possible implementation, the encoder needs to encode the stretching parameter value in the bitstream corresponding to the current image block, and for this process, the encoder may use the following manner: The encoder may configure a plurality of candidate stretching parameter values, may determine the cost value corresponding to each candidate stretching parameter value, may select, from all the candidate stretching parameter values based on the cost value corresponding to each candidate stretching parameter value, the stretching parameter value corresponding to the current image block, i.e., a candidate stretching parameter value with the smallest cost value, and the encoder may encode the stretching parameter value, to obtain the bitstream corresponding to the current image block.

For example, for each candidate stretching parameter value, feature-adaptive stretching may be performed on the non-important feature channel map based on the candidate stretching parameter value and the non-important probability-distribution channel map to obtain the second reconstruction feature after the feature-adaptive stretching, then an enhanced reconstruction feature is obtained based on the second reconstruction feature, a target reconstructed image block x_hat_enhanced is determined based on the enhanced reconstruction feature, and a cost value corresponding to the candidate stretching parameter value is determined based on the target reconstructed image block x_hat_enhanced.

For example, for each candidate stretching parameter value, the enhanced reconstruction feature may be obtained based on the candidate stretching parameter value, and then the target reconstructed image block x_hat_enhanced is obtained, and the distortion metric of the target reconstructed image block x_hat_enhanced and the distortion metric value of the current image block x are calculated by using the distortion metric. After obtaining the distortion metric value corresponding to each candidate stretching parameter value, the encoder may select the candidate stretching parameter value corresponding to the smallest distortion metric value as the stretching parameter value corresponding to the current image block, i.e., the optimal stretching parameter value, and the encoder may encode the stretching parameter value in the bitstream.

In another possible implementation, the encoder configures a plurality of candidate feature-domain enhancement parameters, for each candidate feature-domain enhancement parameter, the candidate feature-domain enhancement parameter includes a plurality of edge enhancement segment intensity values, a plurality of edge enhancement segment thresholds, and one stretching parameter value, determines the cost value corresponding to each candidate feature-domain enhancement parameter, selects, from all the candidate feature-domain enhancement parameters based on the cost value corresponding to each candidate feature-domain enhancement parameter, a feature-domain enhancement parameter corresponding to the current image block, i.e., a candidate feature-domain enhancement parameter with the smallest cost value, and encodes the feature-domain enhancement parameter (i.e., the plurality of edge enhancement segment intensity values, the plurality of edge enhancement segment thresholds, and one stretching parameter value), to obtain the bitstream corresponding to the current image block. For example, for each candidate feature-domain enhancement parameter, feature-domain enhancement is performed on the initial reconstruction feature based on the candidate feature-domain enhancement parameter and the probability-distribution parameter to obtain an enhanced reconstruction feature, the target reconstructed image block x_hat_enhanced is determined based on the enhanced reconstruction feature, and the cost value corresponding to the candidate feature-domain enhancement parameter is determined based on the target reconstructed image block x_hat_enhanced.

Embodiment 12: In Embodiment 6 and Embodiment 7, the initial reconstructed image block x_hat is input to the filter enhancement module, and the filter enhancement module enhances the initial reconstructed image block x_hat to obtain the target reconstructed image block x_hat_enhanced corresponding to the current image block x. For example, the initial reconstructed image block x_hat includes an initial reconstructed luma block x_Y_hat and an initial reconstructed chroma block x_UV_hat. The luma edge enhancement module performs luma edge enhancement on the initial reconstructed luma block x_Y_hat to obtain a target reconstructed luma block x_Y_hat_enhanced. The chroma filtering enhancement module performs chroma filtering enhancement on the initial reconstructed chroma block x_UV_hat to obtain a target reconstructed chroma block x_UV_hat_enhanced. The target reconstructed luma block x_Y_hat_enhanced and the target reconstructed chroma block x_UV_hat_enhanced are combined to obtain the target reconstructed image block x_hat_enhanced. The luma edge enhancement process of the luma edge enhancement module will be described below.

For example, the luma edge enhancement module may perform luma edge enhancement on the initial reconstructed luma block x_Y_hat based on the image-domain enhancement parameter and the probability-distribution parameter sigma that correspond to the current image block, to obtain the target reconstructed luma block x_Y_hat_enhanced corresponding to the current image block. The luma edge enhancement module will be described below.

For example, the image-domain enhancement parameter may include a plurality of image-enhancement segment intensity values and a plurality of image-enhancement segment thresholds. For example, the encoder encodes the plurality of image-enhancement segment intensity values and the plurality of image-enhancement segment thresholds in the bitstream corresponding to the current image block, and the decoder decodes the plurality of image-enhancement segment intensity values and the plurality of image-enhancement segment thresholds from the bitstream corresponding to the current image block, and the plurality of image-enhancement segment intensity values and the plurality of image-enhancement segment thresholds are used as the image-domain enhancement parameter.

The number of image-enhancement segment intensity values may be the same as or different from the number of image-enhancement segment thresholds. The encoder may further encode the number of image enhancement segment intensity values (or image-enhancement segment thresholds) in the bitstream corresponding to the current image block, and the decoder may further decode the number of image enhancement segment intensity values from the bitstream corresponding to the current image block. Taking the number of the intensity values of the image enhancement segment being the same as the number of the threshold values of the image enhancement segment, and the number of the intensity values of the image enhancement segment being m as an example, the m intensity values of the image enhancement segment may be denoted as magy-1, magy-2, ..., magy-m, and the m threshold values of the image enhancement segment may be denoted as thry-1, thry-2, ..., thry-m.

For example, a plurality of image-enhancement segment thresholds may form a plurality of image-enhancement threshold intervals, and the plurality of image-enhancement threshold intervals are in a one-to-one correspondence with a plurality of image-enhancement segment intensity values.

Table 2

| image-enhancement threshold interval | Image enhancement segmentation intensity values |
| --- | --- |
| less than thry-1 | 1( i.e., no edge enhancement) |
| [thry-1,thry-2) | magy-1 |
| [thry-2,thry-3) | magy-2 |
| [thry-3,thry-4) | magy-3 |
| ... | ... |
| [thry- (m-1), thry-m) | magy- (m-1) |
| greater than or equal to thry-m | magy-m |

For example, luma edge enhancement may be performed on the initial reconstructed luma block x_Y_hat by using the following steps S21-S24.

Step S21: A target probability-distribution channel map is acquired based on the probability-distribution parameter.

For example, the initial reconstructed luma block x_Y_hat may be a two-dimensional tensor with a size of $H \times W$, where $H$ represents an image height of the initial reconstructed luma block x_Y_hat, and $W$ represents an image width of the initial reconstructed luma block x_Y_hat. The probability-distribution parameter sigma may be a three-dimensional tensor with a size of $C_L \times H_L \times W_L$, where $C_L$ represents the number of channels of probability-distribution parameter sigma, $H_L$ represents a feature height of the probability-distribution parameter sigma, and $W_L$ represents a feature width of the probability-distribution parameter sigma. The image height $H$ of the initial reconstructed luma block x_Y_hat may be greater than the feature height $H_L$ of the probability-distribution parameter sigma, e.g., the image height $H$ is 4 times, 8 times, or 16 times the feature height $H_L$. The image width $W$ of the initial reconstructed luma block x_Y_hat may be greater than the feature width $W_L$ of the probability-distribution parameter sigma, e.g., the image width $W$ is 4 times, 8 times, or 16 times the feature width $W_L$.

To perform luma edge enhancement on the initial reconstructed luma block x_Y_hat by using the probability-distribution parameter, a target probability-distribution channel map needs to be acquired based on the probability-distribution parameter, and the target probability-distribution channel map may be a two-dimensional tensor with a size of $H \times W$.

For example, one probability distribution channel map may be selected from the $C_L$ probability distribution channel maps, and because the probability-distribution parameter sigma includes important probability distribution channel map (one) and non-important probability distribution channel map (a plurality of), one important probability distribution channel map may be selected from the $C_L$ probability distribution channel maps, or one non-important probability distribution channel map may be selected from the $C_L$ probability distribution channel maps.

Then, upsampling is performed on the important probability-distribution channel map to obtain the target probability-distribution channel map, the upsampling manner is not limited, and the size of the target probability-distribution channel map is the same as the size of the initial reconstructed luma block x_Y_hat.

For example, the nearest neighbor upsampling method may be used to upsample the important probability-distribution channel map to obtain the target probability-distribution channel map. For the nearest neighbor upsampling method, a pixel may be selected on the original low-resolution image (i.e., the important probability-distribution channel map) as the center point of the corresponding region on the target high-resolution image (i.e., the target probability-distribution channel map). A value of a pixel closest to the original low-resolution image around the pixel is used as the value of the corresponding pixel in the target high-resolution image. The above process is repeated until all pixels of the target high-resolution image are assigned values.

In summary, the important probability-distribution channel map may be upsampled to the same size as the initial reconstructed luma block x_Y_hat, and the upsampled probability-distribution channel map may be recorded as the target probability-distribution channel map sigma_channel_upscale.

For example, the bitstream corresponding to the current image block may be decoded to obtain the important channel identifier corresponding to the current image block, and certainly, in addition to decoding the important channel identifier from the bitstream, the important channel identifier may also be obtained in another manner, referring to the five implementations of Embodiment 9. On this basis, if the probability-distribution parameter includes a plurality of probability-distribution channel maps, a probability-distribution channel map corresponding to the important channel identifier is selected from the plurality of probability-distribution channel maps as the important probability-distribution channel map; and then the important probability-distribution channel map is upsampled to obtain the target probability-distribution channel map.

Step S22: If the target probability-distribution channel map includes a plurality of probability distribution values, for each of the probability distribution values, determining, based on an image-enhancement threshold interval corresponding to the probability distribution value, an image-enhancement segment intensity value corresponding to the probability distribution value.

For example, the target probability-distribution channel map may include a plurality of probability distribution values, and for each of the probability distribution values, an image-enhancement threshold interval corresponding to the probability distribution value may be first determined, and an image-enhancement segment intensity value corresponding to the probability distribution value is determined based on the image-enhancement threshold interval. For example, if the probability distribution value is within [thry-2, thry-3), the image-enhancement segment intensity value corresponding to the probability distribution value may be magy-2; if the probability distribution value is within [thry-3, thry-4), the image-enhancement segment intensity value corresponding to the probability distribution value may be magy-3, and so on.

Step S23: Luma edge enhancement is performed on the initial reconstructed luma block x_Y_hat based on the respective image-enhancement segment intensity values of each of the probability distribution values, to obtain a target reconstructed luma block x_Y_hat_enhanced corresponding to the current image block.

First, a high-frequency detail image may be generated based on the initial luma reconstruction image block x_Y_hat. For example, a convolution operation (e.g., a two-dimensional convolution operation) may be performed on the initial reconstructed luma block x_Y_hat and a Gaussian blur convolution kernel (which may be a convolution kernel of 3*3 or a convolution kernel of another size, and the convolution kernel is not limited thereto) to obtain a Gaussian blur image, and then the Gaussian blur image is subtracted from the initial reconstructed luma block x_Y_hat to obtain the high-frequency detail image. Certainly, the foregoing is merely an example of generating the high-frequency detail image, provided that the high-frequency detail of the initial reconstructed luma block x_Y_hat can be obtained.

For example, for each value in the Gaussian blur convolution kernel, the denominator of the value may be a power of 2, e.g., 2, 4, 8, 16, 32, 64 or 128. The Gaussian blur convolution kernel may be a convolution kernel of N*N, N may be a positive integer, and if a value of N is 3, i.e., the Gaussian blur convolution kernel is a convolution kernel of 3*3, the Gaussian blur convolution kernel may include but is not limited to:

$$\begin{bmatrix} \dfrac{A}{M} & \dfrac{A}{M} & \dfrac{A}{M} \\ \dfrac{A}{M} & \dfrac{B}{M} & \dfrac{A}{M} \\ \dfrac{A}{M} & \dfrac{A}{M} & \dfrac{A}{M} \end{bmatrix}$$

A may be a positive integer, B may be a positive integer, and M may be a power of 2, e.g., M may be 2, 4, 8, 16, 32, 64 or 128. For example, A may be 5, B may be 24, and M may be 64.

Then, for each feature value in the high-frequency detail image, edge enhancement is performed on the feature value based on the image-enhancement segment intensity value corresponding to the probability distribution value corresponding to the feature value, to obtain an enhanced image feature value. For example, the initial reconstructed luma block x_Y_hat includes a plurality of feature values, the target probability-distribution channel map includes a plurality of probability distribution values, and the plurality of probability distribution values are in a one-to-one correspondence with the plurality of feature values; and because the high-frequency detail image includes a plurality of feature values (in a one-to-one correspondence with the plurality of feature values of the initial reconstructed luma block x_Y_hat), the plurality of probability distribution values of the target probability-distribution channel map are in a one-to-one correspondence with the plurality of feature values of the high-frequency detail image, for each feature value in the high-frequency detail image, a probability distribution value corresponding to the feature value may be determined from the target probability-distribution channel map, an image-enhancement threshold interval corresponding to the probability distribution value is determined, and then an image-enhancement segment intensity value corresponding to the probability distribution value is determined based on the image-enhancement threshold interval.

After the image-enhancement segment intensity value corresponding to the probability distribution value is obtained, edge enhancement may be performed on the feature value based on the image-enhancement segment intensity value to obtain the enhanced image feature value, e.g., the feature value is multiplied by the image-enhancement segment intensity value (e.g., magy-1 or magy-2) to obtain the enhanced image feature value. If the image-enhancement threshold interval is "less than thry-1", the feature value is multiplied by 1, i.e., the feature value remains unchanged, and edge enhancement is not performed on the feature value. If the image-enhancement threshold interval is [thry-1, thry-2), the feature value is multiplied by magy-1, and magy-1 is a value greater than 1, so as to perform edge enhancement on the feature value.

Then, the target reconstructed luma block x_Y_hat_enhanced is determined based on the respective enhanced image feature values of each feature value in the high-frequency detail image. For example, for each feature value in the high-frequency detail image, the enhanced image feature value corresponding to the feature value may be obtained in the above manner, and then the image-enhanced feature map is determined based on the respective enhanced image feature values of each feature value, e.g., the enhanced image feature values corresponding to all the feature values can be combined to obtain an enhanced image feature map. Then, the image-enhanced feature map is added to the initial reconstructed luma block x_Y_hat to obtain a final edge-enhanced image, and then the edge-enhanced image is limited to an image value range to obtain the target reconstructed luma block x_Y_hat_enhanced.

In a possible implementation, the encoder needs to encode the plurality of image enhancement segmentation intensity values and the plurality of image enhancement segmentation thresholds in the bitstream corresponding to the current image block, and for this process, the encoder may use the following manner.

The encoder may configure a plurality of candidate image-domain enhancement parameters, for each candidate image-domain enhancement parameter, the candidate image-domain enhancement parameter may include a plurality of image enhancement segmentation intensity values and a plurality of image enhancement segmentation thresholds, may determine the cost value corresponding to each candidate image-domain enhancement parameter, may select an image-domain enhancement parameter corresponding to the current image block from all candidate image-domain enhancement parameters based on the cost value corresponding to each candidate image-domain enhancement parameter, i.e., a candidate image-domain enhancement parameter with a smallest cost value, and the encoder may encode the image-domain enhancement parameter to obtain a bitstream corresponding to the current image block.

For example, for each candidate image-domain enhancement parameter, luma edge enhancement is performed on the initial reconstructed luma block x_Y_hat based on the candidate image-domain enhancement parameter and the probability-distribution parameter, to obtain the target reconstructed luma block x_Y_hat_enhanced corresponding to the current image block. The target reconstructed image block x_hat_enhanced may be obtained based on the target reconstructed luma block x_Y_hat_enhanced, and then the cost value corresponding to the candidate image-domain enhancement parameter is determined based on the target reconstructed image block x_hat_enhanced, and the determination manner is not limited.

For example, for each candidate image-domain enhancement parameter, the candidate image-domain enhancement parameter includes magy - 1, magy - 2, ..., magy - m, thry - 1, thry - 2, ..., thry - m, the target reconstructed luma block x_Y_hat_enhanced may be obtained based on the candidate image-domain enhancement parameter, and then the target reconstructed image block x_hat_enhanced is obtained based on the target reconstructed luma block x_Y_hat_enhanced, and the distortion metric value between the target reconstructed image block x_hat_enhanced and the current image block x is calculated by using the distortion metric. After the distortion metric value corresponding to each candidate image-domain enhancement parameter is obtained, the candidate image-domain enhancement parameter corresponding to the smallest distortion metric value may be selected as the image-domain enhancement parameter corresponding to the current image block, i.e., the optimal image-domain enhancement parameter, and the encoder may encode the image-domain enhancement parameter in the bitstream.

Embodiment 13: In Embodiment 6 and Embodiment 7, the chroma filtering enhancement module performs chroma filtering enhancement on the initial reconstructed chroma block x_UV_hat to obtain a target reconstructed chroma block x_UV_hat_enhanced. The following describes a chroma filtering enhancement process of the chroma filtering enhancement module. For example, after obtaining the initial reconstructed chroma block x_UV_hat corresponding to the current image block x, the chroma filtering enhancement module may further perform chroma filtering enhancement based on the initial reconstructed luma block x_Y_hat and the initial reconstructed chroma block x_UV_hat, to obtain the target reconstructed chroma block x_UV_hat_enhanced corresponding to the current image block x. The chroma filtering enhancement process will be described below.

First, adaptive upsampling is performed based on the initial reconstructed chroma block x_UV_hat and the initial reconstructed luma block x_Y_hat, to obtain an upsampled reconstructed chroma block, where the resolution of the upsampled reconstructed chroma block is the same as resolution of the initial reconstructed luma block x_Y_hat. For example, the initial reconstructed chroma block x_UV_hat is adaptively upsampled to obtain an upsampled reconstructed chroma block, the upsampled reconstructed chroma block is of a required resolution, e.g., a resolution of the initial reconstructed luma block x_Y_hat, and an adaptive upsampling process is guided by the initial reconstructed luma block x_Y_hat.

Then, cross-channel filtering is performed based on the upsampled reconstructed chroma block and the initial reconstructed luma block x_Y_hat, to obtain a cross-channel filtered reconstructed chroma block. For example, after the upsampled reconstructed chroma block is obtained, cross-channel filtering is performed on the upsampled reconstructed chroma block, to obtain a reconstructed chroma block after first enhancement (i.e., a reconstructed chroma block after cross-channel filtering), and a cross-channel filtering process is guided by the initial reconstructed luma block x_Y_hat.

As shown in FIG. 6D, the upsampled reconstructed chroma block and the initial reconstructed luma block x_Y_hat are subjected to Wavelet Transform (WT), followed by channel-wise concatenation of the transformed features. The concatenated features are then input to a residual block network, which enhances the upsampled reconstructed chroma block, and finally, Inverse Wavelet Transform is applied to obtain the cross-channel filtered reconstructed chroma block. For example, WT may be performed on the upsampled reconstructed chroma block and the initial reconstructed luma block x_Y_hat; the upsampled reconstructed chroma block obtained after the wavelet transform and the initial reconstructed luma block obtained after the wavelet transform are concatenated in a channel dimension; and a feature obtained after the channel dimension connection is input to a residual block network, and inverse wavelet transform is performed on a feature output by the residual block network, to obtain a cross-channel filtered reconstructed chroma block. In this way, image reconstruction quality can be improved.

Then, nonlinear chroma filtering is performed based on the cross-channel filtered reconstructed chroma block and the initial reconstructed luma block x_Y_hat, to obtain a nonlinear chroma-filtered reconstructed chroma block, where the nonlinear chroma-filtered reconstructed chroma block is the target reconstructed chroma block x_UV_hat_enhanced. For example, after the cross-channel filtered reconstructed chroma block is obtained, nonlinear chroma filtering is performed on the cross-channel filtered reconstructed chroma block to obtain the reconstructed chroma block after the second enhancement, and the nonlinear chroma filtering process is guided by the initial reconstructed luma block x_Y_hat. After the reconstructed chroma block after the second enhancement is obtained, the reconstructed chroma block is the target reconstructed chroma block x_UV_hat_enhanced.

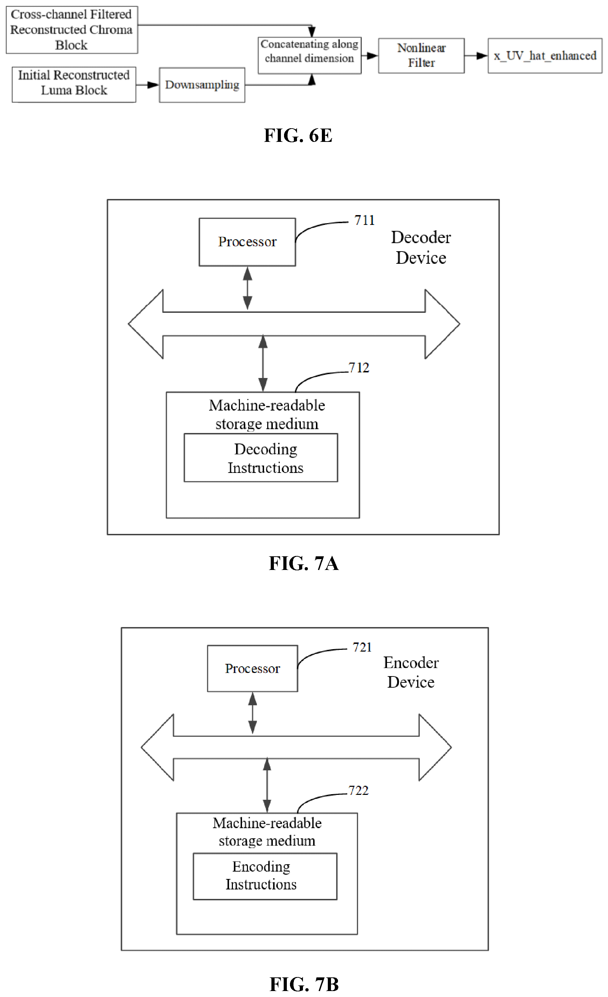

As shown in FIG. 6E, downsampling may be performed on the initial reconstructed luma block x_Y_hat, and then a channel-wise concatenation is performed on a downsampled reconstructed luma block and a cross-channel filtered reconstructed chroma block, where the resolution of the downsampled reconstructed luma block is the same as the resolution of the cross-channel filtered reconstructed chroma block. Then, the channel-wise concatenated feature is input to the nonlinear filter, and then the target reconstructed chroma block x_UV_hat_enhanced is output.

In the foregoing process, cross-channel filtering is performed first and then nonlinear chroma filtering is performed, and to obtain the target reconstructed chroma block x_UV_hat_enhanced, nonlinear chroma filtering may be performed first and then cross-channel filtering, or only cross-channel filtering (nonlinear chroma filtering is not performed) may be performed, or only nonlinear chroma filtering (cross-channel filtering is not performed) may be performed, which is not limited, provided that x_UV_hat_enhanced can be obtained through filtering.

Embodiment 14: In Embodiment 6 and Embodiment 7, the chroma filtering enhancement module performs chroma filtering enhancement on the initial reconstructed chroma block x_UV_hat to obtain a target reconstructed chroma block x_UV_hat_enhanced. The following describes a chroma filtering enhancement process of the chroma filtering enhancement module. For example, after obtaining the initial reconstructed chroma block x_UV_hat corresponding to the current image block x, the chroma filtering enhancement module may perform chroma filtering enhancement based on the target reconstructed luma block x_Y_hat_enhanced and the initial reconstructed chroma block x_UV_hat, to obtain the target reconstructed chroma block x_UV_hat_enhanced corresponding to the current image block x.

First, adaptive upsampling is performed based on the initial reconstructed chroma block x_UV_hat and the target reconstructed luma block x_Y_hat_enhanced, to obtain an upsampled reconstructed chroma block, where resolution of the upsampled reconstructed chroma block is the same as resolution of the target reconstructed luma block x_Y_hat_enhanced. For example, the initial reconstructed chroma block x_UV_hat is adaptively upsampled to obtain an upsampled reconstructed chroma block, of which the resolution is, e.g., a resolution of the target reconstructed luma block x_Y_hat_enhanced, and the adaptive upsampling process is guided by the target reconstructed luma block x_Y_hat_enhanced.

Then, cross-channel filtering is performed based on the upsampled reconstructed chroma block and the target reconstructed luma block x_Y_hat_enhanced, to obtain a cross-channel filtered reconstructed chroma block. For example, after the upsampled reconstructed chroma block is obtained, cross-channel filtering is performed on the upsampled reconstructed chroma block, to obtain a reconstructed chroma block after first enhancement (i.e., a reconstructed chroma block after cross-channel filtering), and a cross-channel filtering process is guided by the target reconstructed luma block x_Y_hat_enhanced. For example, after wavelet transform is performed on the upsampled reconstructed chroma block and wavelet transform is performed on the target reconstructed luma block x_Y_hat_enhanced, channel-wise concatenation is performed, a feature obtained after channel-wise concatenation is input to the residual block network, so that the upsampled reconstructed chroma block is enhanced, and a cross-channel filtered reconstructed chroma block is obtained through inverse wavelet transform. For example, wavelet transform may be performed on the upsampled reconstructed chroma block and the target reconstructed luma block x_Y_hat_enhanced; the upsampled reconstructed chroma block obtained after the wavelet transform and the target reconstructed luma block obtained after the wavelet transform are concatenated in a channel dimension; and a feature obtained after the channel-wise concatenation is input to the residual block network, and inverse wavelet transform is performed on a feature output by the residual block network, to obtain the cross-channel filtered reconstructed chroma block. In this way, image reconstruction quality can be improved.

Then, nonlinear chroma filtering is performed based on the cross-channel filtered reconstructed chroma block and the target reconstructed luma block x_Y_hat_enhanced, to obtain a nonlinear chroma-filtered reconstructed chroma block, where the nonlinear chroma-filtered reconstructed chroma block is the target reconstructed chroma block x_UV_hat_enhanced. For example, after the cross-channel filtered reconstructed chroma block is obtained, nonlinear chroma filtering is performed on the cross-channel filtered reconstructed chroma block to obtain a reconstructed chroma block after second enhancement (the target reconstructed chroma block x_UV_hat_enhanced), and the nonlinear chroma filtering process is guided by the target reconstructed luma block x_Y_hat_enhanced. For example, downsampling is performed on the target reconstructed luma block x_Y_hat_enhanced, and a channel-wise concatenation is performed between the downsampled reconstructed luma block and a cross-channel filtered reconstructed chroma block, where the resolution of the downsampled reconstructed luma block is the same as the resolution of the cross-channel filtered reconstructed chroma block. The channel-wise concatenated feature is input to the nonlinear filter, and then the target reconstructed chroma block x_UV_hat_enhanced is output.

In the foregoing process, cross-channel filtering is performed first and then nonlinear chroma filtering is performed, and in order to obtain the target reconstructed chroma block x_UV_hat_enhanced, nonlinear chroma filtering may be performed first and then cross-channel filtering, or only cross-channel filtering (nonlinear chroma filtering is not performed) may be performed, or only nonlinear chroma filtering (cross-channel filtering is not performed) may be performed, which is not limited, provided that x_UV_hat_enhanced can be obtained through filtering.

Embodiment 15: For Embodiment 5 - Embodiment 14, if a feature-domain enhancement module is added before the synthesis transform net, the feature-domain enhancement module may perform feature-domain enhancement on the luma component, may perform feature-domain enhancement on the chroma component, or may perform feature-domain enhancement on both the luma component and the chroma component. To perform feature-domain enhancement on the luma component, feature-domain enhancement may be performed on the initial reconstruction feature y_hat corresponding to the luma component of the current image block based on the feature-domain enhancement parameter and the probability-distribution parameter, to obtain an enhanced reconstruction feature y_hat_enhanced corresponding to the luma component.

For Embodiment 5 to Embodiment 14, if a filtering enhancement module is added after the synthesis transform net, the filtering enhancement module may perform luma edge enhancement on the luma component, may perform chroma filtering enhancement on the chroma component, or may perform edge enhancement on both the luma component and the chroma component simultaneously. In the example, performing edge enhancement on both the luma component and the chroma component simultaneously is taken as an example. For example, in order to perform luma edge enhancement on the luma component, luma edge enhancement may be performed on the initial reconstructed luma block x_Y_hat corresponding to the luma component of the current image block based on the image-domain enhancement parameter and the probability-distribution parameter to obtain the target reconstructed luma block x_Y_hat_enhanced, and the luma edge enhancement process may refer to Embodiment 5 to Embodiment 14, which will not be repeated here. In addition, in order to perform chroma filtering enhancement on the chroma component, chroma filtering enhancement may be performed on the initial reconstructed chroma block x_UV_hat to obtain the target reconstructed chroma block x_UV_hat_enhanced. The chroma filtering enhancement process may refer to Examples 5 - Embodiment 14, and will not be repeated here.

When chroma filtering enhancement is performed on the initial reconstructed chroma block x_UV_hat, a target probability-distribution channel map of the chroma component may be further obtained based on the probability-distribution parameter of the luma component, e.g., an important probability-distribution channel map is selected from all probability-distribution channel maps of the probability-distribution parameter of the luma component, and upsampling is performed on the important probability-distribution channel map to obtain the target probability-distribution channel map of the chroma component, where a size of the target probability-distribution channel map is the same as the size of the initial reconstructed chroma block x_UV_hat of the chroma component. For example, the nearest neighbor upsampling method is used to upsample the important probability-distribution channel map to obtain the target probability-distribution channel map of the chroma component. For the nearest neighbor upsampling method, a pixel is selected on the original low-resolution image (i.e., the important probability-distribution channel map) as the center point of the corresponding region on the target high-resolution image (i.e., the target probability-distribution channel map). A value of the pixel closest to the selected pixel in the original low-resolution image is used as the value of the corresponding pixel in the target high-resolution image. The above process is repeated until all pixels of the target high-resolution image are assigned values.

After the target probability-distribution channel map of the chroma component is obtained, for each of the probability distribution values in the target probability-distribution channel map, the image-enhancement segment intensity value corresponding to the probability distribution value is determined based on the image-enhancement threshold interval corresponding to the probability distribution value, and chroma filtering enhancement is performed on the initial reconstructed chroma block x_UV_hat corresponding to the chroma component based on the respective image-enhancement segment intensity values of each of the probability distribution values, to obtain the target reconstructed chroma block x_UV_hat_enhanced. For a chroma filtering enhancement process, see Embodiment 12, provided that a related operation is performed on the chroma component.

Embodiment 16: A decoding method is provided in this embodiment, and the decoding method may include the steps S31-S38 described below.

Step S31: A feature-domain enhancement parameter, an image-domain enhancement parameter, and an important channel identifier (i.e., an important channel number important_channel) are decoded from Bitstream#3 (also referred to as the third bitstream, and the third bitstream may also be referred to as a feature enhancement header information bitstream) corresponding to the current image block. The feature-domain enhancement parameter may include a plurality of edge enhancement segment intensity values (denoted as magl-1, magl-2, ..., magl-n), a plurality of edge enhancement segment thresholds (denoted as thrl-1, thrl-2, ..., thrl-n), a stretching parameter value $\rho$, and the image-domain enhancement parameter may include a plurality of image-enhancement segment intensity values (denoted as magy-1, magy-2, ..., magy-m), and a plurality of image-enhancement segment thresholds (denoted as thry-1, thry-2, ..., thry-m). The feature-domain enhancement parameter may further include the number n of edge enhancement segment intensity values, and the image-domain enhancement parameter may further include the number m of image enhancement segment intensity values.

Step S32: Input features of the feature-domain enhancement module are an initial reconstruction feature y_hat and a probability-distribution parameter sigma. The initial reconstruction feature y_hat may be a three-dimensional tensor with the size of $C_L x H_L x W_L$, $C_L$ represents the number of channels in a feature-domain, i.e., a Latent domain, $H_L$ is a feature height in the Latent domain, and $W_L$ is a feature width in the Latent domain. The probability-distribution parameter sigma may also be a three-dimensional tensor with the size of $C_L x H_L x W_L$. When a channel of the initial reconstruction feature y_hat is any value in $[1,2, ..., C_L]$, a shape corresponding to the channel, i.e., a two-dimensional tensor y_hat_ch whose size is $H_L x W_L$, is referred to as a feature channel map. When a channel of the probability-distribution parameter sigma is any value in $[1,2, ..., C_L]$, a two-dimensional tensor sigma_ch whose shape corresponds to the channel, i.e., size $H_L x W_L$, is referred to as a probability distribution channel map.

Step S33: The initial reconstruction feature y_hat has a total of $C_L$ feature channel maps, the probability-distribution parameter sigma has a total of $C_L$ probability-distribution channel maps, the $C_L$ probability-distribution channel maps are in a one-to-one correspondence with the $C_L$ feature channel maps, and the probability-distribution channel maps are represented as sigma_ch. Feature-adaptive edge enhancement is performed on the feature channel map in which the channel ch is the important channel identifier important_channel, and feature-adaptive stretching is performed on the feature channel map in which the channel ch is the non-important channel identifier.

Step S34: For the feature-adaptive edge enhancement process, the input data is an important feature channel map y_hat_ch, an important probability-distribution channel map sigma_ch, a plurality of edge enhancement segment intensity values (magl-1, magl-2, ..., magl-n), and a plurality of edge enhancement segment thresholds (thrl-1, thrl-2, ..., thrl-n), based on the above input data, feature-adaptive edge enhancement may be performed on the important feature channel map y_hat_ch to obtain a reconstruction feature map after feature-adaptive edge enhancement, and the reconstruction feature map is referred to as the first reconstruction feature y_hat _sharp, and the feature-adaptive edge enhancement process refers to Embodiment 10, which will not be repeated here.

Step S35: For the feature-adaptive stretching process, the input data is the non-important feature channel maps (the remaining $C_L$ - 1 non-important feature channel maps except the important feature channel maps), the non-important probability-distribution channel maps (the remaining $C_L$ - 1 non-important probability-distribution channel maps except the important probability-distribution channel maps), and the stretching parameter value $\rho$, based on the above input data, feature-adaptive stretching may be performed on each non-important feature channel map to obtain a reconstruction feature map after the feature-adaptive stretching, and the reconstruction feature map is referred to as the second reconstruction feature y_hat_scale, and the feature-adaptive stretching process refers to Embodiment 11, which will not be repeated here. A size of an non-important feature channel map on which feature-adaptive stretching is performed is ($C_L$ - 1)x$H_L$x$W_L$, a size of a probability-distribution parameter sigma corresponding to the non-important feature channel map is also ($C_L$ - 1)x$H_L$x$W_L$, and each element in the three-dimensional tensor may be subjected to the following adaptive stretching algorithm to obtain a stretched second reconstruction feature: y_hat_scale = y_hat + $\rho$ * clip3(sigma * y_hat, -0.5,0.5) , clip3 is a limit operation, and the second reconstruction feature after the feature-adaptive stretching algorithm is y_hat_scale.

Step S36: The second reconstruction feature y_hat_scale corresponds to non-important channel enhancement of the initial reconstruction feature y_hat, the first reconstruction feature y_hat_sharp corresponds to important channel enhancement of the initial reconstruction feature y_hat, and after the first reconstruction feature y_hat_sharp and the second reconstruction feature y_hat_scale are merged, the enhanced reconstruction feature y_hat_enhanced after image enhancement is thus generated.

Step S37: The enhanced reconstruction feature y_hat_enhanced after image enhancement is input to the synthesis transform net to obtain an initial reconstructed image block x_hat, where the initial reconstructed image block x_hat is a two-dimensional tensor with a size of H $\times$ W, upsampling an important probability distribution channel map sigma_channel of a probability-distribution parameter sigma to a size the same as the initial reconstructed image block x_hat, and recording the upsampled probability distribution channel map as a target probability distribution channel map sigma_channel_upscale.

Step S38: For a filtering enhancement process, input data of the filtering enhancement module is an initial reconstructed image block x_hat, a target probability-distribution channel map sigma_channel_upscale, a plurality of image enhancement segmentation intensity values (magy-1, magy-2, ..., magy-m), and a plurality of image enhancement segmentation thresholds (thry-1, thry-2, ..., thry-m), and based on the foregoing input data, the filtering enhancement module may perform filtering enhancement on the initial reconstructed image block x_hat to obtain a target reconstructed image block x_hat_enhanced corresponding to the current image block x. The filtering enhancement process may refer to Embodiment 12 - Embodiment 14, and will not be Embodiment described again here.

Embodiment 17: An encoding method is proposed in this embodiment, and the encoding method may include the steps S41-S45 described below.

Step S41: An important channel identifier (also referred to as an important channel number important_channel) corresponding to the important feature channel map is determined based on the $C_L$ feature channel maps y_hat and the $C_L$ probability-distribution channel maps sigma.

For example, the current y_hat_channel and sigma_channel are obtained by slicing y_hat and sigma along the channel dimension, bits_per_ch of each feature channel map is calculated through the two tensors, referring to the following expression, the above process is repeated $C_L$ times to obtain bits_per_ch of each feature channel map, and the channel sequence number corresponding to the largest bits_per_ch is selected as the important channel identifier.

$$\text{bits\_per\_ch} = \sum_{1 \le j \le HL} \sum_{1 \le i \le WL} -\log2(\Phi(\frac{\text{y\_hat\_ch(i, j)} + 0.5}{\text{sigma\_ch(i, j)}}) - \Phi(\frac{\text{y\_hat\_ch(i, j)} - 0.5}{\text{sigma\_ch(i, j)}}))$$

In the foregoing expression, bits_per_ch may be used to represent the number of consumed bits corresponding to a feature channel map ch, y_hat_ch(i,j) may be used to represent a feature value of a feature point (i, j) in a feature channel map ch, sigma_ch(i, j) may be used to represent a probability distribution value of a feature point (i, j) in a probability-distribution channel map ch, and $\Phi(.)$ may be a standard normal distribution cumulative function.

Step S42: A stretching parameter value $\rho$ corresponding to the feature-adaptive stretching process is determined. For example, the number N1 of candidate stretching parameter values $\rho$ are selected to obtain the enhanced reconstructed feature and the target reconstructed image block x_hat_enhanced corresponding to each candidate stretching parameter value $\rho$. The distortion metric value between the target reconstructed image block x_hat_enhanced and the current image block x is calculated, and the candidate stretching parameter value $\rho$ corresponding to the minimum distortion metric value is selected as the optimal stretching parameter value $\rho$ for the feature-adaptive stretching process.

Step S43: A feature-domain enhancement parameter corresponding to the feature-adaptive edge enhancement process is determined, where the feature-domain enhancement parameter includes a plurality of edge enhancement segment intensity values (magl-1, magl-2, ..., magl-n) and a plurality of edge enhancement segment thresholds (thrl-1, thrl-2, ..., thrl-n). For example, the number N2 of candidate feature-domain enhancement parameters are selected to obtain the enhanced reconstruction feature and the target reconstructed image block x_hat_enhanced corresponding to each candidate feature-domain enhancement parameter, the distortion metric value between a target reconstructed image block x_hat_enhanced and the current image block x is calculated by using the distortion metric, and the candidate feature-domain enhancement parameter corresponding to the smallest distortion metric value is selected as the optimal feature-domain enhancement parameter corresponding to the feature-adaptive edge enhancement process.

Step S44: An image-domain enhancement parameter corresponding to an image-domain enhancement process is determined, where the image-domain enhancement parameter may include a plurality of image enhancement segmentation intensity values (magy-1, majy-2, ..., majy-m) and a plurality of image enhancement segmentation thresholds (thry-1, thry-2, ..., thry-m). For example, the number N3 of candidate image-domain enhancement parameters are selected to obtain the enhanced reconstruction feature and the target reconstructed image block x_hat_enhanced corresponding to each candidate image-domain enhancement parameter, the distortion metric is used to calculate the distortion metric value of a target reconstructed image block x_hat_enhanced and the current image block x, and the candidate image-domain enhancement parameter corresponding to the smallest distortion metric value is selected as the optimal image-domain enhancement parameter corresponding to the image-domain enhancement process.

Step S45: The important channel identifier corresponding to the important feature channel map is encoded, the optimal stretching parameter value $\rho$, the optimal feature-domain enhancement parameter, and the optimal image-domain enhancement parameter into a header information bitstream (the third bitstream Bitstreams#3 corresponding to the current image block). It should be noted that the feature-domain enhancement module and the image-domain enhancement module do not change Bitstreams#1 and Bitstreams#2, but the enhancement module is used when the encoder and the decoder reconstruct the image, so the reconstructed image is consistent between the encoder and the decoder.

Embodiment 18: An image-adaptive edge enhancement method (i.e., a process in which a filtering enhancement module performs filtering enhancement on an initial reconstructed image block x_hat to obtain a target reconstructed image block x_hat_enhanced) may be a non-edge-enhancement mask edge enhancement algorithm, i.e., an unsharp masking edge enhancement(USM) algorithm, and the process includes the steps S51-S54 described below.

Step S51: A two-dimensional convolution operation is performed on an original reconstructed image with a Gaussian blur convolution kernel to obtain a Gaussian blur image.

Step S52: The Gaussian blur image is subtracted from the original reconstructed image to obtain a high-frequency detail image.

Step S53: The high-frequency detail image is multiplied by an edge enhancement coefficient (i.e., the image-enhancement segment intensity value corresponding to the probability distribution value corresponding to the feature value), and added to the original reconstructed image, to obtain a final edge enhanced image.

Step S54: The edge enhanced image is limited to the value range of the image.

For example, the original reconstructed image is the initial reconstructed image block x_hat, and after the edge enhancement image is limited to the value range of the image, the target reconstructed image block x_hat_enhanced may be obtained.

Embodiment 19: A feature-adaptive edge enhancement method (i.e., a process in which a feature-domain enhancement module performs feature-adaptive edge enhancement on the important feature channel map based on a feature-domain enhancement parameter and an important probability-distribution channel map to obtain the first reconstruction feature) may be a non-edge-enhancement mask edge enhancement algorithm, i.e., a USM edge enhancement algorithm, and the process includes the steps S61-S68 described below.

Step S61: The mean value is subtracted from the important channel feature map y_hat_channel and the result is divided by the variance to obtain a normalized feature map.

Step S62: The normalized feature map is multiplied by 0.1 and the result is added to 0.5, and the feature value is limited between 0 and 1.

Step S63: A two-dimensional convolution operation is performed on the normalized feature map with the Gaussian blur convolution kernel to obtain a Gaussian blur image.

Step S64: The Gaussian blur image is subtracted from the original reconstructed image to obtain a high-frequency detail image.

Step S65, the high-frequency detail image is multiplied by an edge enhancement coefficient (i.e., an edge enhancement segment intensity value corresponding to the probability distribution value corresponding to the feature value), and added to the normalized feature map to obtain an edge-enhanced feature map.

Step S66: The feature value of the edge-enhanced feature map is limited to be between 0 and 1.

Step S67: The edge-enhanced feature map is subtracted by 0.5 and the result is divided by 10 to obtain a normalized edge-enhanced feature map.

Step S68, The normalized edge-enhanced feature map is multiplied by the variance and the result is added to the mean value to obtain an edge-enhanced feature map y_hat_shap of the important channel feature corresponding to the important channel feature map y_hat_channel, i.e., the first reconstruction feature.

For example, the original reconstructed image is the important feature channel map y_hat_channel, and for this process, see Embodiment 10.

Embodiment 20: In a decoding process, adaptive upsampling is performed on an initial reconstructed chroma block x_UV_hat, and a chroma reconstructed image becomes a required resolution. The process is guided by the initial reconstructed luma block x_Y_hat. The chroma reconstructed image after the adaptive upsampling is subjected to cross-channel filtering to obtain the reconstructed chroma image after the first enhancement, and the process is guided by the initial reconstructed luma block x_Y_hat. The reconstructed chroma image after the first enhancement is subjected to nonlinear chroma filtering to obtain the second chroma image enhancement and output a final enhanced chroma image x_UV_hat_enhanced. In addition, luma edge enhancement is performed on the initial reconstructed luma block x_Y_hat to output a target reconstructed luma block x_Y_hat_enhanced.

For the enhancement process of cross-channel filtering, the reconstructed chroma image and the initial reconstructed luma block after the wavelet transform are concatenated in a channel dimension, and then after passing through the residual block network, the chroma reconstructed image is enhanced, and finally a new reconstructed chroma image is obtained through inverse wavelet transform. And/or, for the non-linear chroma filtering enhancement process, the initial reconstructed luma block x_Y_hat is downsampled to the same resolution as the reconstructed chroma image, concatenated along the channel dimension, and then processed through a non-linear filter to obtain the target enhanced chroma image x_UV_hat_enhanced.

Embodiment 21: In a decoding process, the filtering enhancement submodule may decode an important channel identifier from a bitstream.

Embodiment 22: In the decoding process, for the Gaussian blur convolution kernel involved in each embodiment, the denominator of each weight in the Gaussian blur convolution kernel is designed to be a power of 2, as an available weight design is as follows:

$$kernel = \begin{bmatrix} \dfrac{5}{64} & \dfrac{5}{64} & \dfrac{5}{64} \\ \dfrac{5}{64} & \dfrac{24}{64} & \dfrac{5}{64} \\ \dfrac{5}{64} & \dfrac{5}{64} & \dfrac{5}{64} \end{bmatrix}$$

Embodiment 23: In an encoding process, an important channel identifier may be determined according to a feature variance scale_hat, and a method is as follows:

LinearToLog is a mapping table, and the feature variance scale_hat may be mapped to the log-domain feature variance logithmic_scale, e.g., logarithmic_scale=LinearToLog (scale_hat).

The logarithmic domain feature variance logarithmic_scale_channel corresponding to a certain feature channel is obtained by slicing along the channel dimension.

A logarithmic variance sum sum_per_channel corresponding to each feature channel is calculated based on the logarithmic_scale_channel:

$$\mathrm{sum\_per\_channel} = \sum_{1 \le j \le HL} \sum_{1 \le i \le WL} \mathrm{logarithmic\_scale\_channe[i, j]}$$

The foregoing process is repeated a total of $C_L$ times, where $C_L$ is the number of channels of logarithmic_scale, so as to obtain the sum of logarithmic variances sum_per_channel corresponding to each feature channel, and then the channel number corresponding to the maximum sum_per_channel is selected as the important channel identifier important_channel, which is also referred to as the important channel number.

It can be learned from the foregoing technical solutions that, in the embodiments of the present disclosure, an end-to-end video image compression method is provided, to encode and decode a video image based on a neural network, and improve encoding efficiency and decoding efficiency by combining an image-domain enhancement parameter and a probability-distribution parameter. With reference to a network structure design and a header information bitstream (e.g., the third bitstream), the neural network effectively ensures quality of a reconstructed image block while maintaining low complexity, improves encoding performance and decoding performance, and reduces complexity. The image quality enhancement is performed on the feature by using the image-domain enhancement parameter and the probability-distribution parameter, the encoder does not directly change the feature information, but encodes the image-domain enhancement parameter into the header information bitstream, and the decoder enhances the reconstructed image block by using the image-domain enhancement parameter, thereby improving the encoding and decoding performance and improving the quality of the reconstructed image. Considering channel-specificity, for adaptive scaling of probability distribution parameters with finer granularity, edge enhancement as an enhancement technique that significantly improves VMAF (Video Multi-Method Assessment Fusion) and other metrics may be introduced. By utilizing the characteristics of the bottleneck layer tensor in the end-to-end image encoding framework, the channel importance is determined according to the bitrate consumed by each channel in the feature domain, and different methods of feature-domain enhancement are applied separately by utilizing the probability distribution parameters of important channels in the feature-domain to adaptively achieve edge enhancement, thus improving the quality of encoded-reconstructed images and enhancing subjective image quality assessment metrics.

For example, the above embodiments may be implemented separately or in combination, each of Embodiment 1 - Embodiment 23 may be implemented separately, and at least two of Embodiment 1 to Embodiment 23 may be implemented in combination.

For example, in the foregoing embodiments, content of the encoder may also be applied to the decoder, i.e., the decoder may perform processing in the same manner, and content of the decoder may also be applied to the encoder, i.e., the encoder may perform processing in the same manner.

Based on the same application concept as the foregoing method, an embodiment of the present disclosure further provides a decoding apparatus, where the apparatus is applied to a decoder, and the apparatus includes: one or more memories, configured to store video data; and a decoder, configured to implement the decoding method in the above Embodiment 1 - Embodiment 23, i.e., a processing procedure of the decoder.

Based on the same application concept as the foregoing method, an embodiment of the present disclosure further provides an encoding apparatus, where the apparatus is applied to an encoder, and the apparatus includes: one or more memories, configured to store video data; and an encoder, configured to implement the encoding method in the above Embodiment 1 - Embodiment 23, i.e., a processing procedure of the encoder.

Based on the same application concept as the foregoing method, an embodiment of the present disclosure provides a decoder device (which may also be referred to as a video decoder), and for a schematic diagram of a hardware architecture of the device from a hardware level, see FIG. 7A. The decoder device includes a processor 711 and a machine-readable storage medium 712, where the machine-readable storage medium 712 stores machine-executable instructions that can be executed by the processor 711; and the processor 711 is configured to execute the machine-executable instructions to implement the decoding method in the above Embodiment 1 - Embodiment 23 in the present disclosure.

For example, in a possible implementation, when executing the machine-executable instructions, the processor 711 is configured to: decode a bitstream corresponding to a current image block, to obtain a coefficient hyperparameter feature corresponding to the current image block; determine a probability-distribution parameter based on the coefficient hyperparameter feature, and decode a bitstream corresponding to the current image block based on the probability-distribution parameter, to obtain an initial reconstruction feature corresponding to the current image block; determine an initial reconstructed image block corresponding to the current image block based on the initial reconstruction feature, where the initial reconstructed image block includes an initial reconstructed luma block and an initial reconstructed chroma block; and perform luma edge enhancement on the initial reconstructed luma block to obtain a target reconstructed luma block.

Based on the same application concept as the foregoing method, an embodiment of the present disclosure provides an encoder device (which may also be referred to as a video decoder), and for a schematic diagram of a hardware architecture of the device from a hardware level, see FIG. 7B. The encoder device includes a processor 721 and a machine-readable storage medium 722, where the machine-readable storage medium 722 stores machine-executable instructions that can be executed by the processor 721; and the processor 721 is configured to execute the machine-executable instructions to implement the encoding method in the above Embodiment 1 - Embodiment 23 in the present disclosure.

For example, in a possible implementation, when executing the machine-executable instructions, the processor 721 is configured to: encode a coefficient hyperparameter feature corresponding to a current image block; determine a probability-distribution parameter based on the coefficient hyperparameter feature, and encode an initial image feature corresponding to the current image block based on the probability-distribution parameter; determine an initial reconstructed image block corresponding to the current image block based on the initial reconstruction feature corresponding to the initial image feature, where the initial reconstructed image block includes an initial reconstructed luma block and an initial reconstructed chroma block; for each candidate image-domain enhancement parameter, perform luma edge enhancement on the initial reconstructed luma block based on the candidate image-domain enhancement parameter and the probability-distribution parameter, to obtain a target reconstructed luma block; and determine a cost value corresponding to the candidate image-domain enhancement parameter based on the target reconstructed luma block; and select an image-domain enhancement parameter corresponding to the current image block from all the candidate image-domain enhancement parameters based on the cost value corresponding to each of the candidate image-domain enhancement parameters, and encoding the image-domain enhancement parameter.

Based on the same application concept as the foregoing method, an embodiment of the present disclosure provides an electronic device. The electronic device includes: one or more processors and one or more machine-readable storage medium, where the one or more machine-readable storage medium store machine-executable instructions that can be executed by the one or more processors; and the one or more processors are configured to: execute the machine-executable instructions to implement the image decoding method or the image encoding method in the above Embodiment 1 - Embodiment 23 in the present disclosure.

Based on the same application concept as the foregoing method, an embodiment of the present disclosure further provides a machine-readable storage medium, where the machine-readable storage medium stores a plurality of computer instructions, and when the computer instructions are executed by one or more processors, the method disclosed in the above embodiments of the present disclosure, e.g., the decoding method or the encoding method in the foregoing embodiments, can be implemented.

Based on the same application concept as the foregoing method, an embodiment of the present disclosure further provides a computer application program, when the computer application program is executed by one or more processors, the decoding method or the encoding method disclosed in the above embodiments of the present disclosure can be implemented.

Based on the same application concept as the foregoing method, an embodiment of the present disclosure further provides a computer program product, including computer program instructions, when executed by one or more processors, the computer program instructions can implement the decoding method or the encoding method disclosed in the above embodiments of the present disclosure

Based on the same application concept as the foregoing method, an embodiment of the present disclosure further provides a decoding apparatus, which may be applied to a decoder (also referred to as a video decoder), and the decoding apparatus includes: a decoding module, configured to: decode a bitstream corresponding to a current image block, to obtain a coefficient hyperparameter feature corresponding to the current image block; and determine a probability-distribution parameter based on the coefficient hyperparameter feature, and decode a bitstream corresponding to the current image block based on the probability-distribution parameter, to obtain an initial reconstruction feature corresponding to the current image block; a determination module, configured to: determine an initial reconstructed image block corresponding to the current image block based on the initial reconstruction feature, where the initial reconstructed image block includes an initial reconstructed luma block and an initial reconstructed chroma block; and an enhancement module, configured to: perform luma edge enhancement on the initial reconstructed luma block to obtain a target reconstructed luma block.

For example, the enhancement module is further configured to: perform chroma filtering enhancement on the initial reconstructed chroma block to obtain a target reconstructed chroma block; and the decoding apparatus further includes a generation module, configured to: generate a target reconstructed image block based on the target reconstructed luma block and the target reconstructed chroma block.

For example, when performing luma edge enhancement on the initial reconstructed luma image block, to obtain the target reconstructed luma image block, the enhancement module is specifically configured to: decode a bitstream corresponding to the current image block to obtain an image-domain enhancement parameter corresponding to the current image block; and perform luma edge enhancement on the initial reconstructed luma block based on the image-domain enhancement parameter and the probability-distribution parameter, to obtain the target reconstructed luma block corresponding to the current image block.

For example, the image-domain enhancement parameter includes a plurality of image-enhancement segment intensity values and a plurality of image-enhancement segment thresholds, the plurality of image-enhancement segment thresholds form a plurality of image-enhancement threshold intervals, and the plurality of image-enhancement threshold intervals are in a one-to-one correspondence with the plurality of image-enhancement segment intensity values; and when performing luma edge enhancement on the initial reconstructed luma block based on the image-domain enhancement parameter and the probability-distribution parameter, to obtain the target reconstructed luma block corresponding to the current image block, the enhancement module is specifically configured to: obtain a target probability-distribution channel map based on the probability-distribution parameter; if the target probability-distribution channel map includes a plurality of probability distribution values, for each of the probability distribution values, determine, based on an image-enhancement threshold interval corresponding to the probability distribution value, an image-enhancement segment intensity value corresponding to the probability distribution value; and perform luma edge enhancement on the initial reconstructed luma block based on the respective image-enhancement segment intensity values of each of the probability distribution values, to obtain the target reconstructed luma block.

For example, when performing luma edge enhancement on the initial reconstructed luma image block to obtain the target reconstructed luma image block, the enhancement module is specifically configured to: decode a bitstream corresponding to the current image block to obtain an important channel identifier corresponding to the current image block; if the probability-distribution parameter includes a plurality of probability-distribution channel maps, select a probability-distribution channel map corresponding to the important channel identifier from the plurality of probability-distribution channel maps included in the probability-distribution parameter as an important probability-distribution channel map; upsample the important probability-distribution channel map to obtain the target probability-distribution channel map; and perform luma edge enhancement on the initial reconstructed luma image block based on the target probability-distribution channel map to obtain the target reconstructed luma image block corresponding to the current image block.

For example, when performing luma edge enhancement on the initial reconstructed luma image block based on the respective image-enhancement segment intensity values of each of the probability distribution values, to obtain the target reconstructed luma image block corresponding to the current image block, the enhancement module is specifically configured to: generate a high-frequency detail image based on the initial reconstructed luma image block; for each feature value in the high-frequency detail image, perform luma edge enhancement on the feature value based on the image-enhancement segment intensity value corresponding to the probability distribution value corresponding to the feature value, to obtain an enhanced image feature value; and determine the target reconstructed luma image block based on the respective enhanced image feature values of each feature value.

For example, when generating the high-frequency detail image based on the initial reconstructed luma block, the enhancement module is specifically configured to: perform a convolution operation on the initial reconstructed luma block with a Gaussian blur convolution kernel to obtain a Gaussian blur image; and subtract the Gaussian blur image from the initial reconstructed luma block to obtain the high-frequency detail image; where for each value in the Gaussian blur convolution kernel, a denominator of the value is a power of 2.

For example, when performing chroma filtering enhancement on the initial reconstructed chroma block to obtain the target reconstructed chroma block, the enhancement module is specifically configured to: perform adaptive upsampling based on the initial reconstructed chroma block and the initial reconstructed luma block to obtain an upsampled reconstructed chroma block, where resolution of the upsampled reconstructed chroma block is the same as resolution of the initial reconstructed luma block; and perform a filtering operation on the upsampled reconstructed chroma block to obtain the target reconstructed chroma block, where the filtering operation includes cross-channel filtering and/or nonlinear chroma filtering.

For example, when performing the filtering operation on the upsampled reconstructed chroma block to obtain the target reconstructed chroma block, the enhancement module is specifically configured to: perform cross-channel filtering on the upsampled reconstructed chroma block based on the initial reconstructed luma block, to obtain the target reconstructed chroma block; or perform nonlinear chroma filtering on the upsampled reconstructed chroma block based on the initial reconstructed luma block, to obtain the target reconstructed chroma block; or perform cross-channel filtering on the upsampled reconstructed chroma block based on the initial reconstructed luma block to obtain a cross-channel filtered reconstructed chroma block, and perform nonlinear chroma filtering on the cross-channel filtered reconstructed chroma block based on the initial reconstructed luma block, to obtain the target reconstructed chroma block; or perform nonlinear chroma filtering on the upsampled reconstructed chroma block based on the initial reconstructed luma block to obtain a nonlinear chroma-filtered reconstructed chroma block, and perform cross-channel filtering on the nonlinear chroma-filtered reconstructed chroma block based on the initial reconstructed luma block, to obtain the target reconstructed chroma block.

For example, when performing chroma filtering enhancement on the initial reconstructed chroma block to obtain the target reconstructed chroma block, the enhancement module is specifically configured to: perform adaptive upsampling based on the initial reconstructed chroma block and the target reconstructed luma block to obtain an upsampled reconstructed chroma block, where resolution of the upsampled reconstructed chroma block is the same as resolution of the target reconstructed luma block; and perform a filtering operation on the upsampled reconstructed chroma block to obtain the target reconstructed chroma block, where the filtering operation includes cross-channel filtering and/or nonlinear chroma filtering.

For example, when performing the filtering operation on the upsampled reconstructed chroma block to obtain the target reconstructed chroma block, the enhancement module is specifically configured to: perform cross-channel filtering on the upsampled reconstructed chroma block based on the target reconstructed luma block, to obtain the target reconstructed chroma block; or perform nonlinear chroma filtering on the upsampled reconstructed chroma block based on the target reconstructed luma block, to obtain the target reconstructed chroma block; or perform cross-channel filtering on the upsampled reconstructed chroma block based on the target reconstructed luma block to obtain a cross-channel filtered reconstructed chroma block, and perform nonlinear chroma filtering on the cross-channel filtered reconstructed chroma block based on the target reconstructed luma block, to obtain the target reconstructed chroma block; or perform nonlinear chroma filtering on the upsampled reconstructed chroma block based on the target reconstructed luma block to obtain a nonlinear chroma-filtered reconstructed chroma block, and perform cross-channel filtering on the nonlinear chroma-filtered reconstructed chroma block based on the target reconstructed luma block, to obtain the target reconstructed chroma block.

For example, when performing cross-channel filtering on the upsampled reconstructed chroma block based on the initial reconstructed luma block, to obtain the cross-channel filtered reconstructed chroma block, the enhancement module is specifically configured to: performing a wavelet transform on the upsampled reconstructed chroma block, and perform a wavelet transform on the initial reconstructed luma block; concatenate the wavelet-transformed upsampled reconstructed chroma block and the wavelet-transformed initial reconstructed luma block along a channel ; input a concatenated feature to a residual block network; and perform an inverse wavelet transform on a feature output by the residual block network, to obtain the cross-channel filtered reconstructed chroma block; and when performing cross-channel filtering on the upsampled reconstructed chroma block based on the target reconstructed luma block to obtain a cross-channel filtered reconstructed chroma block includes, the enhancement module is specifically configured to: perform a wavelet transform on the upsampled reconstructed chroma block, and performing a wavelet transform on the target reconstructed luma block; concatenate the wavelet-transformed upsampled reconstructed chroma block and the wavelet-transformed target reconstructed luma block along a channel dimension; and input a concatenated feature to a residual block network; and performing an inverse wavelet transform on a feature output by the residual block network, to obtain the cross-channel filtered reconstructed chroma block.

For example, when determining an initial reconstructed image block corresponding to the current image block based on the initial reconstruction feature, the determination module is specifically configured to: input the initial reconstruction feature to a synthesis transform net to obtain the initial reconstructed image block; or decode a bitstream corresponding to the current image block to obtain a feature-domain enhancement parameter corresponding to the current image block; perform feature-domain enhancement on the initial reconstruction feature based on the feature-domain enhancement parameter and the probability-distribution parameter to obtain an enhanced reconstruction feature; and input the enhanced reconstruction feature to a synthesis transform net to obtain the initial reconstructed image block.

For example, the decoding module is further configured to: decode a bitstream corresponding to the current image block to obtain an important channel identifier corresponding to the current image block, where the initial reconstruction feature includes C feature channel maps, the probability-distribution parameter includes C probability-distribution channel maps, the C probability-distribution channel maps are in a one-to-one correspondence with the C feature channel maps, C is a positive integer, a feature channel map corresponding to the important channel identifier is used as an important feature channel map, remaining feature channel maps in the C feature channel maps are used as non-important feature channel maps, a probability-distribution channel map corresponding to the important feature channel map is used as an important probability-distribution channel map, and remaining probability-distribution channel maps in the C probability-distribution channel maps are used as non-important probability-distribution channel maps; when performing feature-domain enhancement on the initial reconstruction feature based on the feature-domain enhancement parameter and the probability-distribution parameter to obtain an enhanced reconstruction feature, determination module is specifically configured to: perform feature-adaptive edge enhancement on the important feature channel map based on the feature-domain enhancement parameter and the important probability-distribution channel map to obtain a first reconstruction feature after the feature-adaptive edge enhancement; perform feature-adaptive stretching on the non-important feature channel map based on the feature-domain enhancement parameter and the non-important probability-distribution channel map to obtain a second reconstruction feature after the feature-adaptive stretching; and generating the enhanced reconstruction feature based on the first reconstruction feature and the second reconstruction feature.

Based on the same application concept as the foregoing method, an embodiment of the present disclosure further provides an encoding apparatus, applied to an encoder (also referred to as a video encoder), where the apparatus includes: an encoding module, configured to: encode a coefficient hyperparameter feature corresponding to a current image block; determine a probability-distribution parameter based on the coefficient hyperparameter feature; and encode an initial image feature corresponding to the current image block based on the probability-distribution parameter; a determination module, configured to: determine an initial reconstructed image block corresponding to the current image block based on the initial reconstruction feature corresponding to the initial image feature, where the initial reconstructed image block includes an initial reconstructed luma block and an initial reconstructed chroma block; an enhancement module, configured to: for each candidate image-domain enhancement parameter, perform luma edge enhancement on the initial reconstructed luma block based on the candidate image-domain enhancement parameter and the probability-distribution parameter, to obtain a target reconstructed luma block; where the determination module is further configured to: determine a cost value corresponding to the candidate image-domain enhancement parameter based on the target reconstructed luma block; and select an image-domain enhancement parameter corresponding to the current image block from all the candidate image-domain enhancement parameters based on the cost value corresponding to each of the candidate image-domain enhancement parameters; and the encoding module is further configured to encode the image-domain enhancement parameter.

A person skilled in the art should understand that the embodiments of the present disclosure may be provided as a method, a system, or a computer program product. The present disclosure may take the form of an entirely hardware embodiment, an entirely software embodiment, or an embodiment combining software and hardware aspects. Embodiments of the present disclosure may be in a form of a computer program product implemented on one or more computer-usable storage medium (including but not limited to a magnetic disk memory, a compact disc read-only memory (compact disc read-only memory, CD- ROM), an optical memory, etc.) that include computer-usable program code. The foregoing descriptions are merely embodiments of the present disclosure, and are not intended to limit the present disclosure.

For a person skilled in the art, the present disclosure may have various modifications and changes. Any modification, equivalent replacement, improvement, etc. made within the principle of the present disclosure shall fall within the scope of the claims of the present disclosure.

**Claims**

1. An image decoding method, comprising:

   decoding a bitstream corresponding to a current image block, to obtain a coefficient hyperparameter feature corresponding to the current image block;
   determining a probability-distribution parameter based on the coefficient hyperparameter feature, and decoding a bitstream corresponding to the current image block based on the probability-distribution parameter, to obtain an initial reconstruction feature corresponding to the current image block;
   determining an initial reconstructed image block corresponding to the current image block based on the initial reconstruction feature, wherein the initial reconstructed image block comprises an initial reconstructed luma block and an initial reconstructed chroma block; and
   performing luma edge enhancement on the initial reconstructed luma block to obtain a target reconstructed luma block.

2. The method according to claim 1, wherein after determining the initial reconstructed image block corresponding to the current image block based on the initial reconstruction feature, the method further comprises:

   performing chroma filtering enhancement on the initial reconstructed chroma block to obtain a target reconstructed chroma block; and
   generating a target reconstructed image block based on the target reconstructed luma block and the target reconstructed chroma block.

3. The method according to claim 1, wherein
   performing luma edge enhancement on the initial reconstructed luma block to obtain the target reconstructed luma block comprises:

   decoding a bitstream corresponding to the current image block to obtain an image-domain enhancement parameter corresponding to the current image block; and
   performing luma edge enhancement on the initial reconstructed luma block based on the image-domain enhancement parameter and the probability-distribution parameter, to obtain the target reconstructed luma block corresponding to the current image block.

4. The method according to claim 3, wherein the image-domain enhancement parameter comprises a plurality of image-enhancement segment intensity values and a plurality of image-enhancement segment thresholds, the plurality of image-enhancement segment thresholds form a plurality of image-enhancement threshold intervals, and the plurality of image-enhancement threshold intervals are in a one-to-one correspondence with the plurality of image-enhancement segment intensity values; and
   performing luma edge enhancement on the initial reconstructed luma block based on the image-domain enhancement parameter and the probability-distribution parameter, to obtain the target reconstructed luma block corresponding to the current image block comprises:

   acquiring a target probability-distribution channel map based on the probability-distribution parameter;
   upon determining that the target probability-distribution channel map comprises a plurality of probability distribution values, for each probability distribution value of the plurality of probability distribution values, determining an image-enhancement segment intensity value corresponding to the probability distribution value based on the image-enhancement threshold interval corresponding to the probability distribution value; and
   performing luma edge enhancement on the initial reconstructed luma block based on the image-enhancement segment intensity values corresponding to each of the plurality of the probability distribution values, to obtain the target reconstructed luma block corresponding to the current image block.

5. The method according to claim 4, wherein
acquiring the target probability-distribution channel map based on the probability-distribution parameter comprises:

decoding the bitstream corresponding to the current image block to obtain an important channel identifier corresponding to the current image block;
upon determining that the probability-distribution parameter comprises a plurality of probability-distribution channel maps, selecting a probability-distribution channel map corresponding to the important channel identifier from the plurality of probability-distribution channel maps comprised in the probability-distribution parameter as an important probability-distribution channel map; and
upsampling the important probability-distribution channel map to obtain the target probability-distribution channel map.

6. The method according to claim 4, wherein
performing luma edge enhancement on the initial reconstructed luma block based on the image-enhancement segment intensity values corresponding to each of the plurality of the probability-distribution values, to obtain the target reconstructed luma block corresponding to the current image block comprises:

generating a high-frequency detail image based on the initial reconstructed luma block;
for each feature value in the high-frequency detail image, performing luma edge enhancement on the feature value based on the image-enhancement segment intensity value corresponding to the probability-distribution value of the feature value, to obtain an enhanced image feature value; and
determining the target reconstructed luma block based on the respective enhanced image feature values of each of the feature values.

7. The method according to claim 6, wherein
generating the high-frequency detail image based on the initial reconstructed luma block comprises:

performing a convolution operation on the initial reconstructed luma block with a Gaussian blur convolution kernel to obtain a Gaussian blur image; and
subtracting the Gaussian blur image from the initial reconstructed luma block to obtain the high-frequency detail image;
wherein for each value in the Gaussian blur convolution kernel, a denominator of the value is a power of 2.

8. The method according to claim 7, wherein the Gaussian blur convolution kernel is an N*N convolution kernel, N is a positive integer, and upon determining that the Gaussian blur convolution kernel is a 3*3 convolution kernel, the Gaussian blur convolution kernel comprises:

$$\begin{bmatrix} \frac{A}{M} & \frac{A}{M} & \frac{A}{M} \\ \frac{A}{M} & \frac{B}{M} & \frac{A}{M} \\ \frac{A}{M} & \frac{A}{M} & \frac{A}{M} \end{bmatrix};$$

wherein A is a positive integer, B is a positive integer, and M is a power of 2.

9. The method according to claim 8, wherein the Gaussian blur convolution kernel *kernel* is:

$$kernel = \begin{bmatrix} \frac{5}{64} & \frac{5}{64} & \frac{5}{64} \\ \frac{5}{64} & \frac{24}{64} & \frac{5}{64} \\ \frac{5}{64} & \frac{5}{64} & \frac{5}{64} \end{bmatrix}.$$

10. The method according to claim 2, wherein

performing chroma filtering enhancement on the initial reconstructed chroma block to obtain the target reconstructed chroma block comprises:

performing adaptive upsampling based on the initial reconstructed chroma block and the initial reconstructed luma block to obtain an upsampled reconstructed chroma block, wherein resolution of the upsampled reconstructed chroma block is the same as resolution of the initial reconstructed luma block; and
performing a filtering operation on the upsampled reconstructed chroma block to obtain the target reconstructed chroma block, wherein the filtering operation comprises cross-channel filtering and/or nonlinear chroma filtering.

11. The method according to claim 10, wherein performing a filtering operation on the upsampled reconstructed chroma block to obtain the target reconstructed chroma block comprises:

performing cross-channel filtering on the upsampled reconstructed chroma block based on the initial reconstructed luma block, to obtain the target reconstructed chroma block; or
performing nonlinear chroma filtering on the upsampled reconstructed chroma block based on the initial reconstructed luma block, to obtain the target reconstructed chroma block; or
performing cross-channel filtering on the upsampled reconstructed chroma block based on the initial reconstructed luma block to obtain a cross-channel filtered reconstructed chroma block, and performing nonlinear chroma filtering on the cross-channel filtered reconstructed chroma block based on the initial reconstructed luma block, to obtain the target reconstructed chroma block; or
performing nonlinear chroma filtering on the upsampled reconstructed chroma block based on the initial reconstructed luma block to obtain a nonlinear chroma-filtered reconstructed chroma block, and performing cross-channel filtering on the nonlinear chroma-filtered reconstructed chroma block based on the initial reconstructed luma block, to obtain the target reconstructed chroma block.

12. The method according to claim 2, wherein
performing chroma filtering enhancement on the initial reconstructed chroma block to obtain the target reconstructed chroma block comprises:

performing adaptive upsampling based on the initial reconstructed chroma block and the target reconstructed luma block to obtain an upsampled reconstructed chroma block, wherein resolution of the upsampled reconstructed chroma block is the same as resolution of the target reconstructed luma block; and
performing a filtering operation on the upsampled reconstructed chroma block to obtain the target reconstructed chroma block, wherein the filtering operation comprises cross-channel filtering and/or nonlinear chroma filtering.

13. The method according to claim 12, wherein performing a filtering operation on the upsampled reconstructed chroma block to obtain the target reconstructed chroma block comprises:

performing cross-channel filtering on the upsampled reconstructed chroma block based on the target reconstructed luma block, to obtain the target reconstructed chroma block; or
performing nonlinear chroma filtering on the upsampled reconstructed chroma block based on the target reconstructed luma block, to obtain the target reconstructed chroma block; or
performing cross-channel filtering on the upsampled reconstructed chroma block based on the target reconstructed luma block to obtain a cross-channel filtered reconstructed chroma block, and performing nonlinear chroma filtering on the cross-channel filtered reconstructed chroma block based on the target reconstructed luma block, to obtain the target reconstructed chroma block; or
performing nonlinear chroma filtering on the upsampled reconstructed chroma block based on the target reconstructed luma block to obtain a nonlinear chroma-filtered reconstructed chroma block, and performing cross-channel filtering on the nonlinear chroma-filtered reconstructed chroma block based on the target reconstructed luma block, to obtain the target reconstructed chroma block.

14. The method according to claim 11 or 13, wherein

performing cross-channel filtering on the upsampled reconstructed chroma block based on the initial reconstructed luma block to obtain the cross-channel filtered reconstructed chroma block comprises:

performing a wavelet transform on the upsampled reconstructed chroma block, and performing a wavelet transform on the initial reconstructed luma block;

concatenating the wavelet-transformed upsampled reconstructed chroma block and the wavelet-transformed initial reconstructed luma block along a channel dimension; and
inputting a concatenated feature to a residual block network, and performing an inverse wavelet transform on a feature output by the residual block network, to obtain the cross-channel filtered reconstructed chroma block; and

performing cross-channel filtering on the upsampled reconstructed chroma block based on the target reconstructed luma block to obtain the cross-channel filtered reconstructed chroma block comprises:

performing a wavelet transform on the upsampled reconstructed chroma block, and performing a wavelet transform on the target reconstructed luma block;
concatenating the wavelet-transformed upsampled reconstructed chroma block and the wavelet-transformed target reconstructed luma block along a channel dimension; and
inputting a concatenated feature to a residual block network, and performing an inverse wavelet transform on a feature output by the residual block network, to obtain the cross-channel filtered reconstructed chroma block.

15. The method according to any one of claims 1 to 14, wherein
determining the initial reconstructed image block corresponding to the current image block based on the initial reconstruction feature comprises:

inputting the initial reconstruction feature to a synthesis transform net to obtain the initial reconstructed image block; or
decoding the bitstream corresponding to the current image block to obtain a feature-domain enhancement parameter corresponding to the current image block; performing feature-domain enhancement on the initial reconstruction feature based on the feature-domain enhancement parameter and the probability-distribution parameter to obtain an enhanced reconstruction feature; and inputting the enhanced reconstruction feature to a synthesis transform net to obtain the initial reconstructed image block.

16. The method according to claim 15, further comprising:

decoding the bitstream corresponding to the current image block to obtain an important channel identifier corresponding to the current image block, wherein the initial reconstruction feature comprises C feature channel maps, the probability-distribution parameter comprises C probability-distribution channel maps, the C probability-distribution channel maps are in a one-to-one correspondence with the C feature channel maps, C is a positive integer, a feature channel map corresponding to the important channel identifier is used as an important feature channel map, remaining feature channel maps in the C feature channel maps are used as non-important feature channel maps, a probability-distribution channel map corresponding to the important feature channel map is used as an important probability-distribution channel map, and remaining probability-distribution channel maps in the C probability-distribution channel maps are used as non-important probability-distribution channel maps; and
performing feature-domain enhancement on the initial reconstruction feature based on the feature-domain enhancement parameter and the probability-distribution parameter to obtain the enhanced reconstruction feature comprises:

performing feature-adaptive edge enhancement on the important feature channel map based on the feature-domain enhancement parameter and the important probability-distribution channel map to obtain a first reconstruction feature after the feature-adaptive edge enhancement;
performing feature-adaptive stretching on the non-important feature channel map based on the feature-domain enhancement parameter and the non-important probability-distribution channel map to obtain a second reconstruction feature after the feature-adaptive stretching; and
generating the enhanced reconstruction feature based on the first reconstruction feature and the second reconstruction feature.

17. An image encoding method, comprising:

encoding a coefficient hyperparameter feature corresponding to a current image block;
determining a probability-distribution parameter based on the coefficient hyperparameter feature, and encoding an initial image feature corresponding to the current image block based on the probability-distribution parameter;

determining an initial reconstructed image block corresponding to the current image block based on the initial reconstruction feature corresponding to the initial image feature, wherein the initial reconstructed image block comprises an initial reconstructed luma block and an initial reconstructed chroma block;

for each candidate image-domain enhancement parameter, performing luma edge enhancement on the initial reconstructed luma block based on the candidate image-domain enhancement parameter and the probability-distribution parameter, to obtain a target reconstructed luma block; and determining a cost value corresponding to the candidate image-domain enhancement parameter based on the target reconstructed luma block; and

selecting an image-domain enhancement parameter corresponding to the current image block from all the candidate image-domain enhancement parameters based on the cost value corresponding to each of the candidate image-domain enhancement parameters, and encoding the image-domain enhancement parameter.

18. An image decoding apparatus, comprising:

a decoding module, configured to: decode a bitstream corresponding to a current image block, to obtain a coefficient hyperparameter feature corresponding to the current image block; and determine a probability-distribution parameter based on the coefficient hyperparameter feature, and decode a bitstream corresponding to the current image block based on the probability-distribution parameter, to obtain an initial reconstruction feature corresponding to the current image block;

a determination module, configured to: determine an initial reconstructed image block corresponding to the current image block based on the initial reconstruction feature, wherein the initial reconstructed image block comprises an initial reconstructed luma block and an initial reconstructed chroma block; and

an enhancement module, configured to: perform luma edge enhancement on the initial reconstructed luma block to obtain a target reconstructed luma block.

19. An image encoding apparatus, comprising:

an encoding module, configured to: encode a coefficient hyperparameter feature corresponding to a current image block; determine a probability-distribution parameter based on the coefficient hyperparameter feature; and encode an initial image feature corresponding to the current image block based on the probability-distribution parameter;

a determination module, configured to: determine an initial reconstructed image block corresponding to the current image block based on the initial reconstruction feature corresponding to the initial image feature, wherein the initial reconstructed image block comprises an initial reconstructed luma block and an initial reconstructed chroma block;

an enhancement module, configured to: for each candidate image-domain enhancement parameter, perform luma edge enhancement on the initial reconstructed luma block based on the candidate image-domain enhancement parameter and the probability-distribution parameter, to obtain a target reconstructed luma block; wherein

the determination module is further configured to: determine a cost value corresponding to the candidate image-domain enhancement parameter based on the target reconstructed luma block; and select an image-domain enhancement parameter corresponding to the current image block from all the candidate image-domain enhancement parameters based on the cost value corresponding to each of the candidate image-domain enhancement parameters; and

the encoding module is further configured to encode the image-domain enhancement parameter.

20. An image decoding device, comprising: one or more processors and one or more machine-readable storage medium, wherein the one or more machine-readable storage medium store machine-executable instructions that can be executed by the one or more processors; and

the one or more processors are configured to execute the machine-executable instructions to implement the method according to any one of claims 1 to 16.

21. An image encoding device, comprising: one or more processors and one or more machine-readable storage medium, wherein the one or more machine-readable storage medium store machine-executable instructions that can be executed by the one or more processors; and

the one or more processors are configured to execute the machine-executable instructions to implement the method according to claim 17.

22. A machine-readable storage medium, wherein the machine-readable storage medium stores a plurality of computer instructions, and when the computer instructions are executed by one or more processors, the method according to any one of claims 1 to 16 is implemented, or when the computer instructions are executed by one or more processors, the method according to claim 17 is implemented.

23. A computer program, configured to: when executed by one or more processors having one or more memories, implement the method according to any one of claims 1 to 16, or when executed by one or more processors having one or more memories, implement the method according to claim 17.

24. A computer program product, comprising one or more computer program instructions configured to: when executed by one or more processors having one or more memories, implement the method according to any one of claims 1 to 16, or when executed by one or more processors having one or more memories, implement the method according to claim 17.

WxH    C Channels

**FIG. 1**

Decode a bitstream corresponding to a current image block to obtain a coefficient hyperparameter feature corresponding to the current image block ⟋201

Determine a probability-distribution parameter based on the coefficient hyperparameter feature, and decode a bitstream corresponding to the current image block based on the probability-distribution parameter, to obtain an initial reconstruction feature corresponding to the current image block ⟋202

Determine an initial reconstructed image block corresponding to the current image block based on the initial reconstruction feature, where the initial reconstructed image block may include an initial reconstructed luma block and an initial reconstructed chroma block ⟋203

Perform luma edge enhancement on the initial reconstructed luma block to obtain a target reconstructed luma block ⟋204

**FIG. 2**

| Encode a coefficient hyperparameter feature corresponding to a current image block | 301 |

↓

| Determine a probability-distribution parameter based on the coefficient hyperparameter feature, and encode an initial image feature corresponding to the current image block based on the probability-distribution parameter | 302 |

↓

| Determine an initial reconstructed image block corresponding to the current image block based on the initial reconstruction feature corresponding to the initial image feature, where the initial reconstructed image block may include an initial reconstructed luma block and an initial reconstructed chroma block | 303 |

↓

| For each candidate image-domain enhancement parameter, perform luma edge enhancement on the initial reconstructed luma block based on the candidate image-domain enhancement parameter and the probability-distribution parameter, to obtain a target reconstructed luma block; and determine a cost value corresponding to the candidate image-domain enhancement parameter based on the target reconstructed luma block | 304 |

↓

| Select an image-domain enhancement parameter corresponding to the current image block from all the candidate image-domain enhancement parameters based on the cost value corresponding to each of the candidate image-domain enhancement parameters, and encode the image-domain enhancement parameter | 305 |

**FIG. 3**

**FIG. 4**

**FIG. 5**

sigma

x_hat_enhanced ← **Synthesis Transform Net** ← y_hat_enhanced ← [ **Feature-adaptive Edge Enhancement** / **Feature-adaptive Stretching** ] ← y_hat

Feature-domain Enhancement Module

**FIG. 6A**

x_Y_hat_enhanced ← **Luma Edge Enhancement Module** (sigma) ← x_Y_hat ← **Synthesis Transform Net** ← y_hat_enhanced ← [ **Feature-adaptive Edge Enhancement** (sigma) / **Feature-adaptive Stretching** ] ← y_hat

Feature-domain Enhancement Module

x_Y_hat, x_Y_hat, x_Y_hat, x_UV_hat

**Nonlinear Chroma Filtering** ← **Cross-channel Filtering** ← **Adaptive Upsampling**

x_UV_hat_enhanced

Chroma Filtering Enhancement Module

**FIG. 6B**

sigma

x_Y_hat_enhanced ← **Luma Edge Enhancement Module** ← x_Y_hat ← **Synthesis Transform Net** ← y_hat

x_Y_hat, x_Y_hat, x_Y_hat, x_UV_hat

**Nonlinear Chroma Filtering** ← **Cross-channel Filtering** ← **Adaptive Upsampling**

x_UV_hat_enhanced

Chroma Filtering Enhancement Module

**FIG. 6C**

Upsampled Reconstructed Chroma Block → Wavelet Transform → Concatenating along channel dimension → Residual Block Network → Inverse Wavelet Transform → Cross-channel Filtered Reconstructed Chroma Block

Initial Reconstructed Luma Block → Wavelet Transform → Concatenating along channel dimension

**FIG. 6D**

Cross-channel Filtered Reconstructed Chroma Block → Concatenating along channel dimension → Nonlinear Filter → x_UV_hat_enhanced

Initial Reconstructed Luma Block → Downsampling → Concatenating along channel dimension

**FIG. 6E**

Processor — 711    Decoder Device

Machine-readable storage medium — 712

Decoding Instructions

**FIG. 7A**

Processor — 721    Encoder Device

Machine-readable storage medium — 722

Encoding Instructions

**FIG. 7B**

## INTERNATIONAL SEARCH REPORT

| International application No. |
|---|
| **PCT/CN2024/127467** |

| A. | CLASSIFICATION OF SUBJECT MATTER |
|---|---|

H04N19/176(2014.01)i

According to International Patent Classification (IPC) or to both national classification and IPC

| B. | FIELDS SEARCHED |
|---|---|

Minimum documentation searched (classification system followed by classification symbols)

IPC:H04N

Documentation searched other than minimum documentation to the extent that such documents are included in the fields searched

Electronic data base consulted during the international search (name of data base and, where practicable, search terms used)

VEN, USTXT, EPTXT, WOTXT, CNKI, CNABS, CNTXT: 编码, 解码, 图像块, 系数, 超参, 特征, 概率, 分布, 参数, 码流, 初始, 重建, 亮度, 色度, 边缘, 增强, 滤波, encoding, decoding, image blocks, coefficients, ultra-parameters, features, probabilities, distributions, parameters, bitstream, initial, reconstruction, luma, chroma, edge, enhancement, filtering

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | US 2022286696 A1 (SAMSUNG ELECTRONICS CO., LTD.) 08 September 2022 (2022-09-08) description, paragraphs 58-218, and figures 1-21 | 1, 2, 17-24 |
| Y | CN 116601947 A (GUANGDONG OPPO MOBILE COMMUNICATIONS CO., LTD.) 15 August 2023 (2023-08-15) description, paragraphs 47-196, and figures 1-10 | 1, 2, 17-24 |
| A | CN 110913220 A (HEFEI TUYA INFORMATION TECHNOLOGY CO., LTD.) 24 March 2020 (2020-03-24) entire document | 1-24 |
| A | US 2021067808 A1 (DISNEY ENTERPRISES, INC.) 04 March 2021 (2021-03-04) entire document | 1-24 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **25 December 2024** | **30 December 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/127467**

| Patent document cited in search report | | | Publication date (day/month/year) | Patent family member(s) | | Publication date (day/month/year) |
|---|---|---|---|---|---|---|
| US | 2022286696 | A1 | 08 September 2022 | None | | |
| CN | 116601947 | A | 15 August 2023 | None | | |
| CN | 110913220 | A | 24 March 2020 | None | | |
| US | 2021067808 | A1 | 04 March 2021 | US 11012718 | B2 | 18 May 2021 |

Form PCT/ISA/210 (patent family annex) (July 2022)